# FASCICULE DE BREVET EUROPEEN

(11) **EP 1 660 371 B1**
(45) Date de publication et mention de la délivrance du brevet: **06.08.2008**
(21) Numéro de dépôt: 04786352.7
(22) Date de dépôt: 25.08.2004
(51) Int. Cl.: B65B 3/02

(54) **PROCEDE ET INSTALLATION DE FORMAGE ET DE REMPLISSAGE DE BOUTEILLES EN MATIERE THERMOPLASTIQUE**
VERFAHREN UND ANLAGE ZUM FORMEN UND FÜLLEN VON THERMOPLASTISCHEN FLASCHEN
THERMOPLASTIC BOTTLE-FORMING AND -FILLING METHOD AND INSTALLATION

(30) Priorité: 29.08.2003 FR 0310278; 19.12.2003 FR 0315004
(43) Date de publication de la demande: 31.05.2006
(73) Titulaire: TECSOR, 13590 Meyreuil (FR)
(72) Inventeur: HERMIER, Frédéric, 13007 Marseille (FR); OUTREMAN, Jean-Tristan, F-83470 Saint Maximin La Sainte Baume (FR)
(74) Mandataire: Fantin, Laurent
(86) Numéro de dépôt international: PCT/FR2004/002188
(87) Numéro de publication internationale: WO 2005/023652

(56) Documents cités:
- EP-A- 0 694 477
- EP-A- 0 950 606
- US-A- 4 208 852
- US-A- 4 284 370
- US-A- 4 694 951
- US-B1- 6 451 243

## Description

La présente invention a pour objet un procédé et une installation de formage et due remplissage de bouteilles en matière thermoplastique.

Elle se rapporte d'une manière générale au conditionnement d'articles creux à usage de récipients, fabriqués par formage, à savoir le plus souvent par étirage-soufflage, à partir d'ébauches, ou « préformes », moulées par injection, notamment de bouteilles en matière thermoplastique telle que le polyéthylène téréphtalate (P.E.T.) destinées à contenir des liquides de nombreux types et en particulier des boissons telles que eaux minérales ou sodas.

A cet égard, par commodité de langage, on entendra ici par « bouteille » tout article creux à usage de récipient quelles qu'en soient la forme et les dimensions, et en particulier quelles que soient les proportions entre une zone de corps, destinée à recevoir un contenu, que ce contenu soit liquide, pâteux ou solide, et une zone de col, délimitant un orifice d'accès pour le remplissage, c'est-à-dire la mise en place du contenu à l'intérieur de la zone de corps, et le plus souvent pour le vidage, c'est-à-dire pour l'extraction du contenu de la zone de corps. Ainsi, à titre d'exemples non limitatifs, on entendra par « bouteilles » aussi bien des bouteilles au sens le plus fréquent du terme, c'est-à-dire des récipients dont la zone de col est sensiblement plus étroite que la zone de corps, que des bocaux ou pots, dont la zone de col est à peine plus étroite que la zone de corps.

Dans le domaine des articles creux, les polymères thermoplastiques ont connu un rapide développement au cours des années écoulées. Les techniques d'étirage-soufflage d'ébauches ou « préformes » permettent actuellement d'obtenir des bouteilles présentant un minimum de poids en même temps qu'un niveau élevé de propriétés mécaniques.

La réalisation des récipients de ce type nécessite deux opérations qui peuvent se dérouler en des endroits distincts. Tout d'abord une préforme, comportant la zone de col dans sa conformation définitive et une zone de corps de dimension réduite par rapport à celle de la zone de corps du récipient à fabriquer, est réalisée par injection, puis refroidie et stockée. La préforme est ensuite chauffée à nouveau puis sa zone de corps est amenée à sa forme définitive par étirage-soufflage dans un moule approprié.

Dans de nombreux cas, l'étirage-soufflage est effectué sur le même lieu que le remplissage et les autres opérations de conditionnement des bouteilles (bouchage, étiquetage, etc.). Actuellement, ces différentes interventions sont chacune réalisées par une machine particulière fabriquée par une entreprise spécialisée.

Afin d'obtenir un rendement compatible avec les cadences de production imposées dans ce domaine, ces machines sont souvent mises en ligne au moyen de systèmes de convoyage adaptés. Cependant, chaque entité, en raison de la diversité des origines et des fonctions, présente des caractéristiques propres entraînant en général des difficultés importantes de mise au point des installations. EP0950606 divulgue une chaîne de formage de bouteilles à partir d'une paraison, svivi d'un remplissage et d'un bouchage correspondant en préambule de la revendication 20, ainsi qu'un procédé de formage, remplissage et bouchage de bouteilles.

En effet, durant les différentes étapes, de la transformation de la préforme au conditionnement de la bouteille, les considérations suivantes doivent être prises en compte :
- Lors du réchauffage de la préforme, la zone de corps de celle-ci, située au-dessous de la zone de col, ne peut en aucun cas être touchée sous peine de créer lors de la phase d'étirage-soufflage des variations de distribution d'épaisseur sur la zone de corps de la bouteille. Dans cette première étape, la zone de col (extérieur et intérieur), avec une collerette annulaire qu'elle présente généralement en saillie vers l'extérieur, est la seule partie qui peut être touchée pour la manutention de la préforme et cela jusqu'à son introduction dans un moule d'étirage-soufflage.
- Lors de la phase d'étirage-soufflage, l'introduction d'une canne d'étirage et d'un air de soufflage se fait naturellement par l'orifice de la zone de col, celui-ci devant donc naturellement être dégagé pour permettre le plus grand passage possible de l'air de soufflage.
- La problématique est identique dans la phase de remplissage, celui-ci s'effectuant également par l'orifice de la zone de col.
- Quant à la phase de bouchage, il est évident que la zone de col doit être libérée pour permettre la pose du bouchon.
- Enfin l'étiquetage, s'il est incorporé à l'équipement, nécessite que la zone de pose de l'étiquette sur la bouteille soit libérée.

Ces différentes contraintes font que les. équipements actuels multiplient les transferts en changeant en plus de référence entre zone de col, fond de la zone de corps ou orifice de la préforme ou de la bouteille en fonction des différentes phases, ce qui aboutit à des installations d'un encombrement souvent très important, à une limitation des cadences et à une fiabilité réduite de l'ensemble.

Le procédé et l'installation selon la présente invention permettent de remédier à tous ces inconvénients.

A cet effet, le procédé selon l'invention, pour le soufflage et le remplissage de bouteilles en matière thermoplastique, comportant de façon connue en elle-même la succession des étapes consistant à :
**a)** choisir ou réaliser une préforme de bouteille en matière thermoplastique comportant une zone de col de conformation définitive, présentant un axe déterminé et, autour dudit axe, une périphérie extérieure et une périphérie intérieure délimitant un orifice par un bord, et une zone de corps de conformation provisoire, creuse, située à l'opposé dudit orifice par rapport à la zone de col en référence audit axe, et communiquant avec l'extérieur par l'intermédiaire dudit orifice,
**b)** placer la préforme à des postes successifs de travail de celle-ci, à savoir au moins un poste de chauffage de sa zone de corps, pour rendre celle-ci plastique, et un poste de formage de sa zone de corps, pour donner à celle-ci une conformation définitive et former ainsi une bouteille, comportant la zone de col de conformation définitive et la zone de corps alors également de conformation définitive,
**c)** placer ensuite la bouteille à des postes successifs de travail de celle-ci, à savoir au moins un poste de remplissage par l'intermédiaire dudit orifice, pour y introduire une dose déterminée d'un contenu, et un poste de bouchage dudit orifice, pour y enfermer ladite dose, en assurant à la zone de col une orientation déterminée telle que ledit orifice soit tourné vers le haut,
**d)** évacuer la bouteille, enfermant ladite dose, hors du dernier des postes de travail de la bouteille, se caractérise en ce que, pour mettre en oeuvre les étapes b, c, d, on procède à des transferts successifs de la préforme au premier des postes successifs de travail de celle-ci, puis de l'un à l'autre des postes successifs de travail de celle-ci, puis à des transferts successifs de la bouteille du dernier des postes successifs de travail de la préforme au premier des postes successifs de travail de la bouteille, puis de l'un à l'autre des postes successifs de travail de celle-ci, puis hors du dernier des postes successifs de travail de celle-ci, en tenant en permanence la zone de col par sa périphérie extérieure de façon à la retenir dans ladite orientation et à la guider suivant une trajectoire déterminée, passant successivement par les postes successifs de travail de la préforme et de la bouteille, en maîtrisant en permanence sa position le long de ladite trajectoire et en laissant en permanence, pendant les transferts successifs, la zone de corps et ledit orifice suffisamment dégagés pour ne constituer d'entrave ni au passage de la préforme et de la bouteille aux postes successifs de travail de celles-ci, ni au travail de celles-ci auxdits postes successifs de travail, à savoir en particulier au chauffage et au formage de la zone de corps de la préforme, ainsi qu'au remplissage et au bouchage de la bouteille.

On entend ici par « dose déterminée » toute quantité correspondant au remplissage de la bouteille avant son bouchage, qu'il s'agisse d'un volume, d'un poids ou d'un niveau par rapport à l'orifice de sa zone de col dans le cas d'un contenu liquide, tel qu'une boisson ou un médicament liquide, ou particulaire, tel qu'une poudre, ou pâteux, tel qu'une crème, ou d'un nombre déterminé d'objets dans le cas d'un contenu formé d'objets dénombrables, tels que des comprimés ou des bonbons, ces exemples n'étant en aucune façon limitatifs.

L'installation selon l'invention, comportant de façon également connue en elle-même :
- des postes successifs de travail d'une préforme, à savoir au moins un poste de chauffage de sa zone de corps, pour rendre celle-ci plastique, et un poste de formage de sa zone de corps, pour donner à celle-ci une conformation définitive et former ainsi une bouteille, comportant la zone de col de conformation définitive et la zone de corps alors également de conformation définitive,
- des postes successifs de travail de la bouteille, à savoir au moins un poste de remplissage par l'intermédiaire dudit orifice, pour y introduire une dose déterminée d'un contenu, et un poste de bouchage dudit orifice, pour y enfermer ladite dose, en assurant à la zone de col une orientation déterminée telle que ledit orifice soit tourné vers le haut, et
- des moyens de transfert de la préforme au premier des postes successifs de travail de celle-ci, puis de l'un à l'autre des postes successifs de travail de celle-ci, puis de la bouteille du dernier des postes successifs de travail de la préforme au premier des postes successifs de travail de la bouteille, puis de l'un à l'autre des postes successifs de travail de celle-ci, puis hors du dernier des postes successifs de travail de celle-ci,
   est quant à elle caractérisée en ce qu'elle est constituée d'un ensemble intégré dans lequel les moyens de transfert de la préforme et de la bouteille comportent un système de convoyage unique de type linéaire et positif comportant lui-même :
   - des moyens de préhension temporaire commandée de la zone de col de la préforme et de la bouteille par sa périphérie extérieure, dans ladite orientation, laissant ledit orifice et la zone de corps dégagés,
   - des moyens moteurs commandés pour déplacer les moyens de préhension temporaire de façon guidée suivant une trajectoire déterminée passant successivement par les postes successifs de travail de la préforme et de la bouteille, et
   - des moyens de commande synchronisée des moyens de préhension temporaire, des moyens moteurs et des postes successifs de travail de la préforme et de la bouteille de telle sorte que les moyens moteurs assurent ledit transfert de la préforme et de la bouteille par l'intermédiaire des moyens de préhension temporaire, alors que ces derniers tiennent en permanence, pendant ledit transfert, la zone de col par sa périphérie extérieure de façon à la maintenir dans ladite orientation et à maîtriser en permanence sa position le long de ladite trajectoire, et que les postes successifs de travail de la préforme et de la bouteille procèdent au travail respectif de la préforme ou de la bouteille lorsque la préforme ou la bouteille s'y trouve, respectivement.

En d'autres termes, l'installation conforme à l'invention est constituée d'un ensemble intégré comportant un système de convoyage unique sur lequel sont greffés des équipements de chauffe et de formage de préformes, par exemple par étirage-soufflage selon le mode de mise en oeuvre le plus fréquent, de remplissage des bouteilles obtenues, de bouchage et éventuellement d'étiquetage de ces dernières, tous ces composants fonctionnant de façon synchronisée. Il est bien entendu que tout autre équipement peut-être greffé, selon les besoins, sur le système de convoyage unique pour créer des postes supplémentaires de travail des préformes ou des bouteilles.

Le système développé dépasse le cadre de la mise en ligne de machines diverses (étireuse-souffleuse, remplisseuse, boucheuse, étiqueteuse), qu'il y ait ou non du convoyage entre ces machines, pour se concentrer sur un concept nouveau qui dissocie la partie convoyage (de la préforme à la bouteille soufflée puis conditionnée) des étapes nécessaires à l'obtention des différentes phases de transformation. Ce principe assure une très grande flexibilité de conception, de réalisation et d'utilisation des installations.

Ce concept rend possible la réalisation d'installations compactes dont l'originalité est de n'avoir qu'une seule fonction de transfert, celui-ci se faisant par la zone de col depuis l'entrée de la préforme dans l'installation jusqu'à la sortie de la bouteille hors de celle-ci.

Ces installations assurent la fabrication d'une bouteille en polyéthylène téréphtalate (P.E.T.) ou autre matière thermoplastique et son conditionnement jusqu'à l'obtention d'un article dit « sécurisé », c'est-à-dire conditionné (à savoir rempli et fermé). A ce niveau le contenu de la bouteille ne craint plus aucune contamination pouvant provenir de l'extérieur.

L'utilisation permanente, pendant les transferts successifs de la préforme puis de la bouteille aux différentes postes de travail et hors de ceux-ci, de la zone de col, dont la conformation reste inchangée depuis l'entrée de la préforme dans l'installation jusqu'à la sortie de la bouteille hors de celle-ci, pour effectuer la préhension de la préforme puis de la bouteille permet de disposer d'une seule et même référence, à savoir cette zone de col, pour travailler successivement la préforme puis la bouteille aux différents postes de travail. Ainsi, on est assuré de la maîtrise de la position de la préforme ou de la bouteille à leur arrivée aux postes de travail successifs, ce qui facilite le réglage de ces derniers, et l'on évite au maximum les risques d'incident de transfert puisque la reprise des préformes ou des bouteilles à chaque poste s'effectue rigoureusement dans les mêmes conditions qu'à leur arrivée à ce poste.

Ces avantages sont encore accrus si, selon un mode de mise en oeuvre préféré du procédé selon l'invention, on tient la zone de col par une même partie de sa périphérie extérieure, de façon similaire, pendant les transferts successifs de la préforme et de la bouteille,un mode de réalisation préféré de l'installation selon l'invention se caractérisant en ce que, à cet effet, les moyens de préhension temporaire sont propres à tenir la zone de col par une même partie de sa périphérie extérieure, de façon similaire, pendant lesdits transferts de la préforme et de la bouteille.

Ainsi, lorsque, lors de l'étape a, on choisit ou réalise la préforme de telle sorte que la zone de col présente à sa périphérie extérieure deux épaulements annulaires antagonistes, continus, de révolution autour dudit axe, et, entre ces deux épaulements antagonistes, un raccordement mutuel annulaire, continu, de révolution autour dudit axe, ce qui est fréquemment le cas des préformes de bouteilles, les deux épaulements antagonistes de raccordement mutuel définissant le plus souvent une gorge annulaire, continue, de révolution autour dudit axe, on choisit ces deux épaulements antagonistes et leur raccordement mutuel pour constituer ladite même partie de la périphérie extérieure de la zone de col, c'est-à-dire la partie par laquelle on tient cette zone de col, de façon similaire, pendant les transferts successifs de la préforme et de la bouteille.

A cet effet, un mode de réalisation préféré des moyens de préhension temporaire de la zone de col de la préforme puis de la bouteille comporte une paire de mors disposés face à face, respectivement de part et d'autre de ladite trajectoire, et susceptibles d'occuper l'un par rapport à l'autre, de façon commandée, une position de préhension de la zone de col, dans laquelle ils sont comparativement rapprochés, et une position de libération de la zone de col, dans laquelle ils sont comparativement écartés, et ces mors présentent une conformation telle que, dans leur position de préhension de la zone de col, ils épousent les deux épaulement antagonistes et leur raccordement mutuel, sur au moins une partie de leur circonférence en référence audit axe, au moins dans deux zones diamétralement opposées en référence à celui-ci ; les moyens de commande synchronisée commandent alors également les mors de telle sorte qu'ils occupent leur position de préhension de la zone de col au moins pendant le transfert de la préforme ou de la bouteille. Lorsque les deux épaulements antagonistes et leur raccordement mutuel définissent une gorge, la conformation des mors est telle que, dans leur position de préhension de la zone de col, ce soit cette gorge qu'ils épousent intérieurement sur au moins une partie de sa circonférence, au moins dans deux zones diamétralement opposées en référence à l'axe de la zone de col.

Le maintien de la zone de col de la préforme puis de la bouteille peut encore être amélioré si, lors de l'étape a, on choisit ou réalise la préforme de telle sorte que la zone de col présente à sa périphérie extérieure un épaulement annulaire supplémentaire, continu, de révolution autour de l'axe de la zone de col, tourné vers le bas dans ladite orientation et par exemple défini par une collerette annulaire, continue, de révolution autour de cet axe, que la zone de col présente à sa périphérie extérieure, et une plage annulaire, continue, de révolution autour dudit axe, tournée dans le sens d'un éloignement par rapport à celui-ci ; on met alors de préférence en oeuvre le procédé selon l'invention en offrant en permanence, pendant les transferts successifs de la préforme et de la bouteille, un appui vers le bas audit épaulement supplémentaire et un appui dans le sens d'un éloignement par apport à l'axe précité à ladite plage annulaire, de part et d'autre de ladite trajectoire, alors que la zone de col présente ladite orientation.

A cet effet, un mode de réalisation préféré d'une installation selon l'invention se caractérise en ce que celle-ci comporte respectivement de part et d'autre de ladite trajectoire, tout au long de celle-ci au moins en dehors des postes successifs de travail de la préforme et de la bouteille, des moyens d'appui continu, coulissant, dudit épaulement supplémentaire, vers le bas, et de ladite plage annulaire, dans le sens d'un éloignement par rapport audit axe, de part et d'autre de ladite trajectoire, en permanence, au fur et à mesure des transferts successifs de la préforme et de la bouteille, alors que la zone de col présente ladite orientation.

On observera qu'une telle conformation de la zone de col, comportant l'épaulement supplémentaire précité, en particulier défini par une collerette annulaire en saillie, et une plage annulaire tournée dans le sens d'un éloignement par rapport à l'axe de la zone de col, correspond à une conformation fréquente d'une telle zone de col, au même titre que la présence deux épaulements antagonistes et de leur raccordement, définissant en particulier entre eux une gorge annulaire, ledit épaulement supplémentaire étant généralement situé à l'opposé de l'orifice de la zone de col par rapport aux deux épaulements antagonistes et à leur raccordement, et ladite plage étant généralement située à l'opposé dudit orifice par rapport à l'épaulement supplémentaire.

En relation avec une telle conformation généralement connue, un mode de réalisation préféré de l'installation selon l'invention se caractérise en ce que les moyens d'appui sont constitués par deux soles de glissement fixes, disposées respectivement de part et d'autre de ladite trajectoire, en dessous desdits mors, et continues au moins en dehors des postes de travail.

Il est bien entendu, toutefois, qu'en particulier en relation avec d'autres conformations de la zone de col de la préforme et de la bouteille, on pourrait choisir des moyens de préhension différents, pour assurer la maîtrise permanente de la position de la zone de col de la préforme ou de la bouteille tout au long de la trajectoire de ces dernières vers chaque poste de travail et à partir de chaque poste de travail, de même que d'autres conformations d'éventuels moyens d'appui de la zone de col vers le bas et latéralement par rapport à cette trajectoire, tout au long du transfert de la préforme puis de la bouteille tout au long de leur transfert suivant cette trajectoire, sans sortir pour autant du cadre de la présente invention.

On pourrait également prévoir que, de façon connue en elle-même dans les installations de l'Art antérieur, en particulier en ce qui concerne le poste de chauffage de la zone de corps de la préforme et le poste de remplissage de la bouteille, au moins certains des postes successifs de travail de la préforme et de la bouteille accompagnent celles-ci alors qu'elles se déplacent sur une partie de leur trajectoire, pour travailler respectivement la préforme ou la bouteille sans arrêt de celle-ci.

Cependant, même s'il est transposable au procédé selon l'invention et à une installation selon l'invention, un tel accompagnement des préformes ou des bouteilles par certains postes de travail nécessite une conception compliquée et coûteuse de ces derniers, et pose à l'utilisation des problèmes complexes de réglage ; en d'autres termes, cette conception connue est coûteuse et vulnérable aux dysfonctionnements.

On préfère par conséquent, lorsqu'on met en oeuvre le procédé selon l'invention, faire en sorte que les postes successifs de travail de la préforme et de la bouteille soient stationnaires suivant ladite trajectoire, et procéder auxdits transferts successifs de la préforme et de la bouteille en faisant parcourir pas à pas ladite trajectoire par la zone de col, en adaptant mutuellement le pas et la position relative des postes successifs de travail de la préforme et de la bouteille, de telle sorte que le franchissement de pas successifs place successivement la préforme en arrêt temporaire aux postes successifs de travail de celle-ci et la bouteille en arrêt temporaire aux postes successifs de travail de celle-ci, selon un séquencement déterminé ; alors, c'est pendant l'arrêt temporaire de la préforme ou de la bouteille à un poste de travail que l'on procède au travail respectivement correspondant de la préforme ou de la bouteille.

Ainsi, un mode de réalisation préféré de l'installation selon l'invention se caractérise en ce que :
- les postes successifs de travail de la préforme et de la bouteille sont stationnaires suivant ladite trajectoire, en ce que
- les moyens moteurs sont choisis d'un type pas à pas, le pas et la position relative des postes successifs de travail de la préforme et de la bouteille étant adaptés mutuellement de telle sorte que le franchissement de pas successifs place successivement la préforme en arrêt temporaire aux postes successifs de travail de celle-ci et la bouteille en arrêt temporaire aux postes successifs de travail de celle-ci, selon un séquencement déterminé, et en ce que
- les moyens de commande synchronisée commandent les postes successifs de travail de la préforme et de la bouteille de telle sorte que la préforme ou la bouteille y soit travaillée alors qu'elle s'y trouve en arrêt temporaire.

On observera que, dès lors que la préforme ou la bouteille est ainsi arrêtée temporairement sur différents postes de travail, pendant le travail respectivement correspondant, et y occupe par conséquent une position parfaitement déterminée par la tenue d'une partie de la zone de col de la préforme ou de la bouteille pendant la totalité du franchissement du pas, on peut assurer temporairement la retenue de la préforme ou de la bouteille à l'encontre d'un déplacement suivant sa trajectoire, au moins à certains des postes successifs de travail, en retenant provisoirement sa zone de col par une autre partie de celle-ci. Il est bien entendu que, si cette retenue temporaire à l'encontre d'un déplacement de la préforme ou de la bouteille suivant sa trajectoire est efficace, la zone de col conserve une position parfaitement maîtrisée, dans laquelle les moyens de transfert n'ont aucune difficulté à la reprendre ensuite en charge pour la transférer hors du poste de travail considéré, à savoir la position dans laquelle les moyens de transfert l'ont placée à ce poste, en utilisant pour cette reprise en charge et le transfert ultérieur la même partie de la zone de col que pour le transfert précédent.

Ainsi, selon un mode de mise en oeuvre préféré du procédé selon l'invention, à l'un, au moins, des postes successifs de travail de la préforme et de la bouteille, à savoir au moins au ou à chaque poste de chauffage de la préforme ou au poste de formage de celle-ci, après le début de l'arrêt temporaire et avant la fin de celui-ci, successivement :
- on commence à retenir la zone de col par une autre partie de celle-ci, de façon à la rendre stationnaire en référence à ladite trajectoire,
- puis on cesse de tenir la zone de col par ladite même partie de sa périphérie extérieure,
- on procède au travail respectivement correspondant,
- puis on recommence à tenir la zone de col par ladite même partie de sa périphérie extérieure,
- puis on cesse de retenir la zone de col par ladite autre partie de celle-ci.

Un mode de réalisation correspondant de l'installation selon l'invention se caractérise en ce que l'un, au moins, des postes successifs de travail de la préforme et de la bouteille, à savoir au moins le ou chaque poste de chauffage de la préforme ou le poste de formage de celle-ci, comporte des moyens d'immobilisation temporaire commandée de la préforme ou de la bouteille à l'encontre d'un déplacement suivant ladite trajectoire, susceptibles d'occuper une position de retenue de la zone de col par ladite autre partie de celle-ci et une position de libération de la zone de col, et en ce que les moyens de commande synchronisée commandent également les moyens d'immobilisation temporaire de telle sorte que, après le début de l'arrêt temporaire et avant la fin de celui-ci, successivement :
- les moyens d'immobilisation temporaire gagnent leur position de retenue de la zone de col, de façon à la rendre stationnaire en référence à ladite trajectoire,
- les moyens de préhension temporaire gagnent leur position de libération de la zone de col,
- ledit un, au moins, des postes successifs de travail procède au travail respectivement correspondant,
- les moyens de préhension temporaire regagnent leur position de préhension de la zone de col,
- les moyens d'immobilisation temporaire regagnent leur position de libération de la zone de col.

Il est bien entendu que, même si l'on cesse ainsi, à certains postes stationnaires de travail, de tenir la préforme ou la bouteille par la partie de la zone de col par laquelle on la tient pendant le transfert en direction de chaque poste de travail et à partir de chaque poste de travail, à savoir par exemple par deux épaulements antagonistes et leur raccordement mutuel, on peut avantageusement continuer à offrir à l'épaulement supplémentaire et à la plage annulaire précités des appuis respectivement vers le bas et latéralement par rapport à la trajectoire, de part et d'autre de celle-ci, pendant l'arrêt temporaire aux postes successifs de travail de la préforme et de la bouteille. Alors, l'installation selon l'invention se caractérise en ce qu'elle comporte lesdits moyens d'appui continu, coulissant, également aux postes successifs de travail de la préforme et de la bouteille.

Ces moyens d'appui, ainsi continus tout au long de la trajectoire, au moins fonctionnellement sinon nécessairement structurellement, peuvent contribuer à la retenue temporaire de la zone de col par une autre partie de celle-ci, c'est-à-dire par une partie autre que celle par laquelle on la prend pour effectuer les transferts.

Ainsi, on peut avantageusement choisir comme autre partie de la zone de col ledit bord de celle-ci, et assurer la retenue temporaire de la zone de col à l'encontre d'un déplacement suivant ladite trajectoire en appliquant audit bord, par l'intérieur de la zone de col, une poussée axiale orientée de façon à affermir l'appui dudit épaulement supplémentaire, vers le bas.

Alors, dans une installation selon l'invention, les moyens d'immobilisation temporaire, en position de retenue de la zone de col, s'engagent coaxialement dans la périphérie intérieure de celle-ci en appliquant audit bord une poussée vers lesdits moyens d'appui continu alors que, en position de libération, ils dégagent totalement la zone de col.

Bien plus, l'appui de l'épaulement supplémentaire, vers le bas, lorsque la préforme ou la bouteille est retenue temporairement à un poste de travail, à l'encontre d'un déplacement suivant sa trajectoire, peut être mis à profit pour accomplir ce travail.

Ainsi, selon un mode de mise en oeuvre préféré du procédé selon l'invention, au ou à chaque poste de chauffage de la préforme, on accompagne ladite poussée axiale d'une rotation autour dudit axe, provoquant une rotation de la préforme sur elle-même, autour de cet axe, par glissement au niveau de l'appui de l'épaulement annulaire vers le bas.

L'installation selon l'invention se caractérise alors en ce que :
- au ou à chaque poste de chauffage de la préforme, les moyens d'immobilisation temporaire sont montés à la rotation autour d'un axe qui est stationnaire suivant ladite trajectoire et avec lequel ledit axe de la zone de col coïncide lorsque la préforme est arrêtée audit poste de chauffage de celle-ci, en ce que
- sont prévus des moyens commandés d'entraînement des moyens d'immobilisation temporaire à la rotation autour dudit axe stationnaire, et en ce que
- les moyens de commande synchronisée commandent également ces moyens d'entraînement de telle sorte que les moyens d'immobilisation temporaire soient entraînés à la rotation autour dudit axe stationnaire lorsqu'ils occupent leur position de retenue de la zone de col.

On observera que les moyens d'appui de l'épaulement supplémentaire de la zone de col vers le bas et de la plage annulaire de cette zone de col latéralement de part et d'autre de la trajectoire des préformes, au niveau du ou de chaque poste de chauffage de celle-ci, protègent la zone de col, dont la conformation est définitive, d'une action directe des moyens utilisés pour le chauffage de la zone de corps, sans que l'on ait à prévoir à cet effet de disposition supplémentaire telle que des écrans ou des moyens de refroidissement localisé de la zone de col. Cette protection peut être renforcée par un choix judicieux des matériaux constitutifs de ces moyens d'appui, ce choix relevant des aptitudes normales d'un Homme du métier.

Cependant, la possibilité de travailler la préforme ou la bouteille à poste fixe, en particulier selon les modalités préférées précitées, entre deux pas de transfert de la préforme ou de la bouteille ne constitue que l'un des avantages de ce transfert pas à pas.

Un autre avantage de ce transfert pas à pas réside dans le fait qu'il permet d'obtenir la maîtrise permanente de la position de la zone de col suivant sa trajectoire par des moyens particulièrement simples, c'est-à-dire à la fois particulièrement économiques et particulièrement fiables, si l'on choisit d'alterner des phases :
- de transfert de la préforme ou de la bouteille en tenant la zone de col par ladite même partie de sa périphérie extérieure simultanément de part et d'autre de ladite trajectoire, et
- d'arrêt de la préforme ou de la bouteille en tenant la zone de col par ladite même partie de sa périphérie extérieure alternativement de part ou d'autre de ladite trajectoire.

Un Homme du métier comprendra aisément que, dès lors que l'on conserve un appui vers le bas à l'épaulement annulaire que présente de préférence la zone de col, et un appui latéral à la plage annulaire qu'elle présente de préférence également, le maintien de la préforme ou de la bouteille d'un seul côté de sa trajectoire, sur une partie de sa circonférence, permet d'arrêter cette préforme ou cette bouteille en lui conservant son orientation et en conservant une position parfaitement déterminée, suivant sa trajectoire, à sa zone de col.

Un mode de mise en oeuvre préféré de l'installation selon l'invention, à cet effet, se caractérise en ce qu'elle comporte plusieurs paires de mors réparties selon le pas suivant ladite trajectoire et en ce que les moyens de commande synchronisée commandent les mors et les moyens moteurs de telle sorte que, successivement :
- les paires de mors avancent ensemble d'un pas alors que les mors respectifs occupent leur position de préhension,
- les mors situés d'un premier côté de ladite trajectoire gagnent leur position de libération, puis reculent ensemble d'un pas, puis regagnent leur position de préhension, alors que les mors situés du deuxième côté de ladite trajectoire restent dans leur position de préhension,
- les mors situés du deuxième côté regagnent leur position de libération, puis reculent ensemble d'un pas, puis regagnent leur position de préhension, alors que les mors situés du premier côté de ladite trajectoire restent dans leur position de préhension.

Cet enchaînement de mouvements des mors situés respectivement de part et d'autre de la trajectoire sera qualifié par la suite de « cycle carré alternatif ».

Il ressortira clairement de la suite de la description que, en accomplissant simultanément de tels mouvements, de façon répétitive, les paires successives de mors font progresser la zone de col de la préforme ou de la bouteille suivant sa trajectoire en maîtrisant en permanence sa position, par préhension des deux côtés de la trajectoire par une même paire de mors pendant les transferts et alternativement par un mors de l'une des paires et un mors d'une autre paire pendant les arrêts.

Il en ressortira également qu'un tel mode de mise en oeuvre de l'invention permet de placer simultanément, à tout ou partie des postes de travail, une préforme ou une bouteille respective sur laquelle on procède au travail respectivement correspondant, c'est-à-dire d'augmenter d'autant la cadence de production de l'installation dès lors que l'espacement mutuel des postes successifs et, avec lui, le pas suivant lequel les préformes puis les bouteilles se déplacent successivement le long de leur trajectoire et sont ainsi mutuellement espacées est suffisamment grand pour éviter tout contact entre les préformes et bouteilles successives.

On entend ici par « cadence de production » le nombre de bouteilles remplies, bouchées et le cas échéant étiquetées produites selon le procédé, par l'installation, dans un temps déterminé, ce qui correspond également à la cadence à laquelle l'installation est alimentée en préforme, ainsi qu'à la cadence à laquelle sont franchis les pas successifs de la trajectoire des préformes puis des bouteilles.

Naturellement, le pas suivant lequel les préformes puis les bouteilles se déplacent successivement le long de leur trajectoire peut être constant de l'entrée des préformes dans l'installation à la sortie des bouteilles remplies, bouchées et le cas échéant étiquetées, hors de l'installation, auquel cas on le choisit en fonction des dimensions les plus grandes, parmi les dimensions hors tout qu'une préforme et une bouteille présentent respectivement perpendiculairement à l'axe de leur zone de col.

Cependant, compte tenu du fait que les dimensions hors tout que chaque préforme présente perpendiculairement à l'axe de sa zone de col sont généralement inférieures, et même parfois largement inférieures à celles qu'une bouteille présente perpendiculairement à ce même axe, on peut réduire la longueur de la trajectoire des préformes puis des bouteilles entre l'entrée dans l'installation et la sortie de celle-ci, c'est-à-dire l'encombrement de l'installation, en prévoyant un pas plus court pour les préformes que pour les bouteilles, tout en donnant aux pas respectifs des préformes et des bouteilles une valeur suffisamment grande pour éviter tout contact mutuel entre les préformes et bouteilles qui se succèdent suivant le pas respectif, le long de leur trajectoire, lorsqu'on fait en sorte de travailler respectivement une préforme ou une bouteille, simultanément, à différents postes successifs de travail.

A cet égard, un mode de mise en oeuvre préféré du procédé selon l'invention se caractérise en ce que l'on allonge le pas entre les postes successifs de travail de la préforme qui précèdent le poste de formage de celle-ci et le poste de formage de celle-ci, d'une première valeur déterminée que ce pas présente pendant le transfert et l'arrêt temporaire de la préforme aux postes successifs de travail de celle-ci qui précèdent le poste de formage de celle-ci, et une deuxième valeur déterminée que ce pas présente pendant l'arrêt temporaire de la préforme au poste de formage de celle-ci et pendant le transfert et l'arrêt temporaire aux postes successifs de travail de la bouteille et le transfert hors du dernier des postes successifs de travail de la bouteille.

En relation avec ce mode de mise en oeuvre du procédé selon l'invention, un mode de réalisation préféré de l'installation selon l'invention se caractérise en ce que :
- le pas présente une première valeur déterminée pendant le transfert et l'arrêt temporaire de la préforme aux postes successifs de travail de celle-ci qui précèdent le poste de formage de celle-ci, et une deuxième valeur déterminée, supérieure à la première, pendant l'arrêt temporaire de la préforme au poste de formage de celle-ci et pendant le transfert et l'arrêt temporaire aux postes successifs de travail de la bouteille et le transfert hors du dernier des postes successifs de travail de la bouteille, et en ce que
- sont prévus des moyens d'allongement du pas, de ladite première valeur à la deuxième valeur, entre les postes successifs de travail de la préforme qui précèdent le poste de formage de celle-ci et le poste de formage de celle-ci.

La présente invention offre cependant encore d'autres possibilités d'augmenter la cadence de production de l'installation, c'est-à-dire la cadence avec laquelle des préformes entrent dans l'installation et avec laquelle des bouteilles remplies, bouchées, le cas échéant étiquetées, en sortent.

A cet égard, lorsque les installations de l'Art antérieur pratiquent le remplissage des bouteilles à poste fixe, comme c'est également le cas du mode de réalisation préféré d'une installation selon l'invention, le remplissage d'une bouteille s'effectue en une fois lors de l'arrêt de cette bouteille à un poste unique de remplissage et, cette opération étant généralement la plus longue qu'aient à subir la préforme et la bouteille, c'est-à-dire en particulier étant plus longue que le formage de la préforme pour en faire une bouteille, par exemple par étirage-soufflage, il en résulte que la cadence de production de l'installation est limitée à la cadence du poste de remplissage.

Pour éviter cet inconvénient, selon un mode de mise en oeuvre préféré du procédé selon l'invention, alors que le remplissage d'une bouteille par ladite dose demande un nombre entier, déterminé, de fois le temps nécessaire au formage d'une préforme, en arrondissant au nombre entier supérieur, on prévoit ce nombre entier de postes de remplissage, de façon répartie suivant ladite trajectoire selon le pas de parcours de postes de travail de la bouteille et l'on introduit dans la bouteille une dose partielle correspondant au rapport de ladite dose audit nombre entier à son arrêt temporaire à chaque poste de remplissage, respectivement.

A cet effet, dans une installation selon l'invention :
- il est prévu ce nombre entier de fois de postes de remplissage, de façon répartie suivant ladite trajectoire selon le pas de parcours de postes de travail de la bouteille, et
- les moyens de commande synchronisée commandent lesdits postes de remplissage de façon à introduire dans la bouteille une dose partielle correspondant au rapport de ladite dose audit nombre entier à son arrêt temporaire à chaque poste de remplissage, respectivement.

Ainsi, la cadence de production de l'installation n'est plus limitée par la cadence du poste de travail le plus lent, le nombre de postes accomplissant ce travail le plus lent étant multiplié de façon suffisante pour décomposer ce travail en étapes successives, effectuées à la cadence du reste des postes de travail de l'installation.

On peut encore augmenter la cadence de production si l'on met en oeuvre le procédé selon l'invention simultanément pour le formage et le remplissage d'un nombre déterminé de bouteilles, supérieur à un, en prévoyant chacun des postes de travail de la préforme et de la bouteille en ce nombre d'exemplaires, les exemplaires d'un même poste de travail étant groupés et répartis en étant mutuellement espacés de façon déterminée suivant ladite trajectoire, et en appliquant lesdits transferts successifs à un groupe dudit nombre déterminé de préformes puis de bouteilles, réparties suivant ladite trajectoire en étant mutuellement espacées de façon déterminée, en adaptant mutuellement la répartition des préformes et des bouteilles suivant ladite trajectoire et celle des exemplaires de chaque poste de travail de telle sorte que, lorsqu'un groupe de préformes ou de bouteilles se trouve à un poste de travail, respectivement une préforme ou une bouteille de ce groupe se situe à l'un, respectif, des exemplaires de ce poste de travail.

En effet, pour un même temps d'arrêt entre le franchissement de deux pas successifs, le même nombre de préformes et le même nombre de bouteilles sont travaillés aux postes respectivement correspondants, dès lors que le pas selon lequel s'effectue le transfert des préformes et celui selon lequel s'effectue le transfert des bouteilles présentent une valeur respective supérieure au produit de l'espacement mutuel des préformes ou des bouteilles, respectivement, dans un même groupe, par le nombre de préformes ou de bouteilles de chaque groupe.

En relation avec ce mode de mise en oeuvre préféré du procédé selon l'invention, pour procéder simultanément au formage et au remplissage d'un nombre déterminé de bouteilles, supérieur à un, l'installation selon l'invention comporte des postes de travail de la préforme ou de la bouteille en ce nombre d'exemplaires, les exemplaires d'un même poste de travail étant groupés et répartis en étant mutuellement espacés de façon déterminée suivant ladite trajectoire, et lesdits moyens de préhension temporaire commandée sont propres à assurer la préhension temporaire simultanée d'un groupe dudit nombre déterminé de zones respectives de col de préforme ou de bouteille par leur périphérie extérieure, dans ladite orientation, les zones de col dudit groupe étant réparties suivant ladite trajectoire et étant mutuellement espacées de façon déterminée, la répartition des préformes et des bouteilles suivant ladite trajectoire et celle des exemplaires de chaque poste de travail étant adaptées de telle sorte que, lorsqu'un groupe de préformes ou de bouteilles se trouve à un poste de travail, respectivement une préforme ou une bouteille de ce groupe se situe à l'un, respectif, des exemplaires de ce poste de travail.

Naturellement, l'espacement mutuel des préformes ou des bouteilles dans chaque groupe doit être suffisamment grand pour éviter un contact mutuel dans chaque groupe ainsi que d'un groupe à l'autre lorsque, de façon préférée, on travaille simultanément plusieurs groupes à des postes de travail respectivement correspondants.

De préférence, pour tenir compte de ce que les dimensions qu'une préforme présente perpendiculairement à l'axe de sa zone de col sont inférieures à celles que présente ainsi une bouteille, on choisit de réduire la dimension que l'installation présente suivant la trajectoire des préformes et des bouteilles en augmentant l'espacement mutuel entre les exemplaires d'un même poste de travail dé la préforme ou de la bouteille, respectivement entre les préformes ou les bouteilles dudit groupe, entre les postes successifs de travail de la préforme qui précèdent le poste de formage de celle-ci et le poste de formage de celle-ci, d'une première valeur déterminée que cet espacement présente aux postes successifs de travail de la préforme qui précèdent le poste de formage de celle-ci, à une deuxième valeur déterminée que cet espacement présente au poste de formage de la préforme et aux postes successifs de travail de la bouteille.

L'installation selon l'invention se caractérise alors en ce que :
- l'espacement mutuel entre les exemplaires d'un même poste de travail de la préforme ou de la bouteille, respectivement entre les préformes et les bouteilles dudit groupe, présente une première valeur déterminée aux postes successifs de travail de la préforme qui précèdent le poste de formage de celle-ci, et une deuxième valeur déterminée, supérieure à la précédente, au poste de formage de la préforme et aux postes successifs de travail de la bouteille, et
- sont prévus des moyens d'augmentation de l'espacement mutuel des préformes de chaque groupe entre les postes successifs de travail de la préforme qui précèdent le poste de formage de celle-ci et le poste de formage de celle-ci.

Ces moyens d'augmentation de l'espacement mutuel des préformes se confondent avantageusement avec les moyens d'allongement du pas, comme il ressortira de la suite de la description.

On observera que, compte tenu du caractère intégré, autour d'un système de convoyage unique, d'une installation selon l'invention, il est beaucoup plus aisé que dans l'Art antérieur, caractérisé par la succession de machines distinctes raccordées ou non par des dispositifs de transfert mutuellement indépendants et adaptés à la prise de références différentes, sur la préforme et sur la bouteille, dans les différentes machines, de maintenir une ambiance stérile au moins autour de l'orifice de la préforme puis de la bouteille jusqu'à ce que celle-ci soit bouchée.

Ainsi, selon un mode de mise en oeuvre préféré du procédé selon l'invention, on maintient en continu une surpression gazeuse au moins autour de l'orifice de la préforme ou de la bouteille pendant lesdits transferts successifs et aux postes successifs de travail de la préforme et de la bouteille, étant entendu que l'on peut maintenir cette surpression au moyen d'un air filtré et stérilisé, ou encore de tout autre gaz.

A cet effet, l'installation selon l'invention peut être capotée et comporter des moyens pour maintenir en continu la surpression gazeuse précitée, ce que facilite son caractère compact.

En outre, cette installation peut, contrairement aux installations de l'Art antérieur, comporter un châssis commun aux postes successifs de travail de la préforme et de la bouteille et aux moyens de transfert de la préforme et de la bouteille, ce qui accroît sa compacité et facilite le transfert aux différents postes et hors de ces différents postes, en conservant à la fois la maîtrise permanente de la position des préformes et des bouteilles suivant leur trajectoire et une même référence de niveau, pour les différents postes de travail, par rapport à la zone de col de la préforme et de la bouteille.

D'autres caractéristiques et avantages du procédé de l'installation selon la présente invention ressortiront de la suite de la description, ainsi que des dessins annexés, donnés à titre d'exemple non limitatif d'une forme de réalisation conforme à la présente demande.

La figure 1 est un schéma de principe d'une installation selon l'invention, vue de dessus, cette installation étant prévue pour travailler simultanément un groupe de quatre préformes ou de quatre bouteilles, respectivement, à chacun de ses postes de travail et pour procéder au remplissage de chaque bouteille par tiers successifs, à trois postes successifs de remplissage.

La figure 2 représente une installation de ce type vue de côté, en élévation, de façon simplifiée.

La figure 3 représente la même installation vue de dessus, avec omission de certains composants pour des raisons de clarté.

La figure 4 est une coupe transversale verticale d'un poste de remplissage, cette coupe étant repérée en IV-IV à la figure 2.

La figure 5 montre une vue en perspective d'un prototype d'installation selon l'invention telle qu'illustrée aux figures 1 à 4, ce prototype étant conforme au mode de réalisation actuellement préféré.

Les figures 6 et 7 montrent deux exemples non limitatifs de préforme susceptible d'être transformée en bouteille par une telle installation, l'exemple de la figure 6 étant celui qui a été choisi pour la suite des figures.

La figure 8 illustre, pour partie en coupe transversale par un plan repéré en VIII-VIII à la figure 2, au niveau d'un espace de transfert des bouteilles remplies vers le poste de bouchage de ces bouteilles, et pour partie en perspective, les composants principaux des moyens de transfert des bouteilles mis en oeuvre dans l'installation prototype précitée, étant entendu que des moyens similaires sont utilisés par le transfert des préformes dans ce prototype.

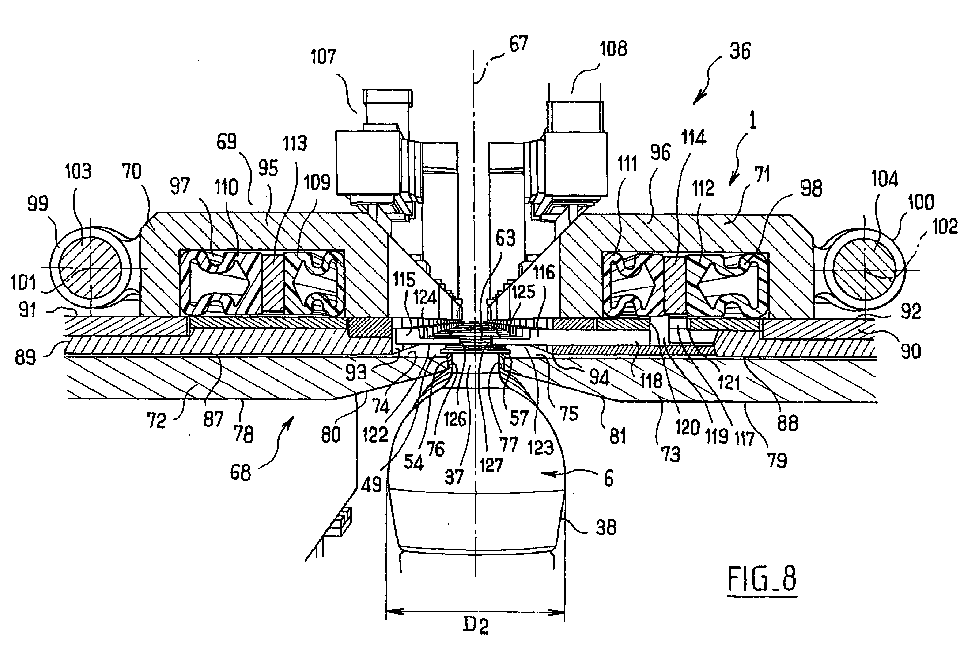

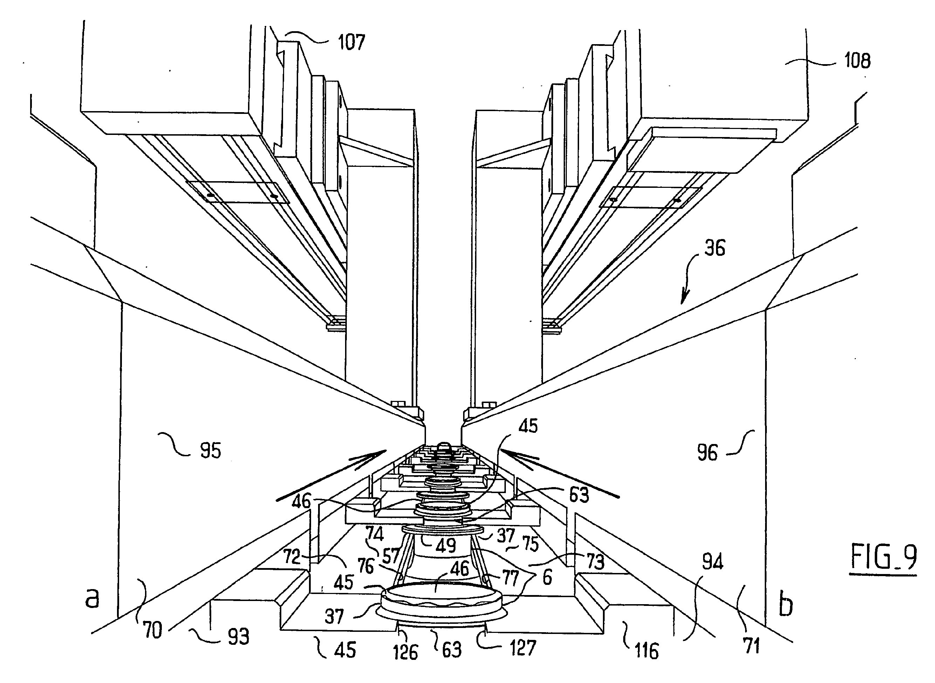

Lés figures 9 à 15 illustrent les étapes successives principales d'un cycle de transfert des bouteilles sur un pas par les moyens de transfert illustrés à la figure 8, selon une vue similaire mais simplifiée, étant entendu que les moyens de transfert des préformes accomplissent un cycle identique, à certaines variantes près.

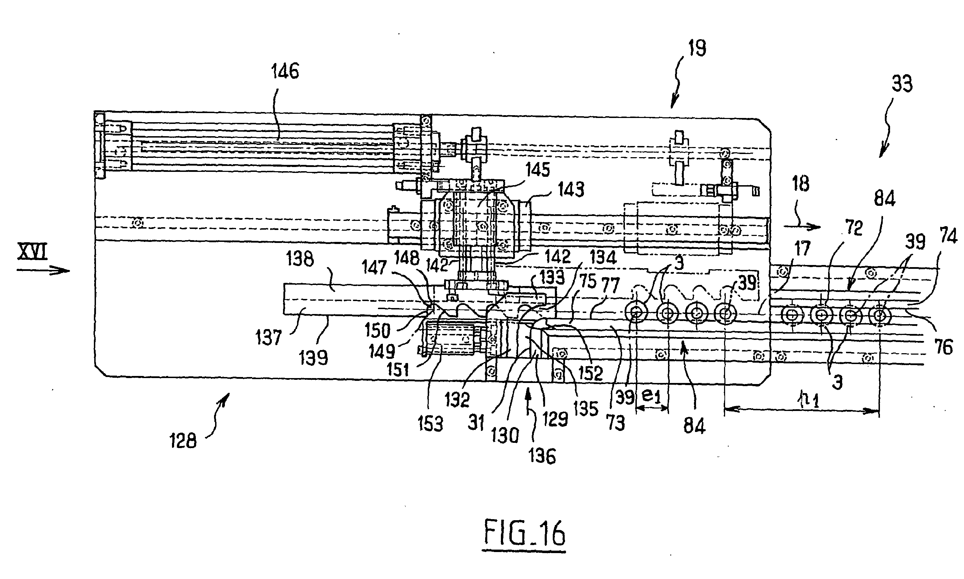

La figure 16 montre une vue de dessus d'un poste de prise en charge des préformes à l'entrée de l'installation prototype précitée.

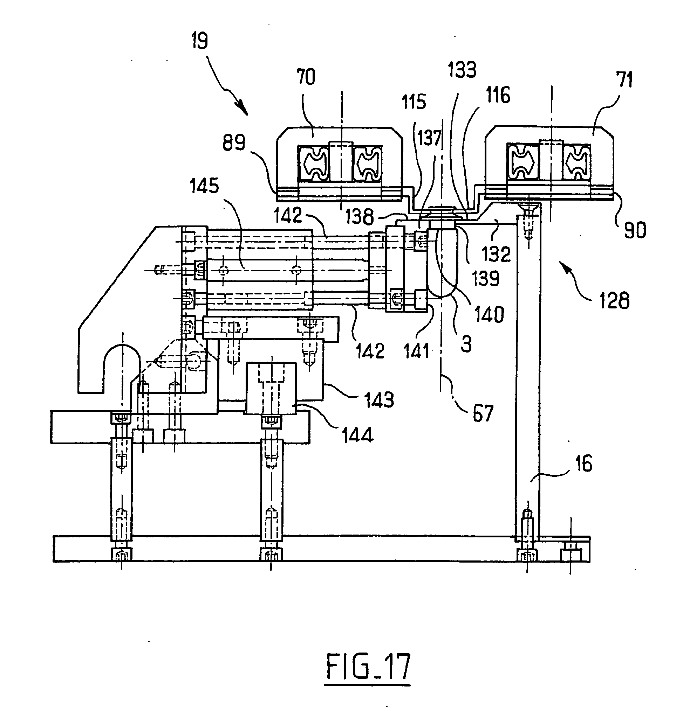

La figure 17 montre une vue de ce poste en bout, dans un sens longitudinal repéré en XVI à la figure 16.

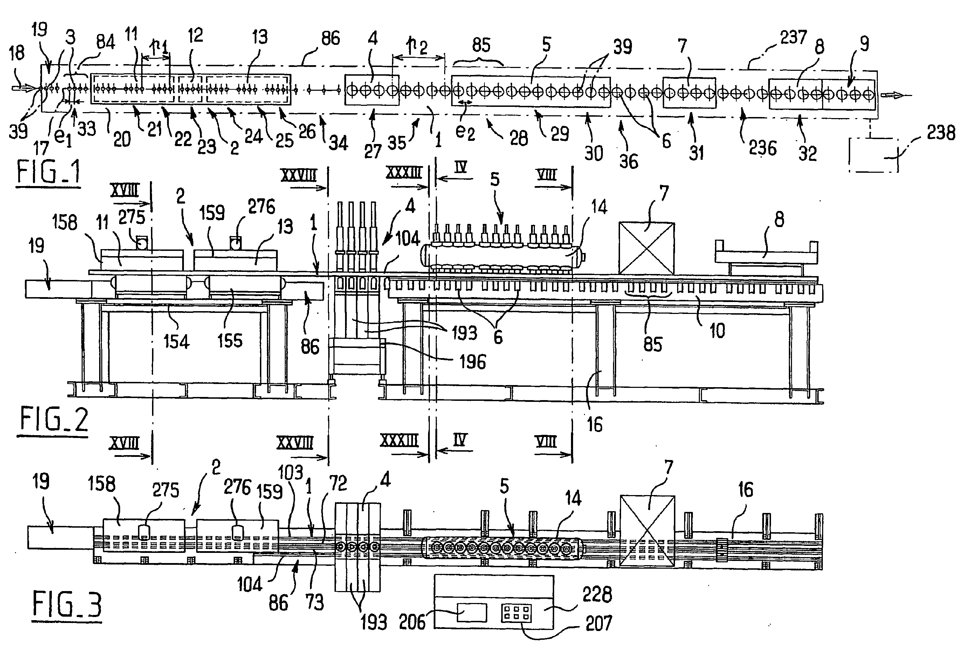

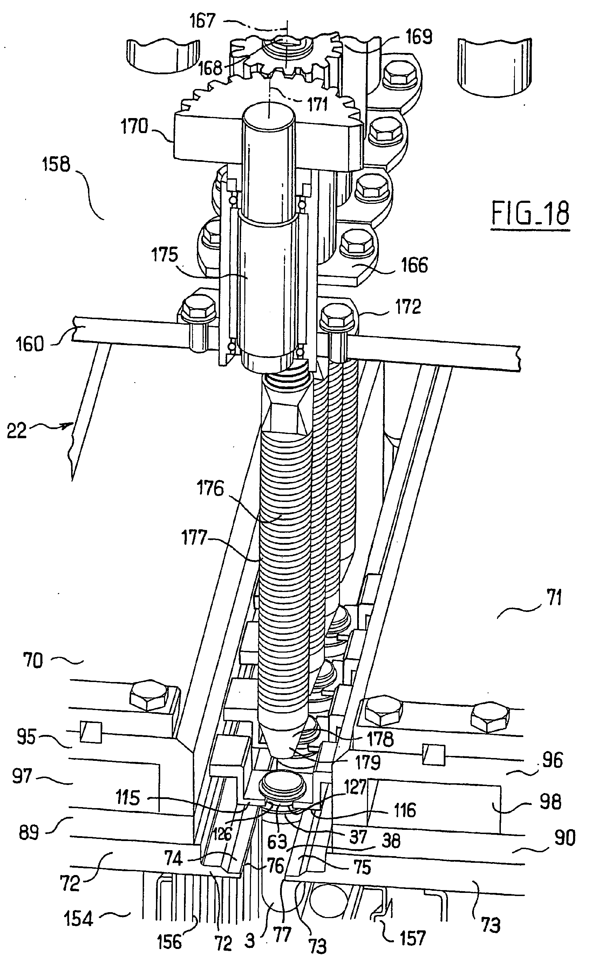

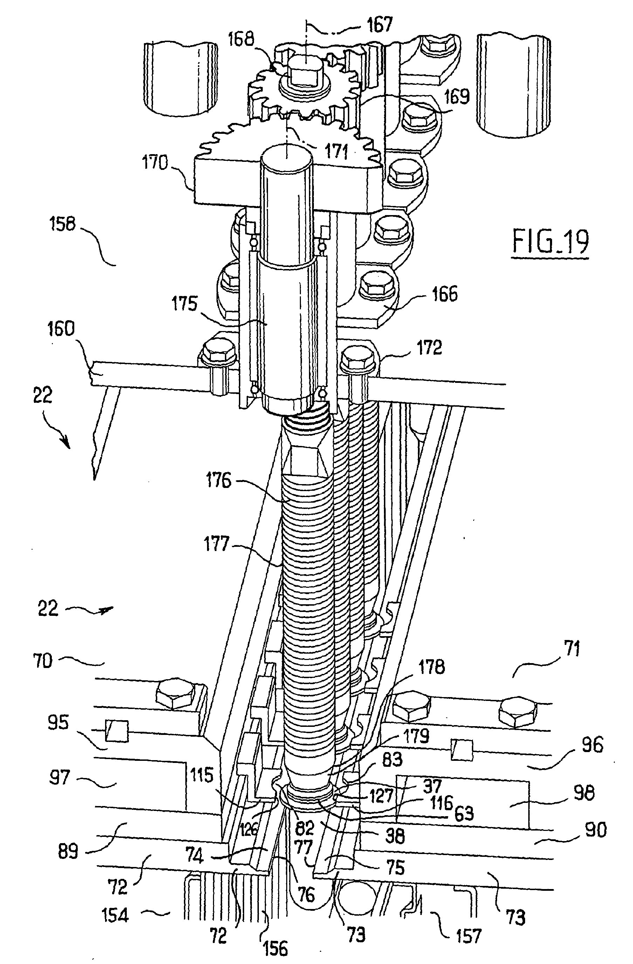

Les figures 18 et 19 montrent, pour partie en coupe transversale par un plan repéré en XVIII-XVIII à la figure 2 et pour partie en perspective, l'un des deux postes de chauffage des préformes de l'installation prototype alors que les moyens d'immobilisation temporaire des préformes occupent respectivement leur position de libération de la zone de col des préformes et leur position de retenue de celle-ci.

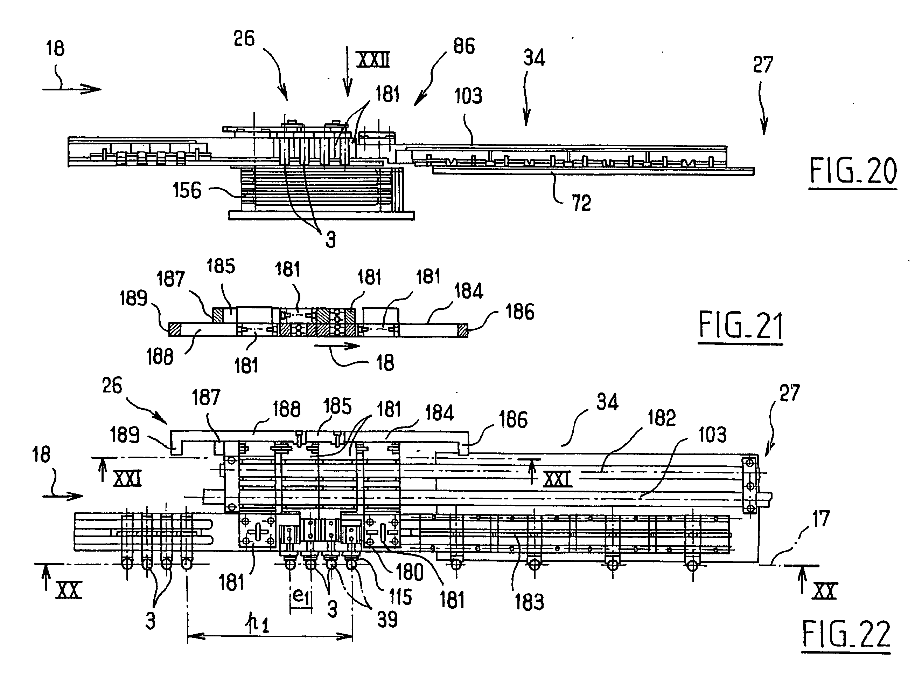

Les figures 20 à 22 montrent un dispositif de changement de pas et d'espacement mutuel des préformes dans un groupe, intercalé entre les postes de chauffage des préformes et le poste de formage de celles-ci dans l'installation prototype, respectivement en coupe par un plan longitudinal moyen, vertical, repéré en XX-XX à la figure 22, en coupe par un plan longitudinal, vertical, parallèle au précédent, repéré en XXI-XXI à la figure 22, et en vue partielle de dessus, dans un sens repéré en XXII à la figure 20, alors que le pas et l'espacement mutuel présentent leur valeur minimale, correspondant au pas et à l'espacement mutuel des préformes avant leur transfert au poste de formage.

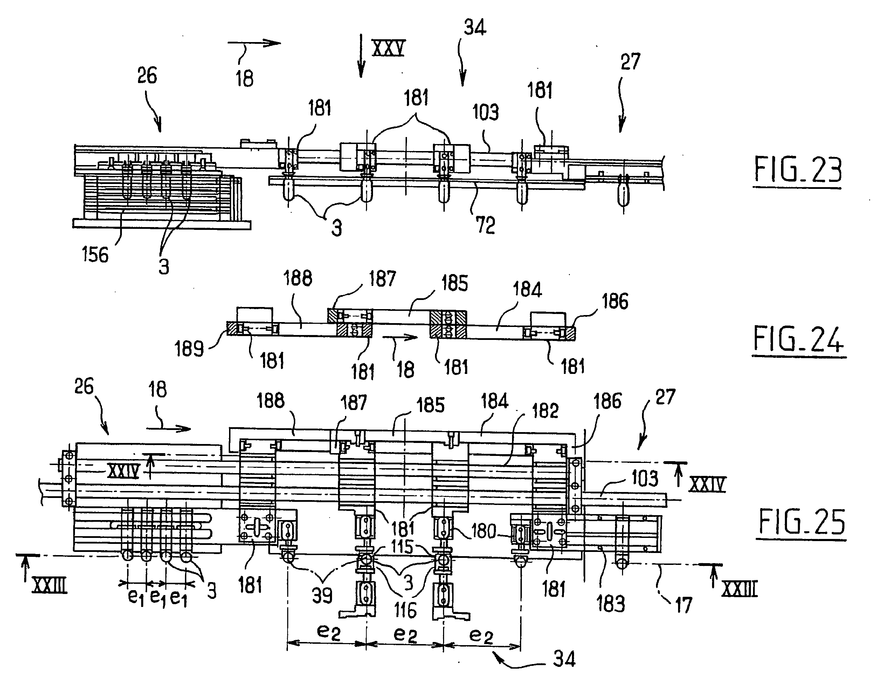

Les figures 23 à 25 montrent le même dispositif de changement de pas et d'espacement mutuel, respectivement en coupe par un plan longitudinal moyen, vertical, repéré en XXIII-XXIII à la figure 25, en coupe par un plan longitudinal, vertical, parallèle au précédent, repéré en XXIV-XXIV à la figure 25, et en vue partielle de dessus, dans un sens repéré en XXV à la figure 23, alors que le pas et l'espacement mutuel présentent leur valeur maximale, correspondant au pas et à l'espacement mutuel des préformes à leur arrivée au poste de formage ainsi qu'au pas et à l'espacement mutuel des bouteilles.

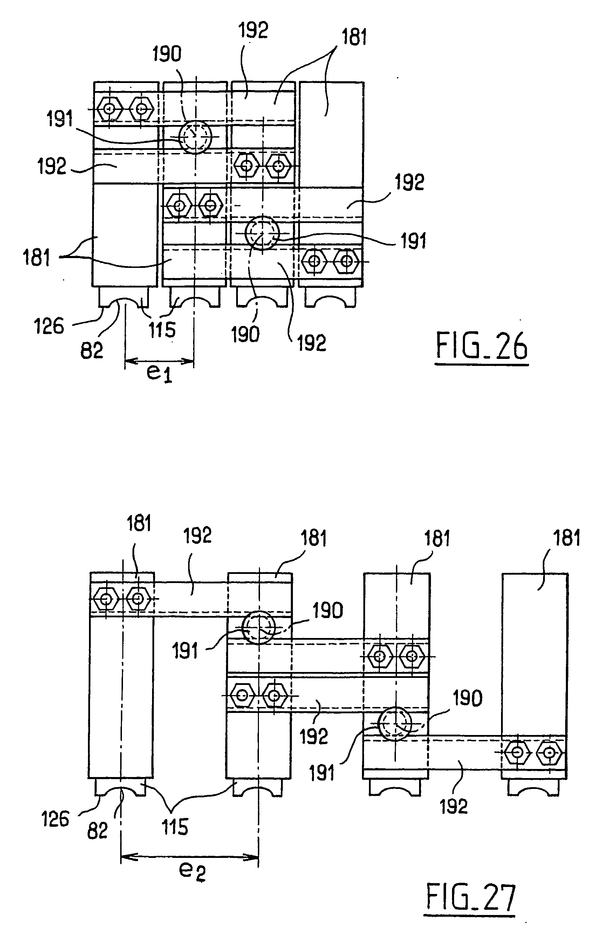

Les figures 26 et 27 montrent une variante du dispositif de changement de pas et d'espacement mutuel, en vue de dessus, alors que le pas et l'espacement mutuel présentent respectivement leur valeur minimale et leur valeur maximale.

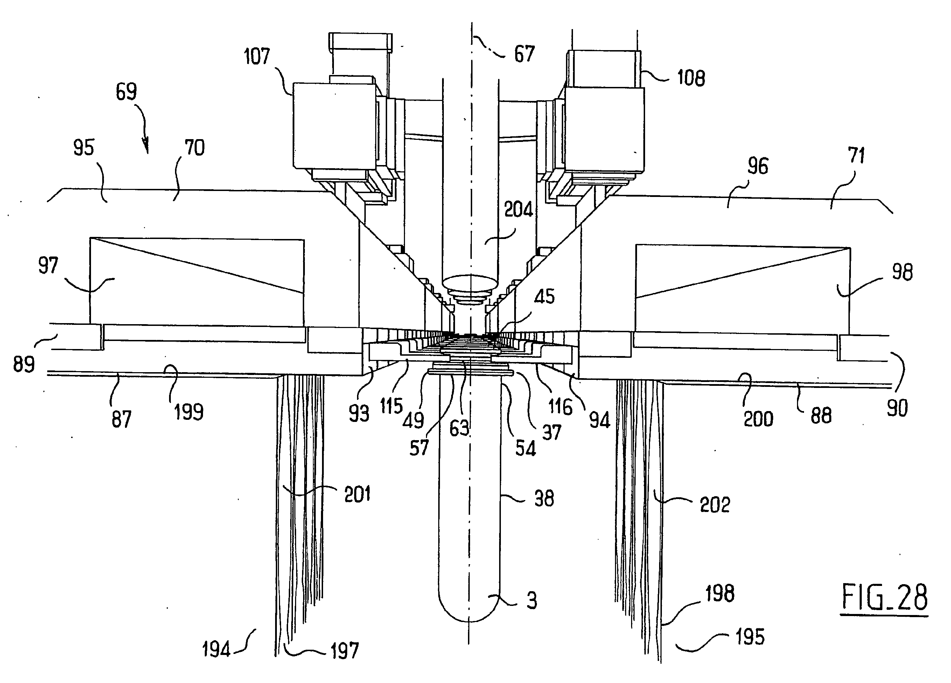

Les figures 28 à 32 montrent, pour partie en une vue en coupe transversale par un plan repéré en XXVIII-XXVIII à la figure 3 et pour partie en perspective, le poste de formage, à savoir dans cet exemple un étirage-soufflage, dans cinq états successifs, à savoir à l'arrêt des préformes lors de leur arrivée à ce poste, lors de la fermeture des moules sur les préformes ainsi arrêtées, pendant l'étirage-soufflage, à la fin de celui-ci et à l'ouverture des moules pour libérer les bouteilles ainsi formées.

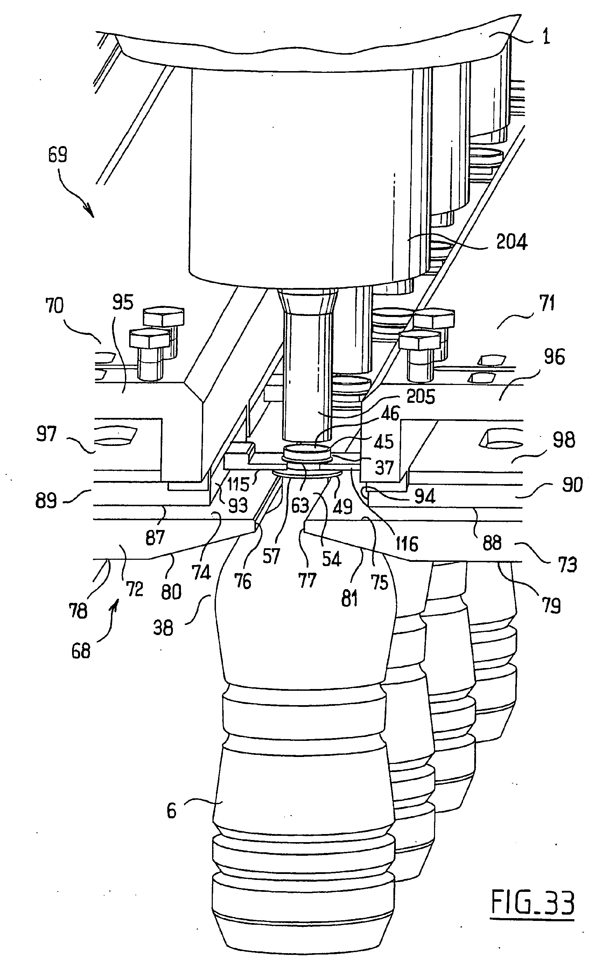

La figure 33 montre, pour partie en coupe transversale par un plan repéré en XXXIII-XXXIII à la figure 3 et pour partie en perspective, l'un des postes de remplissage des bouteilles.

Un Homme du métier comprendra aisément que le cas du travail simultané de groupes de quatre préformes ou de quatre bouteilles et du remplissage de chaque bouteille par tiers successifs, bien qu'il corresponde au prototype d'installation selon l'invention qui a été réalisé, ne constitue qu'un exemple non limitatif et que l'on ne sortirait pas du cadre de l'invention en travaillant les préformes et bouteilles en groupes d'un nombre différent de quatre, ou individuellement, ou en remplissant chaque bouteille en un nombre de fois différent de trois, en particulier en une fois.

L'installation, telle qu'elle est illustrée aux figures 1, 2, 3 et 5 est formée de l'assemblage d'un ensemble ou système de convoyage 1, propre à transférer des préformes 3 puis des bouteilles 6 suivant une trajectoire déterminée 17, ouverte et par exemple rectiligne comme il est illustré, dans un sens déterminé 18 de cette trajectoire 17, et d'équipements de travail composés dans l'exemple illustré d'un équipement 2 de chauffage des préformes 3, d'une étireuse-souffleuse 4 pour transformer ces préformes 3 en bouteilles 6, d'une station 5 de remplissage des bouteilles 6, de systèmes 7 de bouchage et 8 d'étiquetage des bouteilles 6 remplies, ces équipements étant répartis le long de la trajectoire 17, dans cet ordre en référence au sens 18, pour constituer des postes successifs 20 à 32 de travail des préformes 3 et des bouteilles lors de leur transfert suivant la trajectoire 17, dans le sens 18, entre un poste 19 de prise en charge des préformes 3, constituant l'entrée de l'installation, et un poste 9 d'évacuation des produits finis, c'est-à-dire des bouteilles remplies, bouchées, étiquetées, constituant la sortie de l'installation.

L'ensemble ou système de convoyage 1 est constitué d'un ensemble ou système de transfert unique de type linéaire et positif prenant en charge les préformes 3 et les bouteilles 6, successivement, de la même façon depuis l'entrée de l'installation jusqu'à la sortie du produit fini.

Cet ensemble, muni de toutes les sécurités nécessaires à son bon fonctionnement, est capoté et mis en surpression gazeuse, par exemple avec de l'air filtré, de façon non illustrée mais aisément concevable par un Homme du métier, de façon à isoler de l'air ambiant l'intérieur des préformes 3 et celui des bouteilles 6 jusqu'à ce que celles-ci soient bouchées.

Toutes les parties mécaniques sont positionnées en dessous du niveau d'un orifice que chaque préforme 3 et chaque bouteille 6 présentent en permanence vers le haut dans l'installation, comme il apparaîtra plus loin, pour éviter toute contamination des préformes 3 et des bouteilles 6 à conditionner.

Les bouteilles 6 sont isolées dans un tunnel 10 de volume réduit et parfaitement nettoyable.

Un espace 33 à 36, 236 correspondant à un poste complet est prévu entre deux équipements successifs, suivant la trajectoire 17, de manière à pouvoir isoler complètement les fonctions les unes des autres.

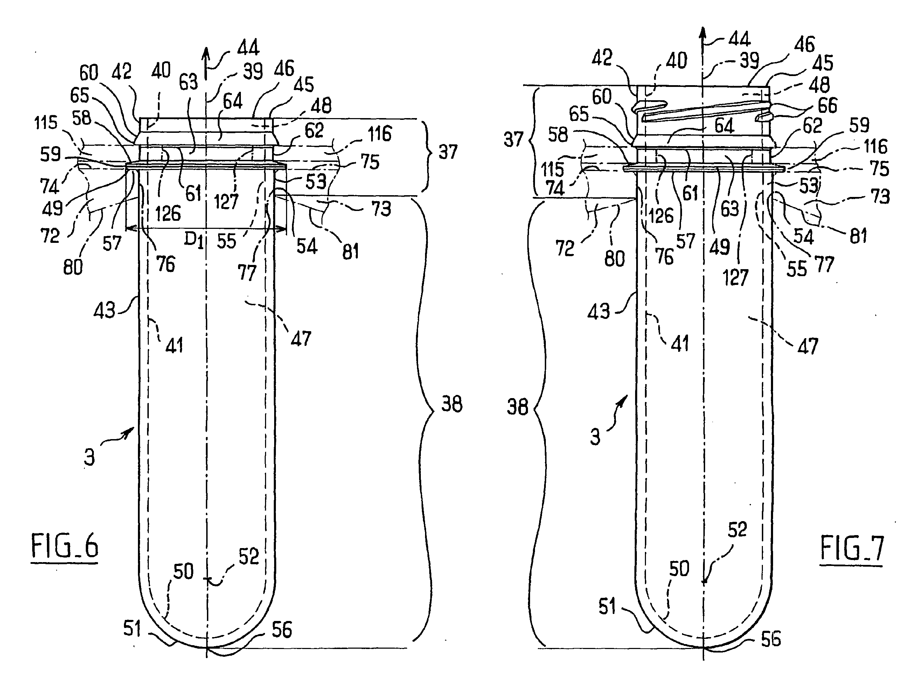

Dans son mode de réalisation illustré, l'installation est propre à convoyer et travailler successivement des préformes 3 d'un type connu en lui-même, dont deux exemples sont illustrés aux figures 6 et 7, et les bouteilles 6 fabriquées par formage de ces préformes, dont un exemple est illustré à la figure 33, étant entendu que l'on ne sortirait pas du cadre de la présente invention en adaptant l'installation qui va être décrite pour appliquer le procédé selon l'invention à des préformes de conception différente, d'une part, et que la conformation des bouteilles obtenues à partir de ces préformes est indifférente au regard de la présente invention, d'autre part.

Les préformes 3 illustrées aux figures 6 et 7 présentent de grandes analogies, si bien qu'elles seront décrites pour partie en commun.

Chacune d'entre elles est réalisée en une seule pièce d'une matière thermoplastique telle que du polyéthylène téréphtalate, par exemple par injection, de façon à présenter une zone de col 37 de conformation définitive, c'est-à-dire que l'on retrouve à l'identique une fois la bouteille 6 terminée, et une zone de corps 38 dont la conformation est provisoire, en ce sens qu'on la modifie de façon à l'expanser au moyen de l'étireuse-souffleuse 4, dont l'association au système de convoyage 1, en un emplacement déterminé de la trajectoire 17, constitue en cet emplacement un poste 27 d'étirage-soufflage, qui est stationnaire suivant la trajectoire 17 et auquel les préformes 3 s'arrêtent lors de leur parcours de cette trajectoire 17 dans le sens 18.

Que l'on se réfère à la préforme 3 ou à la bouteille 6, la zone de col 37 et la zone de corps 38 présentent une forme générale de révolution autour d'un axe 39 vers lequel chacune d'entre elles présente une face périphérique intérieure 40, 41, alors que chacune d'entre elles présente dans le sens d'un éloignement par rapport à cet axe 39 une face périphérique extérieure 42, 43.

Que l'on se réfère à la préforme 3 ou à la bouteille 6, les faces périphériques intérieure 40 et extérieure 42 de la zone de col 37 sont cylindriques de révolution autour de l'axe 39 et raccordées mutuellement, dans un sens 44 de celui-ci, par un bord 45 annulaire, plan, perpendiculaire à l'axe 39, lequel bord 45 délimite à son raccordement avec la face périphérique intérieure 40 un orifice 46 d'accès à l'intérieur 47 de la zone de corps 38 de la préforme 3 comme de la bouteille 6, par l'intérieur 48 de la zone de col 37.

La zone de corps 38 est disposée dans le prolongement direct de la zone de col 37, suivant l'axe 39, en sens opposé au sens 44, si l'on se réfère à la préforme 3. Plus précisément, si l'on se réfère à cette préforme 3, la face périphérique intérieure 41 de la zone de corps 38 est cylindrique de révolution autour de l'axe 39 avec un diamètre identique à celui de la face périphérique intérieure 40 de la zone de col 37 de façon à se raccorder sans transition à cette face périphérique intérieure 40, alors que la face périphérique extérieure 43 est cylindrique de révolution autour de l'axe 39 avec un diamètre légèrement supérieur à celui de la face périphérique extérieure 42 de la zone de col 37 et se raccorde à cette face périphérique extérieure 42 par une collerette 49, annulaire de révolution autour de l'axe 39, qui forme une saillie périphérique, continue circonférentiellement, dans le sens d'un éloignement par rapport à l'axe 39, aussi bien par rapport à la face périphérique extérieure 43 que par rapport à la face périphérique extérieure 42.

A l'opposé de leur raccordement respectivement avec la face périphérique intérieure 40 et avec la face périphérique extérieure 42 de la zone de col 37, les faces périphériques intérieure 41 et extérieure 43 de la zone de corps 38 se raccordent à une face respective de fond 50, 51 respectivement concave et convexe, hémisphérique et centrée en un même point 52 de l'axe 39, à l'intérieur 47 de la zone de corps 38, ce qui ferme celle-ci à l'opposé de l'orifice 46 en référence à l'axe 39, c'est-à-dire en sens opposé au sens 44.

La zone de col 37 et la zone de corps 38 forment ainsi un corps creux, étanche, étanche, dont l'intérieur 47, 48 ne communique avec l'extérieur que par l'orifice 46, que l'on se réfère à une préforme 3 ou à une bouteille 6 avant son bouchage.

La collerette 49 fait partie intégrante de la zone de col 37, c'est-à-dire présente sa conformation définitive dans la préforme 3, de même qu'une partie marginale 53 de la zone de corps 38 immédiatement adjacente à la collerette 49 en sens opposé au sens 44. Cette partie marginale 53, qui sera considérée par la suite comme faisant partie intégrante de la zone de col 37, est délimitée par une plage 54 de la face périphérique extérieure 43 et par une plage 55, correspondant à cette plage 54, de la face périphérique intérieure 41, ces plages 54 et 55 étant l'une et l'autre annulaires de révolution autour de l'axe 39, continues circonférentiellement, et présentant en référence à l'axe 39 des dimensions non référencées, faibles par rapport à celles de la zone de corps 38 mesurées entre ces plages 54, 55 et un point 56 défini par l'intersection de la face de fond 51 avec l'axe 39.

Cette dimension des plages 54, 55, c'est-à-dire celle de la partie 53, est par exemple de l'ordre de quelques millimètres à un centimètre environ, pour une dimension correspondante de la zone de corps 38 de la préforme 3 de l'ordre de 10 cm environ à 15 cm environ, pour un diamètre de la face périphérique extérieure 43 et de la plage 54 de celle-ci de l'ordre de 35 mm à 40 mm et un diamètre de la face périphérique extérieure 42 inférieur d'environ 1 mm à celui de la face périphérique extérieure 43, ces chiffres n'étant indiqués qu'à titre d'exemple non limitatif.

Vis-à-vis de la plage 54 de la face périphérique extérieure 43, la collerette 49 forme un épaulement 57 plan, annulaire de révolution autour de l'axe 39 auquel il est perpendiculaire, cet épaulement 57 étant tourné en sens opposé au sens 44. Par rapport à la face périphérique extérieure 42, la collerette 49 forme également un épaulement 58 annulaire de révolution autour de l'axe 39, mais cet épaulement 58, tourné dans le sens 44, est tronconique de révolution autour de l'axe 39 de façon à se rétrécir dans le sens 44. Dans le sens d'un éloignement par rapport à l'axe 39, les deux épaulements 57 et 58 se raccordent par un chant convexe 59 qui, comme eux, est annulaire de révolution autour de l'axe 39, par rapport auquel ce chant 59 présente un diamètre de l'ordre de 45 mm à 50 mm pour les valeurs indiquées précédemment, ces chiffres étant également indiqués à titre d'exemple non limitatif.

Dans une position décalée dans le sens 44 par rapport à la collerette 49, tout en restant décalée en sens opposé au sens 44 par rapport au bord 25, la face périphérique extérieure 42 de la zone de col 37 présente un bourrelet 60 annulaire de révolution autour de l'axe 39 et continu circonférentiellement. Ce bourrelet 60, placé en saillie par rapport à la face périphérique extérieure 42 dans le sens d'un éloignement par rapport à l'axe 39, présente en regard de l'épaulement 58 de la collerette 49, c'est-à-dire en sens opposé au sens 44, un épaulement 61 annulaire, plan, de révolution autour de l'axe 39 auquel il est perpendiculaire, de façon à définir avec l'épaulement 58 de la collerette 49 et avec une plage annulaire 62 de la face périphérique extérieure 42, située entre les deux épaulements 58 et 61, une gorge 63 annulaire de révolution autour de l'axe 39 et continue circonférentiellement. Dans le sens 44, le bourrelet 60 est délimité par une face périphérique extérieure 64 tronconique de révolution autour de l'axe 39 et se rétrécissant dans le sens 44, l'épaulement 61 et cette face périphérique extérieure 64 se raccordant mutuellement le long d'un chant convexe 65 annulaire de révolution autour de l'axe 39 avec un diamètre intermédiaire entre les diamètres respectifs de la face périphérique extérieure 42 et du chant 59 de la collerette 49.

Comme l'ensemble de la zone de col 37, c'est-à-dire en particulier comme la partie 53 et la collerette 49 de celle-ci, le bourrelet 60 présente sa conformation définitive, c'est-à-dire ne subit pas de modification lors de la transformation de la préforme 3 en bouteille 6.

Les deux préformes 3 illustrées respectivement aux figures 6 et 7 ne diffèrent l'une de l'autre que par la conformation de la zone de col 37 entre le bourrelet 60 et le bord 45, en relation avec un mode de bouchage projeté de la bouteille 6.

A la figure 6, on a illustré un mode de réalisation plus spécialement adapté à un bouchage de la bouteille au moyen d'un opercule thermocollé et, à cet effet, la face périphérique extérieure 42 de la zone de col 37 présente entre le bourrelet 60 et le bord 45, suivant l'axe 39, une dimension de l'ordre de quelques millimètres, par exemple de l'ordre de 3 mm à 5 mm, ce qui correspond approximativement à la dimension correspondante de la plage 62 constituant le fond de la gorge 63, étant entendu que ces chiffres sont indiqués à titre d'exemple non limitatif. Si l'on excepte la présence du bourrelet 60, la face périphérique extérieure 42 est alors totalement lisse.

Dans le cas de la figure 7, en vue d'un bouchage au moyen d'un bouchon vissé, la face périphérique extérieure 42 présente suivant l'axe 39, entre le bourrelet 60 et le bord 45, une dimension largement supérieure, par exemple de l'ordre de 10 mm à 15 mm, et elle présente, en saillie dans le sens d'un éloignement par rapport à l'axe 39, plusieurs filets hélicoïdaux 66 de même conformation géométrique, répartis angulairement autour de l'axe 39.

De telles conceptions de préformes 3 sont connues en elles-mêmes, en particulier en ce qui concerne la zone de col 37, et ne seront pas décrites davantage.

Pour la suite de la description, on choisira comme exemple de préforme 3 celle qui est illustrée à la figure 6, étant entendu qu'un Homme du métier pourra sans difficulté adapter les dispositions décrites au cas d'une préforme 3 conforme à la figure 7.

De façon par contre caractéristique de la présente invention, on utilise la zone de col 37, de conformation définitive, pour assurer successivement le convoyage ou transfert de la préforme 3 puis celui de la bouteille 6 formée à partir de celle-ci le long de la trajectoire 17, dans le sens 18, pour les amener successivement aux différents postes de travail 20 à 32 puis hors de ces postes successifs de travail, au moyen d'une succession, suivant la trajectoire 18, d'une pluralité de dispositifs identiques ou similaires, dont le détail va être décrit en référence à la figure 8 et le fonctionnement en référence aux figures 9 à 15, en relation avec un espace 36 précédant immédiatement le poste 31 auquel se trouve le système de bouchage 7, en référence au sens 18, et avec le transfert des bouteilles 6 de cet espace 36 à ce poste 31, étant entendu que l'on retrouve ces dispositifs à l'identique, avec un fonctionnement identique, en association avec chacun des postes de travail 28 à 32 suivant le poste d'étirage-soufflage, avec un espace 236 intermédiaire entre le poste 31 et un poste 32 où se trouve le système 8 d'étiquetage et, avec quelques variantes, qui seront détaillées par la suite, en association avec chacun des autres postes de travail et espaces.

Ces figures 8 à 15, comme l'ensemble des figures, portent sur un exemple de mise en oeuvre du procédé selon lequel celui-ci est mis en oeuvre simultanément pour le formage et le remplissage de quatre bouteilles 6 identiques à partir de quatre préformes 3 identiques, et illustrent un système de convoyage 1 propre à transférer simultanément, dans le sens 18, des groupes 84 de quatre préformes 3 et des groupes 85 de quatre bouteilles, à des postes de travail 20 à 32 propres à travailler simultanément toutes les préformes 3 d'un même groupe 84 ou toutes les bouteilles 6 d'un même groupe 85, respectivement, de façon identique.

Un Homme du métier déduira aisément, de la description qui va suivre de ce système de convoyage 1 et de ces postes de travail 20 à 32, la conception d'un système de convoyage et de postes de travail adaptés au traitement de groupes d'un nombre de préformes 3 ou de bouteilles 6 différent de quatre, à savoir en particulier de préformes 3 ou de bouteilles 6 à l'unité.

De façon générale, le système de convoyage 1 est conçu pour maintenir en permanence les préformes 3 et les bouteilles 6 dans une orientation déterminée, à savoir dans l'exemple illustré une orientation dans laquelle leur axe 39 est vertical de sens 44 ascendant, de telle sorte que la zone de corps 38 se situe en dessous de la zone de col 37 et, plus précisément, pende en dessous de celle-ci pendant les transferts, qui sont assurés par préhension de cette zone de col 37 exclusivement, ainsi qu'aux différents postes de travail 20 à 32, comme il apparaîtra par la suite.

Ainsi, les axes 39 des préformes 3 et des bouteilles 6 se déplacent en restant dans un plan vertical 67 qui, en une vue de dessus, définit la trajectoire rectiligne 17 et qui constitue un plan moyen de symétrie pour le système de convoyage 1.

Ce système de convoyage 1 met en oeuvre deux jeux d'outillage dont chacun est respectivement symétrique par rapport au plan 67, à savoir :
- un jeu d'outillage 68 fixe par rapport à un châssis 16 commun à l'ensemble de l'installation, c'est-à-dire en particulier au système de convoyage 1 et à l'ensemble des postes de travail 20 à 32, ce jeu d'outillage fixe 68 maintenant les préformes 3 et les bouteilles 6 en dessous de la collerette 49 aux différents postes de travail 20 à 26 et 28 à 32, à l'exception du poste d'étirage-soufflage 27 auquel ce maintien de la zone de col 37 en dessous de la collerette 49 est provisoirement assuré par d'autres moyens, ainsi que tout au long de la trajectoire 17 en dehors des postes de travail 20 à 32, à savoir en particulier au niveau des espaces 33 à 36 et 236 et du poste de transfert 9, et
- un jeu d'outillage mobile 69, monté sur des chariots 70, 71 ou tels que 181 assurant par un mouvement d'aller-retour parallèlement à la trajectoire 17 les transferts des préformes 3 et des bouteilles 6 en les maintenant par la gorge 63 de la zone de col 37.

Plus précisément, le jeu d'outillage fixe 68 comporte deux soles de glissement 72, 73 fixes par rapport au châssis 16 de l'installation et disposées respectivement de part et d'autre du plan 67, symétriquement l'une de l'autre par rapport à celui-ci.

Ces deux soles de glissement 72, 73 présentent vers le haut une face supérieure respective 74, 75 plane, coplanaire de l'une à l'autre et horizontale en relation avec une horizontalité de la trajectoire 17. Vers le plan 67, chacune de ces faces supérieures 74, 75 se raccorde à un chant vertical respectif 76, 77, les deux chants 76, 77 étant parallèles au plan 67, tournés l'un vers l'autre, et mutuellement espacés, perpendiculairement au plan 67, d'une distance sensiblement égale au diamètre de la plage annulaire 54 de la partie 53 de la zone de col 37, dans des conditions propres à assurer un coulissement de la préforme 3 ou de la bouteille 6 suivant la trajectoire 17 avec appui de l'épaulement 57 de la collerette 49 vers le bas sur les faces supérieures 74 et 75 et de la plage annulaire 54 sur les chants 76 et 77, dans le sens d'un éloignement par rapport au plan 67, cet appui étant dans les deux cas propre à assurer un guidage de la préforme 3 ou de la bouteille 6 suivant la trajectoire 17 pratiquement sans jeu, c'est-à-dire un maintien de l'axe 39 sensiblement dans le plan 67. Vers le bas, chacun des chants 76, 77 se raccorde à une face inférieure 78, 79, plane et horizontale, de la sole de glissement 72, 73, par l'intermédiaire d'un biseau respectif 80, 81 conçu pour éviter tout contact entre les soles de glissement 72, 73 et la zone de corps 38 des préformes 3 ou des bouteilles 6 ; la conformation, à cet effet, des biseaux 80 et 81 relève des aptitudes normales d'un Homme du métier.

Les soles de glissement 72 et 73 s'étendent ainsi fonctionnellement tout au long de la trajectoire 17, sauf au niveau du poste d'étirage-soufflage 27, étant entendu que chacune d'entre elles peut être constituée de plusieurs pièces se succédant suivant la trajectoire 17, en particulier pour des raisons de commodité de fabrication.

Contrairement aux soles de glissement 72 et 73, qui sont démunies de toute encoche ou, plus généralement, de tout creux ou relief susceptible de constituer un obstacle à la progression des préformes 3 et des bouteilles 6 suivant la trajectoire. 17, le jeu d'outillage mobile 69 comporte, respectivement de part et d'autre du plan 67, des encoches 82, 83 présentant, lorsqu'elles sont vues en plan, la forme d'un arc de cercle d'un diamètre adapté à celui de la face périphérique extérieure 42 de la zone de col 37 afin d'assurer une préhension de cette zone de col 37 par la gorge 63, en épousant la plage 62 de fond de celle-ci et les épaulements 58 et 61 en des positions diamétralement opposées en référence à l'axe 39 et plus précisément symétriques l'une de l'autre par rapport au plan 67, respectivement sur moins de la moitié d'une circonférence, de façon temporaire, pour procéder à un transfert des préformes 3 et des bouteilles 6, pas à pas, dans le sens de la trajectoire 17, en fonctionnant suivant un cycle carré alternatif qui sera détaillé par la suite.

En relation avec un mode de mise en oeuvre de l'invention selon lequel on travaille simultanément un groupe 84 de quatre préformes 3 ou un groupe 85 de quatre bouteilles 6 à chaque poste de travail 20 à 32, le jeu d'outillage 69 est conçu pour amener successivement, pas à pas, chaque groupe 84 de préformes 3 à chacun des postes 20 à 26 de travail de la préforme, puis hors du dernier 26 de ces postes pour amener ensuite les préformes 3 pas à pas, par groupe 84, au poste d'étirage-soufflage des préformes 3 puis, à partir de ce poste, à chacun des postes 28 à 32 de travail de la bouteille et enfin au poste d'évacuation 9.

Dans chacun des groupes 84 de préformes 3, jusqu'au poste 26, les axes 39 de préformes 3 sont mutuellement espacés, suivant la trajectoire 17, d'une même distance e₁ supérieure, à savoir de préférence seulement légèrement supérieure, au diamètre maximal d'une préforme 3 en référence à l'axe 39, c'est-à-dire au diamètre D₁ du chant 59 de la collerette 49, afin d'éviter tout contact entre les préformes 3 d'un même groupe. De même, dans un groupe 85 de bouteilles 6, et ceci dès le poste d'étirage-soufflage 27 auquel sont formées ces bouteilles 6, les axes 39 sont mutuellement espacés, suivant la trajectoire 17, d'une distance e₂ supérieure à e₁, à savoir supérieure, ou.de préférence seulement légèrement supérieure, au diamètre maximal D₂ d'une bouteille 6, c'est-à-dire plus précisément de la zone de corps 38 de celle-ci.

De même, les axes 39 des préformes 3 situées en tête, en référence au sens 18, de groupes 84 successifs sont mutuellement espacés, suivant la trajectoire 17, d'un pas p₁ supérieur, à savoir de préférence seulement légèrement supérieur, à la distance e₁ multipliée par le nombre de préformes 3 dans chaque groupe 84, à savoir quatre dans l'exemple illustré, sur l'ensemble du parcours de la trajectoire 17 jusqu'au poste 26, y compris celui-ci, alors que, au poste 27 d'étirage-soufflage ainsi qu'aux différents postes 28 à 32 de travail des bouteilles 6 et au poste d'évacuation 9, les axes 39 des préformes ou bouteilles de têtes de groupes 85 successifs sont mutuellement espacés, suivant la trajectoire 17, d'un pas p₂ dont la valeur est égale au produit de l'espacement e₂ par le nombre de préformes 3 ou de bouteilles 6 dans un même groupe 84, 85, à savoir quatre dans l'exemple illustré.

Le pas p₂ étant ainsi supérieur au pas p₁, de même que la distance d'espacement e₂ est supérieure à la distance d'espacement e₁, entre les postes de travail 26 et 27 est prévu un dispositif de changement de pas 86, ainsi que d'écartement mutuel entre les préformes 3 d'un même groupe 84, lequel chevauche le poste de travail 26 et l'espace 34 intermédiaire entre les postes de travail 26 et 27 et sera décrit ultérieurement en référence aux figures 20 à 23 et, dans une variante, en référence aux figures 26 et 27.

Les valeurs de pas p₁ et p₂ seront par la suite considérées comme des valeurs de pas entre groupes successifs 84 de préformes 3 et 85 de bouteilles 6, l'espace 33 et les postes 26 de travail des préformes 3 respectant le pas p₁ alors que le poste 27 d'étirage-soufflage, les postes 28 à 32 de travail des bouteilles 6, le poste d'évacuation 9 et les espaces 34 à 36 et 236 respectent le pas p₂, dans l'un et l'autre cas suivant la trajectoire 17.

Une paire de chariots 70, 71 est associée, au cours d'une phase initiale du transfert illustrée aux figures 8 et 9 en ce qui concerne l'espace 36, respectivement à chacun des postes de travail 20 à 25 et 27 à 32, au poste de prise en charge 19, et à chacun des espaces 33, 35, 36 et 236, le poste 26 précédant l'espace 34 et correspondant au dispositif 86 de changement de pas constituant un cas particulier qui sera décrit ultérieurement, en référence aux figures 20 à 25.

En relation avec la répartition précitée des postes de travail et des espaces suivant la trajectoire 17, chacun des chariots 70, 71 présente suivant cette trajectoire 17 une dimension sensiblement égale, ou légèrement inférieure, à la valeur respective du pas, à savoir p₁, en ce qui concerne les chariots 70, 71 respectivement associés au poste de prise en charge 19, à l'espace 33, aux postes de travail 20 à 25, ou p₂ en ce qui concerne les chariots 70, 71 respectivement associés aux espaces 34 à 36 et 236 et aux postes de travail 28 à 32.

Les chariots 70 et 71 présentent cependant la même conception, illustrée à la figure 8 où l'on voit que chacun présente une face inférieure plane 87, 88, en appui à plat sur la face supérieure 74, 75 de l'une, respective, des soles 72 et 73, les chariots 70 étant intégralement placés au-dessus de la sole 72 et les chariots 71 intégralement placés au-dessus de la sole 73. Chacune de ces faces 87, 88 constitue la face inférieure d'un empilage respectif de plaques 89, 90, présentant par ailleurs une face supérieure plane respective 91, 92, horizontale, raccordée à la face inférieure respectivement correspondante 87, 88, vers le plan 67, par un chant respectif 93, 94 plan, vertical, parallèle au plan 67 par rapport auquel les chants 93 et 94 sont mutuellement symétriques. Par sa face supérieure 91, 92, chacun des empilages de plaques 89, 90 porte solidairement un caisson respectif 95, 96, les deux caissons 95 et 96 étant mutuellement identiques, symétriques l'un de l'autre par rapport au plan 67 et présentant respectivement, en coupe par un quelconque plan perpendiculaire à la trajectoire 17, une section en U inversé définissant avec la face supérieure 91, 92 de l'empilage de plaques 89, 90 respectivement correspondant une cavité 97, 98 de section rectangulaire, allongée perpendiculairement au plan 67.

Pour chacun des chariots 70, 71, l'empilage de plaques 89, 90 et le caisson 95, 96 s'étendent sur la totalité de la dimension p₁ ou p₂, respectivement, suivant la trajectoire 17, y compris en ce qui concerne la cavité respective 97, 98.

Dans le sens d'un éloignement par rapport au plan 67, chacun des caissons 95, 96 porte solidairement une pluralité de douilles 99, 100 disposées suivant un même axe respectif 101, 102, parallèle à la trajectoire 17, les douilles 99 de tous les chariots 70 et les douilles 100 de tous les chariots 71 étant guidées au coulissement, suivant l'axe respectif 101, 102 par rapport au châssis 16 de l'installation, sur une tige respective de guidage 103, 104, portée solidairement par le châssis 16 de la machine, au-dessus des faces supérieures 91, 92 des empilages de plaques 89, 90, respectivement de part et d'autre du plan 67. Ces tiges 103, 104 s'étendent sur la totalité de la dimension de l'installation suivant la trajectoire 17 et, comme il apparaîtra plus loin, sont doublées au niveau du poste 26 et de l'espace 34, correspondant au dispositif de changement de pas 86, par une autre tige telle que 182 qui leur est parallèle.

Tous les chariots 70 situés d'un même côté du plan 67, et tous les chariots 71 situés de l'autre côté de ce plan 67, peuvent être déplacés à l'unisson, du pas correspondant p₁ ou p₂, en va-et-vient suivant la trajectoire 17, au moyen d'un moteur pas à pas, par exemple de type linéaire, à savoir un moteur 105 travaillant suivant le pas p₁, associé aux chariots 70 situés d'un même côté du plan 67 au niveau des postes 19 à 25 et de l'espace 33, d'un moteur 106 fonctionnant également suivant le pas p₁ et associé aux chariots 71 situés de l'autre côté du plan 67, au niveau des postes 19 à 25 et de l'espace 33, d'un moteur 107 fonctionnant au pas p₂ et associé aux chariots 70 disposés d'un côté du plan 67 et correspondant aux postes 27 à 32 et aux espaces 34 à 36 et 236, et d'un moteur 108 fonctionnant également au pas p₂ et associé aux chariots 71 situés de l'autre côté du plan 67 et correspondant également aux postes 27 à 32 ainsi qu'aux espaces 34 à 36 et 236. Chacun des moteurs 105, 106, 107, 108 est relié aux chariots 70, 71 qui lui correspondent, par des moyens qui ne seront pas détaillés et dont la conception relève des aptitudes normales d'un Homme du métier, pour déplacer à l'unisson, dans un sens ou dans l'autre, du pas respectif p₁ ou p₂, l'ensemble des chariots qui lui sont ainsi associés.

A l'intérieur de chacune des cavités 97, 98 sont disposés deux boudins gonflables qui s'étendent sur toute la dimension que cette cavité 97, 98 présente parallèlement à la trajectoire 17, à savoir la dimension p₁ pour les postes 19 à 25 et l'espace 33 et la valeur p₂ pour les postes 27 à 32 ainsi que pour les espaces 34 à 36 et 236.

Les deux boudins d'une même cavité 97, 98 sont mutuellement juxtaposés suivant une direction perpendiculaire au plan 67, par l'intermédiaire d'une barre respective 113, 114 parallèle au plan 67 et s'étendant également sur la totalité de la dimension, respectivement p₁ ou p₂, que la cavité 97, 98 présente parallèlement à la trajectoire 17.

Perpendiculairement à la face supérieure 91, 92 de l'empilage de plaques 89, 90 respectivement correspondant, chaque barre 113, 114 présente une dimension sensiblement identique à celle de la cavité 97, 98 respectivement correspondante, alors qu'elle présente perpendiculairement au plan 67 une dimension sensiblement inférieure à celle de cette cavité, si bien que chaque barre 113, 114 peut coulisser perpendiculairement au plan 67, dans le sens d'un éloignement ou d'un rapprochement par rapport à celui-ci, à l'intérieur de la cavité 97, 98 respectivement correspondante.

Les boudins 109 à 112 sont quant à eux choisis d'une conformation telle qu'ils occupent intégralement l'espace laissé disponible, à l'intérieur de la cavité 97, 98 correspondante, par la barre 113, 114 correspondante et que :
- en provoquant, à l'intérieur de la cavité 97, un gonflage du boudin 109 en autorisant un dégonflage du boudin 110, on provoque une translation de la barre 113 dans le sens d'un éloignement par rapport au plan 67, et inversement, et que
- en provoquant à l'intérieur de la cavité 98 un gonflage du boudin 111 en autorisant un dégonflage du boudin 112, on provoque un coulissement de la barre 114 dans le sens d'un éloignement par rapport au plan 67, perpendiculairement à celui-ci, et inversement.

Chaque barre 113, 114 se comporte ainsi, à l'intérieur de la cavité 97, 98 correspondante, comme un piston d'un vérin pneumatique à double effet.

Suivant des plans moyens non illustrés, perpendiculaires à la trajectoire 17 et régulièrement répartis suivant l'espacement e₁ en ce qui concerne les chariots 70, 71 associés aux postes 19 à 25 et à l'espace 33, et suivant l'espacement e₂ en ce qui concerne les chariots 70, 71 associés aux postes de travail 27 à 32 et aux espaces 34 à 36 et 236, chaque empilage de plaques 89, 90 présente une lumière telle que 117, oblongue perpendiculairement au plan 67 et reliant la face supérieure 91, 92 de l'empilage de plaques 89, 90, à une cavité respective telle que 118, disposée suivant le même plan moyen que la lumière telle que 117 et, comme elle, oblongue perpendiculairement au plan 67. Cette cavité telle que 118, aménagée dans l'empilage de plaques 89, 90 correspondant, débouche vers le plan 67 et constitue une glissière de guidage, suivant une direction perpendiculaire à ce plan 67, pour un mors 115, 116, placé pour partie à l'intérieur de la cavité telle que 118 et pour partie en saillie hors de celle-ci, par rapport au chant 93, 94 de l'empilage de plaques 89, 90 correspondant, vers le plan 67, au-dessus de la face supérieure 74, 75 de la sole 72, 73 respectivement située du même côté du plan 67.

Comme le comprendra aisément un Homme du métier, chaque mors 115, 116 et chaque cavité telle que 118 présentent dans tout plan de coupe parallèle au plan 67 une section sensiblement identique, en l'espèce rectangulaire et oblongue parallèlement à la trajectoire 17, de façon à assurer le guidage précité des mors 115, 116 perpendiculairement au plan 67, par rapport à l'empilage de plaques 89, 90 respectivement correspondant, sans autre possibilité de déplacement relatif.

A l'intérieur de chaque cavité telle que 118, chaque mors 115, 116 est lié rigidement à la barre 113, 114 respectivement correspondante par une jambe de force telle que 119 traversant de part en part la lumière telle que 117, dont les limites telles que 120 et 121, respectivement vers le plan 67 et dans le sens d'un éloignement par rapport à celui-ci, constituent avantageusement pour la jambe de force telle que 119 une butée limitant un déplacement conjoint des mors 115 et de la barre 113, ou des mors 116 et de la barre 114, respectivement, dans le sens d'un rapprochement par rapport au plan 67 et dans le sens d'un éloignement par rapport à celui-ci, lors des gonflage et dégonflage des boudins 109 à 112. Ces positions limites seront détaillées par la suite en ce qui concerne les mors 115 et 116.

Au moins dans une zone extrême tournée vers le plan 67 et placée en saillie par rapport au chant 93, 94 de l'empilage de plaques 89, 90 respectivement, chaque mors 115, 116 présente la forme d'une plaque parallèle à la face supérieure 74, 75 de la sole 72, 73 respectivement située du même côté du plan 67. Plus précisément, chaque mors 115, 116 présente en regard de cette face supérieure respective 74, 75 une face inférieure 122, 123 plane, parallèle à la face 74, 75 et espacée de celle-ci d'une distance correspondant sensiblement à celle qui sépare l'un de l'autre, parallèlement à l'axe 39, le raccordement de l'épaulement 58 de la collerette 49 d'une préforme 3 à la face périphérique extérieure 42 de la zone de col 37 de celle-ci, et le raccordement de l'épaulement 57 de cette collerette 49 à la face périphérique extérieure 43, à savoir plus précisément à la plage 54 de cette face périphérique extérieure 43 qui jouxte directement la collerette 49.

Au moins dans cette partie extrême, chaque mors 115, 116 présente par ailleurs une face supérieure plane 124, 125 parallèle à la face inférieure respective 122, 123 et distante de celle-ci d'une épaisseur correspondant sensiblement à la distance qui sépare mutuellement, parallèlement à l'axe 39, les raccordements respectifs de l'épaulement 58 de la collerette 49 et de l'épaulement 61 du bourrelet 60 avec la face périphérique extérieure 42 de la zone de col 37 d'une préforme 3.

En regard l'un de l'autre, perpendiculairement au plan 67, les mors 115, 116 présentent un chant respectif 126, 127 plan, parallèle au plan 67, et dans ce chant 126, 127 est creusée l'une, respective, des encoches 82, 83 précitées, sous forme d'une partie de cylindre de révolution autour d'un axe qui, dans une position de préhension d'une préforme 3 ou d'une bouteille 6, illustrée par exemple à la figure 8, à propos d'une bouteille 6, est commun à deux encoches 82 et 83 et coïncide dans le plan 67 avec l'axe 39 de cette préforme 3 ou de cette bouteille 6.

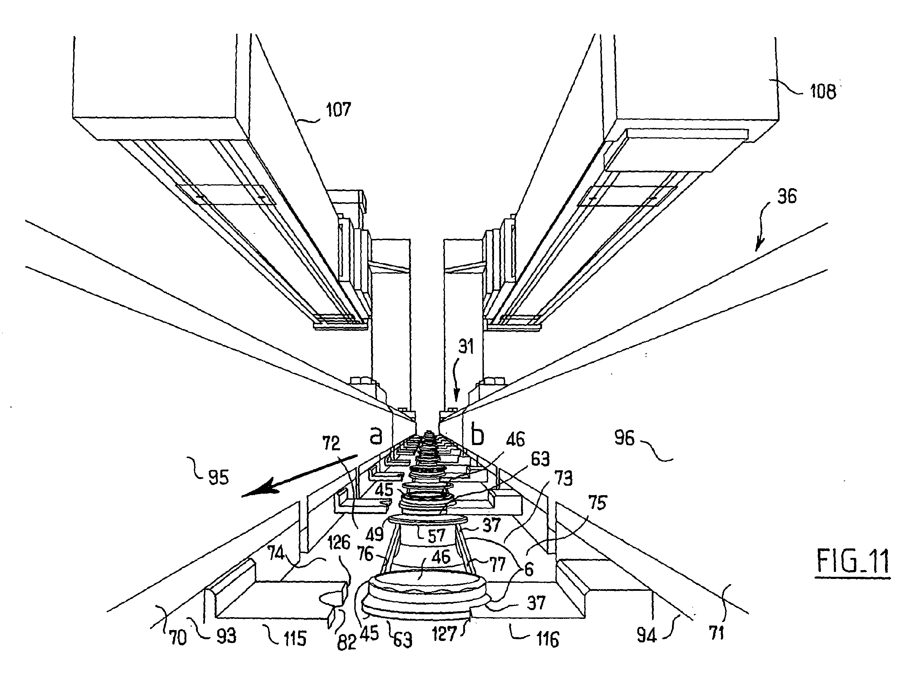

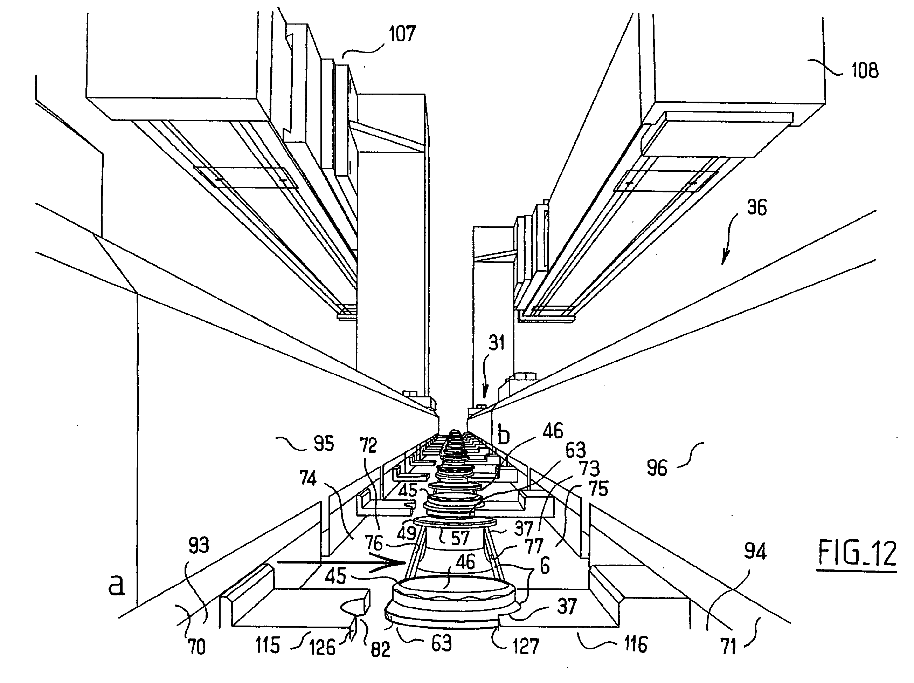

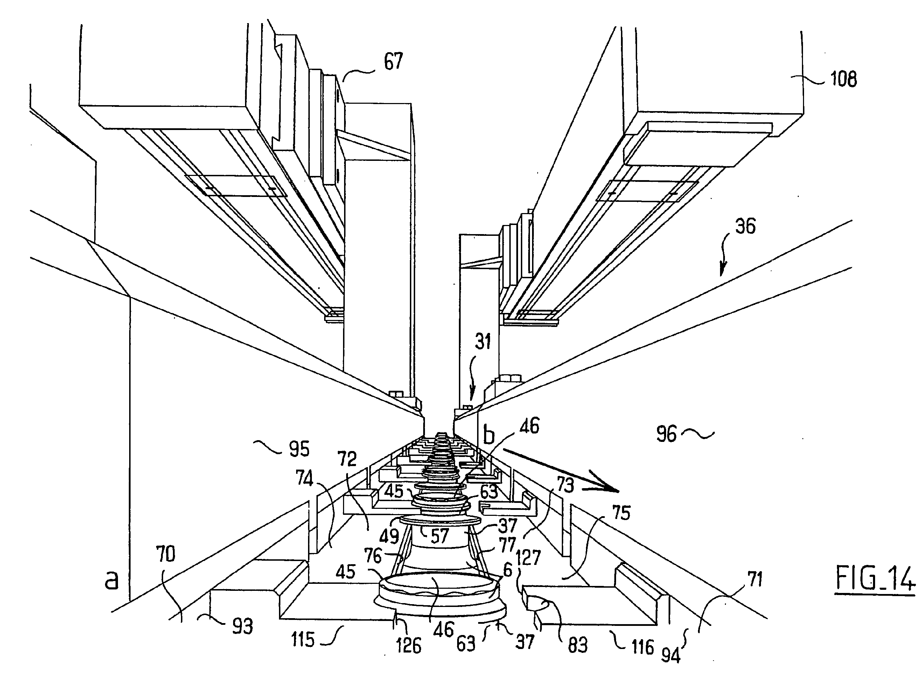

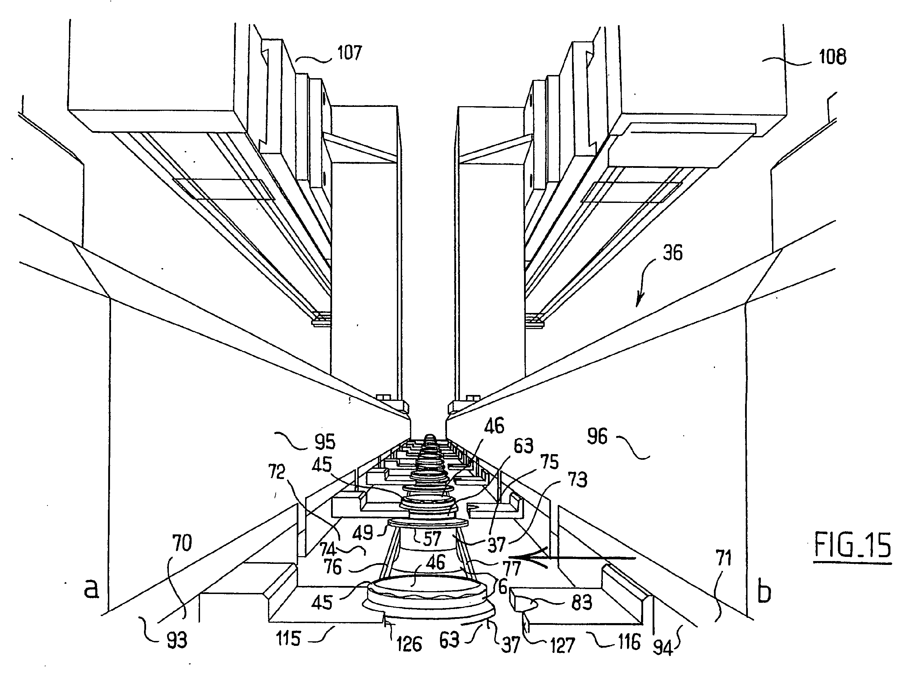

Les limites imposées au coulissement des mors 115, 116 perpendiculairement au plan 67, par butée de la jambe de force telle que 119 contre l'une des limites telles que 120, 121 de la lumière telle que 117 associée, sont telles que chaque mors 115, 116 puisse évoluer par effet de gonflage et de dégonflage des boudins 109 à 112 entre deux positions limites, par rapport au chariot 70, 71 correspondant, à savoir :
- lorsque les deux chariots 70, 71 correspondant à un même poste ou espace sont placés dans des positions mutuellement symétriques par rapport au plan 67 et que leurs mors 115, 116 se correspondent par paires, symétriquement par rapport à ce plan 67, de telle sorte que leurs plans moyens coïncident par paires et incluent l'axe 39 de la zone de col 37 d'une préforme 3 ou d'une bouteille 6, la position limite précitée de préhension, dans laquelle les mors 115, 116 de chaque paire s'engagent par l'encoche correspondante 82, 83 dans la gorge 63 de la zone de col 37 de la préforme 3 ou de la bouteille 6 pour retenir rigidement cette préforme 3 ou cette bouteille 6 en épousant la gorge 63 sur une partie de sa circonférence respectivement de part et d'autre du plan 67, dans des positions mutuellement symétriques.par rapport à celui-ci et par conséquent diamétralement opposées en référence à l'axe 39, comme le montrent par exemple les figures 8, 9, 10, 13 et 18 en référence à une bouteille 6, et
- une position limite respective de libération de la zone de col 37 de la préforme 3 ou de la bouteille 6, dans laquelle leur chant 126, 127 est éloigné du plan 67 d'une distance supérieure au rayon de la face périphérique extérieure 42 de la zone de col 37 de façon à libérer la préforme 3 ou la bouteille 6 vis-à-vis d'un déplacement suivant la trajectoire 17, ce que l'on a illustré par exemple aux figures 11 et 12 en ce qui concerne les mors 115, aux figures 14 et 15 en ce qui concerne les mors 116 et à la figure 19 en ce qui concerne l'ensemble des mors 115 et 116.

Compte tenu de l'utilisation de boudins gonflables 109 à 112 associés par paire à chaque chariot 70, 71, pour provoquer un passage des mors 115, 116 de l'une à l'autre des positions limites précitées, tous les mors 115, 116 d'un même chariot 70, 71 passent simultanément de l'une à l'autre de celles-ci, alors que ce passage peut s'effectuer à des instants différents, d'un chariot à un autre.

Le jeu d'outillage à encoches 69, comportant en particulier l'ensemble des chariots 70 situés d'un même côté du plan 67 et l'ensemble des chariots 71 situés de l'autre côté du plan 67, avec les mors 115, 116 respectivement correspondants, est commandé de façon synchronisée avec le fonctionnement des différents postes de travail 20 à 32 et du poste de prise en charge 19, par des moyens de commande synchronisée 228 dont la réalisation relève des aptitudes normales d'un Homme du métier, de telle sorte que les préformes 3 et les bouteilles 6, et plus précisément les groupes 84 de préformes 3 et les groupes 85 de bouteilles 6 avancent simultanément pas à pas, respectivement selon le pas p₁ et selon le pas p₂, dans le sens 18 de la trajectoire 17, par accomplissement simultané, répétitif, d'un cycle carré par les côtés droit et gauche de l'outillage supérieur à encoches 69, ces côtés droit et gauche s'entendant par référence au plan 67 et au sens 18 de parcours de la trajectoire 17 et désignant respectivement l'ensemble des chariots 70 et des mors associés 115 situés d'un côté du plan 67 et l'ensemble des chariots 71 et des mors 116 situés de l'autre côté de ce plan 67, tels qu'ils sont vus par exemple à la figure 8 et aux figures 9 à 15 en référence auxquelles ce cycle va être décrit à présent, tel qu'il s'accomplit lors du transfert des bouteilles 6 de l'espace 36 au poste 31 de bouchage, étant entendu qu'un cycle identique s'effectue simultanément pour le transfert des préformes 3, selon le pas p₁, du poste 19 de prise en charge à l'espace 33 et, selon le pas p₂, du poste 37 d'étirage-soufflage à l'espace 35 et, successivement, aux postes 28 à 30 constituant la station 5 de remplissage, à l'espace 36, au poste 31 auquel se situe le système 7 de bouchage, à l'espace 236, au poste 32 auquel se situe le système 8 d'étiquetage, et enfin au poste 9 d'évacuation, alors que ce cycle s'accomplit simultanément, mais selon des variantes, qui seront décrites par la suite, dans le passage des mors 115 et 116 de l'une à l'autre de leurs positions limites, pour le transfert des préformes 3 et des bouteilles 6 successivement aux autres postes de travail 20 à 27 ainsi qu'à l'espace 35 qui précède immédiatement le poste 27 dans le sens 18.

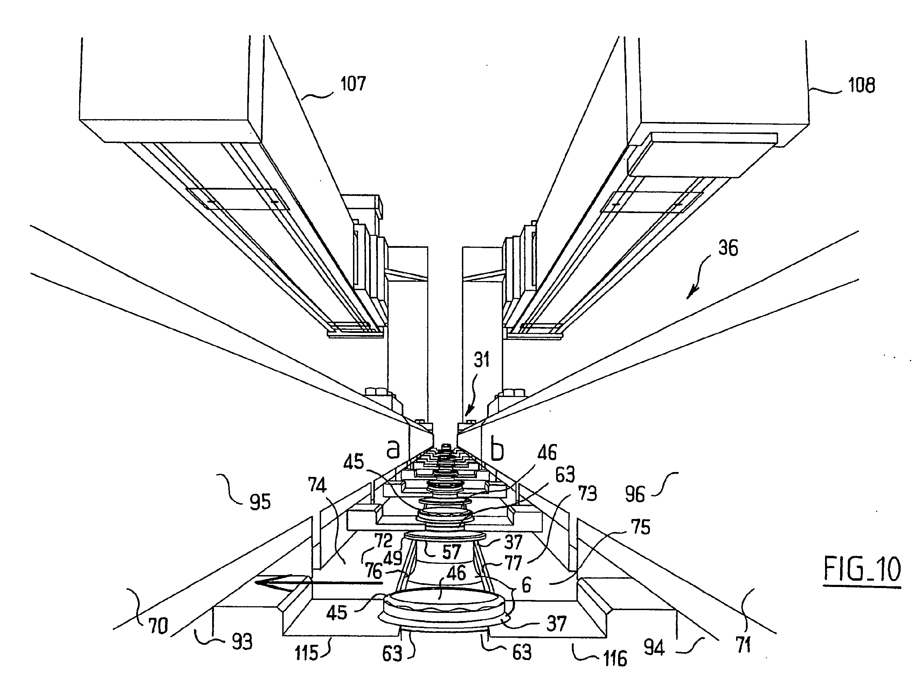

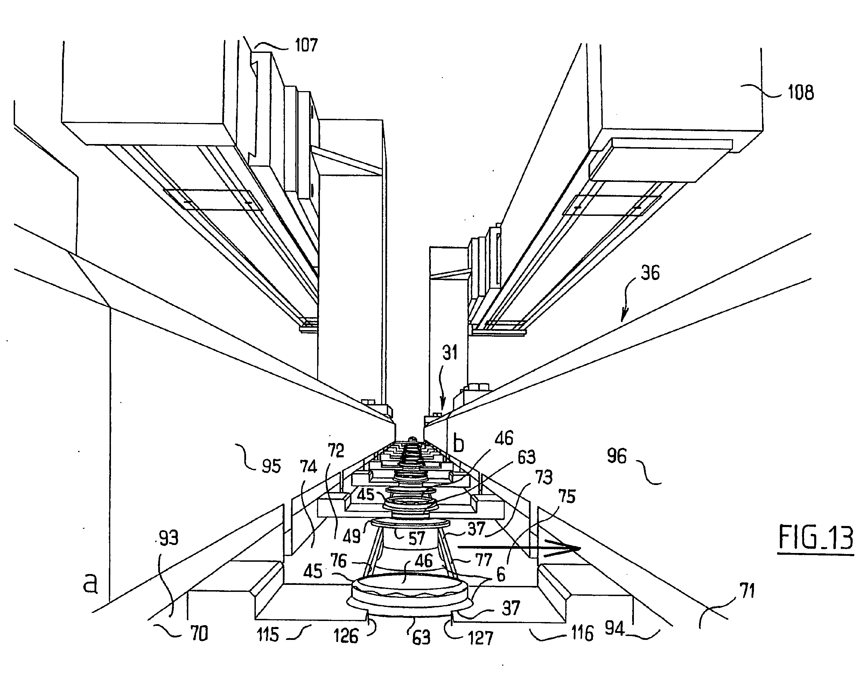

Il ressort des figures 9 à 15 que les côtés droit et gauche de l'outillage à encoches supérieur 69 fonctionnent suivant un cycle répétitif composé des phases suivantes :
- à partir d'un état initial, illustré à la figure 9, dans lequel les deux chariots 70 et 71, arrêtés au poste de travail ou à l'espace auquel ils sont associés, à savoir ici l'espace 36, dans une position parfaitement déterminée suivant la trajectoire 17, de même que les mors 115 et 116, en position de préhension, sont appariés par symétrie mutuelle par rapport au plan 67, c'est-à-dire alors qu'il y a serrage des préformes 3 ou des bouteilles 6 d'un groupe 84, 85 arrêté à ce poste ou espace, à savoir ici des bouteilles 6 d'un groupe 85 arrêté à l'espace 36, par leur zone de col 37, on procède à une avance synchronisée, d'un pas p₁ ou p₂ dans le sens 18, des outillages droit et gauche, c'est-à-dire de l'ensemble des chariots 70 et 71 et des mors 115 et 116, sous l'action des moteurs 105 à 108, comme le montre la figure 9 illustrant le début de cette phase, pendant laquelle le groupe 85 de bouteilles 6 quitte l'espace 36, et la figure 10 illustrant la fin de cette phase, à laquelle ce groupe 85 parvient au poste de bouchage 31, dans une position à nouveau parfaitement déterminée suivant la trajectoire 17 ;
- alors que les chariots 70 et 71 sont à l'arrêt après ce franchissement d'un pas p₁ ou p₂, on procède au desserrage de l'outillage gauche par passage de l'ensemble des mors 115 à leur position de libération de la zone de col 37 de chaque préforme 3 et de chaque bouteille 6, comme on l'a illustré à la figure 11, puis à un retour de l'outillage gauche, c'est-à-dire de l'ensemble des chariots 70, d'un pas p₁ ou p₂, en sens opposé au sens 18, alors que les préformes 3 et les bouteilles 6, à savoir ici les bouteilles 6 alors placées au poste 31, restent immobiles puisqu'elles restent retenues par les mors 116 en position de préhension, du côté droit, et par appui de l'épaulement 57 et de la plage 54, du côté gauche, respectivement vers le bas et dans le sens d'un éloignement par rapport au plan 67, contre la sole 72, comme il ressort de l'examen de la figure 11 ;
- alors que les chariots 70 et 71, à nouveau immobiles, ici à l'espace 36, sont ainsi décalés d'un pas p₁ ou p₂, ici p₂, comme le montre la figure 12, on procède au serrage de l'outillage gauche, c'est-à-dire au retour des mors 115 sur les zones de col 37 des préformes 3 ou des bouteilles 6 constituant le groupe 84, 85 immédiatement suivant, en référence au sens 18, le groupe 84, 85 de préformes 3 ou de bouteilles 6 encore retenus par les mors 116 en position de préhension, ce groupe suivant ayant été transféré au poste ou espace associé aux chariots 70 et 71, en l'espèce l'espace 36, alors que ceux-ci procédaient eux-mêmes au transfert précité au poste ou espace suivant, en l'espèce le poste 31, si bien que chaque zone de col 37 est à nouveau retenue, respectivement à gauche et à droite, par des mors 115 et 116 en position de préhension, pour chaque groupe 84, 85 comme le montre la figure 13 à propos des bouteilles 6 se trouvant ainsi à l'espace 36 et au poste 31 ; il s'agit alors cependant pour chaque groupe 84, 85, des mors 115 d'un chariot 70 associé au poste ou espace considéré et des mors 116 du chariot associé au poste ou espace immédiatement précédent, en référence au sens 18 ;
- alors que les mors 115 de l'outillage gauche restent en position de préhension, on procède au desserrage de l'outillage droit par passage des mors 116 à leur position de libération, comme le montre la figure 14, puis au retour des chariots 71 de cet outillage gauche d'un pas p₁ ou p₂ en arrière, en référence au sens 18, en l'espèce du pas p₂, alors que les chariots 70 de l'outillage gauche et les mors correspondants 115 restent en position, jusqu'à ce que les chariots 70 et 71 soient à nouveau appariés, par symétrie mutuelle en référence au plan 67, au poste ou espace auquel ils sont associés, comme le montre la figure 15, et alors que les zones de col 37 des préformes 3 et des bouteilles 6 restent tenues à gauche par les mors 115 en position de préhension et à droite par appui de l'épaulement 57 de la collerette 49 et de la plage 54 de la face périphérique extérieure 43 respectivement vers le bas et dans le sens d'un éloignement par rapport au plan 67 contre la sole 73 ;
- une fois les chariots 70 et 71 immobilisés dans cette position, c'est-à-dire ainsi à nouveau appariés au poste ou espace auquel ils sont associés, on procède au retour des mors 116 de l'outillage droit à leur position de préhension, si bien que les zones de col 37 des préformes 3 et des bouteilles 6 sont à nouveau retenues, respectivement de part et d'autre du plan 67, par engagement d'un mors respectif 115, 116 dans la gorge 63, si ce n'est que ce sont les préformes 3 et les bouteilles 6 du groupe 84, 85 suivant le groupe qui était précédemment retenu de cette façon qui le sont à présent.

On retrouve alors un état de l'installation identique à celui qui a été décrit en référence à la figure 9 et le cycle peut recommencer, de façon répétitive.

Naturellement, l'ordre des déplacements entre les outillages gauche et droit pourrait être inversé, avec le même résultat qui est, en particulier, de retenir en permanence, pendant leurs déplacements comme pendant leurs arrêts aux postes ou espaces successifs, les articles constitués par les préformes 3 et les bouteilles 6 à l'encontre de tout déplacement intempestif en particulier suivant la trajectoire 17, ce qui permet de maîtriser en permanence leur position suivant cette trajectoire, soit par retenue des deux côtés par les mors 115 et 116, soit par retenue d'un seul côté par ceux-ci alors que chaque préforme 3 et chaque bouteille 6 trouve par ailleurs de l'autre côté un appui de sa zone de col 37 contre l'une des soles 72 et 73.

Naturellement, des moyens différents des moteurs linéaires 105 à 108 et des boudins gonflables 109 à 112 pourraient être utilisés pour provoquer, sous la commande des moyens 128, les différents mouvements précités des chariots 70 et 71 et des mors 115 et 116.

Cependant, ces choix correspondent à une version actuellement préférée de l'ensemble ou système de convoyage ou de transfert 1.

Cette version a le mérite de supprimer des éléments mécaniques tout en conservant le maintien permanent des articles, à savoir les préformes 3 et les bouteilles 6, par leur zone de col 37, pendant leur transfert à chacun des postes de travail 20 à 32 et hors de ceux-ci.

Les mouvements d'ouverture/fermeture et de translation des moyens de préhension de ces articles, à savoir les mors 115 et 116, portés par les chariots 70 et 71, sont réalisés par des systèmes mécaniques et pneumatiques judicieusement situés pour éliminer tout risque de pollution de l'intérieur des préformes 3 et des bouteilles 6, jusqu'au bouchage de ces dernières.

Si l'on se réfère à une position de l'ensemble des chariots 70 et 71 correspondant à la position décrite en référence aux figues 8 et 9 en ce qui concerne des chariots assurant le transport des bouteilles 6 pas à pas, suivant le pas p₂, c'est-à-dire à une position à laquelle tous les chariots 70, 71 occupent une position limite arrière en référence au sens 18 avant de franchir un pas, respectivement p₁ ou p₂, dans ce sens puis de revenir de ce pas en arrière, c'est-à-dire en sens opposé au sens 18, une paire de chariots 70, 71 identiques ou similaires à ceux qui viennent d'être décrits, à savoir notamment munis de mors 115, 116 identiques ou similaires à ceux qui viennent d'être décrits, est prévue en association avec le poste 19 de prise en charge des préformes 3, l'espace 33, les postes successifs 20 à 25, ces chariots 70 et 71 présentant suivant la trajectoire 17 une dimension légèrement inférieure au pas p₁ et leurs mors 115 et 116 respectant suivant cette trajectoire 17 l'espacement e₁, et à l'espace 34, au poste 27, à l'espace 35, aux postes 28 à 30, à l'espace 36, au poste 31, à l'espace 236 et au poste 32, les chariots 70 et 71 présentant dans ce cas, suivant la trajectoire 17, une dimension légèrement inférieure au pas p₂ et leurs mors 115 et 116 étant répartis suivant la trajectoire 17 de façon à correspondre à l'espacement e₂. Les chariots de chaque paire peuvent ainsi accomplir le mouvement de va-et-vient répétitif précédemment décrit et, avec les variantes qui seront décrites par la suite, leurs mors 115 et 116 accomplir le cycle carré répétitif également précédemment décrit, entre le poste ou espace auquel ils sont ainsi respectivement associés par paire, et le poste ou espace immédiatement suivant, dans le sens 18, à savoir respectivement l'espace 33, les postes 20 à 26, le poste 27, l'espace 35, les postes 28 à 30, l'espace 36, le poste 31, l'espace 236, le poste 32, ainsi que le poste 9 auquel les bouteilles 6 remplies, bouchées et étiquetées, sont libérées en vue de leur évacuation, par ouverture successive des mors 115, 116 des chariots 70, 71 qui les y ont amenées conformément au cycle précédemment décrit.

Au poste 19 de prise en charge des préformes 3, les mors 115 et 116 des chariots 70 et 71 constituant la paire correspondante coopèrent avec un dispositif 128 d'alimentation en préformes 3, lequel va être décrit à présent en référence aux figures 16 et 17. Pour des raisons de clarté, on a omis les chariots 70 et 71 ainsi que les mors 115 et 116 à la figure 16, où l'on retrouve par contre, de même qu'à la figure 17, la sole de glissement 73 qui s'étend jusqu'au poste 19, en relation avec une alimentation des préformes 3 par la droite, en référence à la trajectoire 17 et en observant dans le sens 18, alors que la sole 72 ne commence dans ce cas qu'à l'espace 33 qui suit immédiatement le poste 19 de prise en charge des préformes 3 dans le sens 18. On pourrait cependant prévoir plutôt une arrivée des préformes 3 par la gauche de la trajectoire 17, en référence au sens 18, auquel cas ce serait la sole 72 qui s'étendrait jusqu'au poste 19, alors que la sole 73 ne s'étendrait que jusqu'à l'espace 33 ; un Homme du métier déduira aisément, de la description du poste 19 illustré aux figure 16 et 17, la conception d'un poste correspondant ainsi à une alimentation en préformes par la gauche.

Si l'on se réfère à un groupe 84 de préformes 3 occupant au poste 19 une position de départ pour l'accomplissement d'un pas p₁ dans le sens 18 suivant la trajectoire 17, la sole 73 s'étend vers l'arrière, en référence au sens 18, sur une distance non référencée, au moins égale et de préférence supérieure au produit de l'espacement e₁ entre les axes respectifs 39 de deux préformes 3 voisines dans un même groupe 84, par le nombre de préformes constituant ce groupe 84, à savoir par quatre dans l'exemple illustré, en arrière de la position de l'axe 39 de la préforme 3 située le plus en avant dans le groupe 84 ainsi placé au poste 19. En pratique, cette distance peut être avantageusement au moins égale et par exemple supérieure au pas p₁.

A son extrémité arrière en référence au sens 18, la sole 73 se raccorde sans discontinuité à une sole auxiliaire 129 qui la prolonge vers la droite, en référence à la trajectoire 17 et au sens 18, en présentant une face supérieure plane 130, coplanaire de la face supérieure 75 de la sole 73 et un chant 131 qui se raccorde coplanairement au chant 77 de la sole 73 à l'extrémité arrière de celle-ci, en référence au sens 18, et forme immédiatement en arrière de son raccordement avec ce chant 77, en référence au sens 18, un coude à 90°, à savoir plus précisément un quart de cercle lorsqu'il est vu en plan comme c'est le cas à la figure 16, pour se poursuivre perpendiculairement au plan 67. Par ce chant 131, la face supérieure 130 de la sole auxiliaire 129 se raccorde à une face inférieure de celle-ci, non illustrée, par exemple par l'intermédiaire d'un biseau comme on l'a décrit en référence à la sole 73, afin d'éviter tout contact entre cette face inférieure et les préformes 3, qui coopèrent avec la sole auxiliaire 129 d'une façon qui sera décrite par la suite.

Comme la sole 73, la sole auxiliaire 129 est portée de façon solidaire par le châssis 16 de la machine.

En arrière de cette sole auxiliaire 129 en référence au sens 18, ce châssis 16 porte de façon également solidaire une autre sole auxiliaire 132 présentant également une face supérieure 133 plane, coplanaire avec la face supérieure 130 de la sole auxiliaire 129 et avec la face supérieure 75 de la sole 73, alors qu'elle présente vers le chant 131 de la sole auxiliaire 129 un chant 134 parallèle à ce chant 131 et comportant, comme ce dernier, une partie rectiligne, perpendiculaire au plan 67, et une partie coudée en quart de cercle de façon à se terminer vers l'avant, en référence au sens 18, dans le prolongement coplanaire du chant 76 de la sole 72, en s'arrêtant toutefois au niveau de l'extrémité arrière de la sole 73 en référence au sens 18.

Entre sa face supérieure 133 et une face inférieure plane non illustrée, parallèle à cette face 133, la sole auxiliaire 132 présente une épaisseur faible au regard de la dimension de la partie 53, c'est-à-dire de la plage 54 de la face périphérique extérieure 43 de la préforme 3, suivant l'axe 39, dans des conditions telles que l'on puisse également considérer cette face inférieure comme sensiblement coplanaire à la face supérieure 74 de la sole 72 au regard d'un transfert de préformes 3 qui sera décrit par la suite ; on pourra d'ailleurs choisir de positionner cette face inférieure coplanairement à la face supérieure 74 de la sole 72, et l'on considèrera alors que c'est la face supérieure 133 de la sole auxiliaire 132 qui est sensiblement coplanaire à cette face supérieure 74.

Entre les chants 131 et 134 des soles auxiliaires 129 et 132 subsiste une fente arquée 135 dont la largeur, constante, mesurée perpendiculairement aux deux chants 131 et 134, est sensiblement identique à la dimension séparant mutuellement les chants 76 et 77 des soles 72 et 73 perpendiculairement au plan 67, de telle sorte que les deux soles auxiliaires 129 et 132 puissent guider entre elles, par les chants 131 et 134, des préformes 3 arrivant de la droite en référence au sens 18, comme on l'a schématisé par une flèche 136 à la figure 16, perpendiculairement au plan 67, auquel leur axe 39 est parallèle, pour amener progressivement ces préformes 3 dans une position dans laquelle leur axe 39 est situé dans le plan 67, au niveau de l'extrémité arrière de la sole 73 en référence au sens 18 et d'une zone extrême avant des soles auxiliaires 129 et 132 en référence à ce sens. Lors de ce transit des préformes 3 entre les chants 131 et 134 des soles auxiliaires 129 et 132, la plage 54 de leur face périphérique extérieure 53 s'appuie sur ces chants, en glissant contre eux, et l'épaulement 57 de leur collerette 49 s'appuie sur les faces supérieures 130 et 133 des soles auxiliaires 129 et 132, également en glissant sur ces dernières.

L'arrivée des préformes 3 dans le sens 136 peut être provoquée par tout moyen connu, dont la conception est indépendante de celle de l'installation selon l'invention, y compris manuellement ou encore par gravité à partir d'un magasin latéral, dans lequel les préformes sont montées au libre coulissement, de la même façon qu'entre les soles auxiliaires 129 et 132, de façon à descendre vers ces dernières dans le sens 136.

Immédiatement en dessous de la face inférieure de la sole auxiliaire 132 est montée, avec possibilité de déplacement relatif suivant la trajectoire 17 et perpendiculairement au plan 67, une crémaillère 137 présentant en particulier une face supérieure 138 plane, perpendiculaire au plan 67 et orientée parallèlement à la trajectoire 17 de même que la face inférieure de la sole auxiliaire 132, que la crémaillère 137 jouxte par sa face 138.

Cette face 138 présente par exemple une forme rectangulaire, oblongue suivant la trajectoire 17, et elle est délimitée vers la droite, compte tenu du sens 136 d'arrivée des préformes 3, par un chant 139 de la crémaillère 137, lequel est plan, parallèle au plan 67 et plus précisément éloigné de celui-ci d'une distance pratiquement identique à celle qui en sépare le chant 77 de la sole 73, de telle sorte que le chant 139 puisse coulisser le long du chant 77, dans le sens 18 et en sens opposé, en étant aussi proche que possible de ce chant 77.

Suivant la trajectoire 17, la face 138 et le chant 139 de la crémaillère 137 présentent une dimension supérieure au produit de l'espacement e₁ entre les axes 39 de deux préformés 3 par le nombre de préformes 3 dans un groupe 84, à savoir par quatre dans l'exemple illustré. En pratique, cette dimension peut être supérieure au double du pas p₁, comme on l'a illustré.

Le chant 139 relie la face supérieure 138 de la crémaillère 137, vers le bas, à une face inférieure 140 de celle-ci, laquelle est plane et parallèle à la face 138 et s'étend jusqu'au côté du plan 67 opposé au chant 139, à une distance de ce plan 67 sensiblement égale au rayon de la face périphérique extérieure 43. d'une préforme 3.

Entre ses faces supérieure 138 et inférieure 140, en particulier au niveau du chant 139, la crémaillère 137 présente une épaisseur qui, cumulée à l'épaisseur de la sole auxiliaire 132 entre sa face supérieure 133 et sa face inférieure non illustrée, correspond sensiblement à la dimension que la plage 54 de la face périphérique extérieure 43 d'une préforme 3 présente, parallèlement à l'axe 39, à partir de l'épaulement 57 de sa collerette 49.

Du côté du plan 67 opposé à son raccordement avec le chant 139, la face inférieure 140 de la crémaillère 137 se raccorde à une face plane 141 parallèle au plan 67 dont cette face plane 141 est ainsi espacée d'une distance correspondant sensiblement au rayon de la face périphérique extérieure 43 d'une préforme 3 et qui présente perpendiculairement à la face 140 une dimension ou hauteur qui est de préférence au moins égale à la dimension que la face périphérique extérieure 43 d'une préforme 3 présente, parallèlement à son axe 39, à partir de l'épaulement 57 de la collerette 49. Suivant la trajectoire 17, la face 141 présente la même dimension ou longueur que les faces 138 et 140 de la crémaillère 137 ainsi que de son chant 139.

La crémaillère 137 est reliée au châssis 16 de l'installation par des moyens intégralement situés au-delà de la face 141, dans le sens d'un éloignement par rapport au plan 67, c'est-à-dire à l'opposé de ce plan 67 par rapport à l'arrivée des préformes 3 dans le sens 136, et en dessous du niveau des faces supérieures 74, 75 des soles 72, 73.

Plus précisément, les faces 138, 140, 141 et le chant 139 constituent des faces d'une même pièce en équerre constituant la crémaillère 137, laquelle pièce est portée solidairement par un jeu de tiges rectilignes 142 orientées perpendiculairement au plan 67 et disposées à l'opposé de ce plan 67 par rapport à la face 141, à un niveau inférieur à celui de la face supérieure 138 de la crémaillère 137.

Ces tiges 142 sont guidées, au coulissement suivant une direction perpendiculaire au plan 67, sans autre possibilité de déplacement relatif, sur un chariot 143 lui-même guidé au coulissement, parallèlement à la trajectoire 17, sur un rail 144 solidaire du châssis 16 de l'installation et situé, comme le chariot 143, à un niveau inférieur à celui des tiges 142.

Un vérin pneumatique 145, ou tout autre système moteur à mouvement linéaire, orienté perpendiculairement au plan 67, relie par ailleurs la crémaillère 137 au chariot 143 de telle sorte que, sous la commande des moyens 128, ce vérin 145 puisse faire évoluer la crémaillère 137 en va-et-vient entre deux positions limites, suivant une direction perpendiculaire au plan 67, à savoir une position limite illustrée en trait plein aux figures 16 et 17, qui correspond à la position dans laquelle on a décrit la crémaillère 137, c'est-à-dire à une position dans laquelle son chant 139 est pratiquement coplanaire au chant 77 de la sole 73, et une position limite illustrée en trait mixte à la figure 16, dans laquelle le chant 139 est espacé du chant 77, perpendiculairement au plan 67, d'une distance au moins égale, et de préférence légèrement supérieure, au diamètre de la face périphérique extérieure 43 d'une préforme 3. Le dimensionnement, à cet effet, du vérin 145 et des tiges 142, et le positionnement du chariot 143 à cet effet, par rapport au plan 67, relèvent des aptitudes normales d'un Homme du métier.

Un autre vérin pneumatique 146, quant à lui orienté parallèlement à la trajectoire 17, relie par ailleurs le chariot 143 au châssis 16 de l'installation, et permet de faire évoluer le chariot 143, sur le rail 144, entre deux positions limites suivant la trajectoire 17, dont l'une correspond à la position de la crémaillère 137 illustrée en trait plein; position dans laquelle une zone extrême avant, en référence au sens 18, du chant 139 se trouve placée en regard d'une zone extrême arrière du chant 77 de la sole 75, suivant une direction perpendiculaire au plan 67, alors que l'autre correspond, pour la crémaillère 137, à la position illustrée en trait mixte, dans laquelle la zone d'extrémité avant précitée de la crémaillère 137 se trouve placée à proximité immédiate d'une zone d'extrémité arrière de la sole 74, et le chant 139 est placé sur l'essentiel de sa dimension parallèle à la trajectoire 17 en regard du chant 77 de la sole 75 suivant une direction perpendiculaire au plan 67. Le dimensionnement, à cet effet, du vérin 146, ou de tout autre moyen moteur le remplaçant, et du rail 144 relève des aptitudes normales d'un Homme du métier.

Les moyens de commande 228 commandent le fonctionnement des deux vérins 145 et 146 de telle sorte que la crémaillère 137 accomplisse un cycle carré, répétitif, synchronisé avec celui des mors 115 et 116 des chariots 70 et 71, de telle sorte que, successivement, à partir de la position de la crémaillère 137 illustrée en trait plein à la figure 16, ou position limite arrière en référence au sens 18 :
- la crémaillère 137 se déplace vers l'avant, en référence au sens 18, sous l'action du vérin 146 alors que le vérin 145 la maintient dans une position telle que son chant 139 se déplace alors le long du chant 77 de la sole 73 en restant placé à proximité immédiate de ce chant 77, jusqu'à ce qu'elle atteigne une position limite avant, en référence au sens 18, correspondant à la position limite du chariot 43 vers l'avant en référence à ce sens 18,
- puis, le vérin 146 restant dans cette position limite avant, le vérin 145 gagne sa position limite dans laquelle la crémaillère 137, encore dans la position précédemment atteinte suivant la trajectoire 17, s'écarte de la sole 75, jusqu'à atteindre la position illustrée en trait mixte à la figure 16, qui correspond pour la crémaillère 137 à la fois à une position limite avant en référence au sens 18 et à une position limite d'écartement par rapport à la sole 75 et au plan 67,
- puis, la crémaillère restant ainsi éloignée de la sole 75 perpendiculairement au plan 67, par maintien du vérin 145 dans sa position limite correspondante, le vérin 146 amène cette crémaillère 137, vers l'arrière en référence au sens 18, jusqu'à son autre position limite, dans laquelle sa zone d'extrémité avant fait face à la zone d'extrémité arrière de la sole 75 tout en restant écartée de celle-ci,
- puis, enfin, le vérin 145 revienne à son autre position limite alors que le vérin 146 reste dans la position limite atteinte, ce qui ramène la crémaillère 137 dans la position illustrée en trait plein à la figure 16.

Dans son chant 139, la crémaillère 137 est creusée, de façon équitablement répartie selon l'espacement relatif e₁ parallèlement à la trajectoire 17, d'autant d'encoches identiques 147 que de préformes 3 dans un groupe 84, à savoir dans l'exemple illustré de quatre encoches 147, dont chacune débouche par ailleurs dans les faces supérieure et inférieure 138, 140 de la crémaillère 137.

Si l'on se réfère à la position de la crémaillère 137 illustrée en trait plein à la figure 16, chaque encoche 147 présente un fond 148 en forme de partie de cylindre de révolution autour d'un axe 149 perpendiculaire à la trajectoire 17 et situé dans le plan 67, ce fond 148 présentant lorsqu'il est vu suivant l'axe 149 la forme d'un arc de cercle d'un développement angulaire supérieur à 90° mais inférieur à 180°, par exemple de l'ordre de 120°, et raccordant mutuellement deux flancs, à raison d'un flanc arrière 150 et d'un flanc avant 151, en référence au sens 18, ces deux flancs 150 et 151 étant l'un et l'autre plans. Le flanc arrière 150 est perpendiculaire au plan 67 alors que le flanc avant 151 est oblique par rapport à celui-ci qu'il franchit en allant de gauche à droite dans le sens 18.

Le fond 148 de chaque encoche 147 présente en référence à l'axe 149 correspondant un diamètre sensiblement identique à celui de la face périphérique extérieure 43 d'une préforme 3, et c'est en particulier par leurs axes 149 que les encoches 147 respectent l'espacement mutuel e₁.

Dans la position de la crémaillère 137 illustrée en trait plein à la figure 16, celle des encoches 147 qui se trouve le plus en avant, en référence au sens 18, est disposée, suivant la trajectoire 17, de telle sorte que son flanc arrière 150 soit placé dans le prolongement direct de la partie rectiligne du chant 134 de la sole auxiliaire 132, suivant une direction perpendiculaire au plan 67, et que son flanc avant 151, dans une vue de dessus, passe au moins approximativement par l'intersection de ce chant 134, par sa partie courbe, avec le plan 67 et ferme ainsi la fente 135 à la fois vers l'avant et vers ce plan 67.

Dans ces conditions, cette encoche 147 sert de butée, vers l'avant en référence au sens 18 et vers le plan 67, à la première des préformes 3 se présentant, par la fente 135, dans le sens 136. Compte tenu des épaisseurs précitées de la crémaillère 137 et de la sole auxiliaire 132, c'est par la plage 54 de sa face périphérique extérieure 43, immédiatement en dessous de l'épaulement 57 de la collerette 49, que cette préforme 3 s'appuie sur le flanc 151 de cette encoche 147.

Lorsque, ensuite, la crémaillère 137 avance sous l'action du vérin 146 en étant retenue par le vérin 145 dans une position dans laquelle son chant 139 jouxte le chant 77 de la sole 75, la première préforme précitée vient progressivement s'appuyer au fond 148 de l'encoche 147, par la plage 54, puis contre le chant arrière 150 de cette encoche qui, alors, l'entraîne dans le même mouvement, dans le sens 18, que la crémaillère 137, en engageant la plage 54 sur le chant 77 de la sole 75. La préforme 3 est ainsi tenue d'une part à l'encontre d'un déplacement perpendiculairement au plan 17, par appui d'un côté sur le chant 77 et de l'autre sur le fond 148 de l'encoche 147, alors qu'elle est retenue de haut en bas par appui de l'épaulement 57 de sa collerette 49 d'une part sur la face supérieure 75 de la sole 73 et d'autre part sur la face supérieure 138 de la crémaillère 137.

Les encoches 147 suivantes, dans le sens 18, captent de la même façon une préforme 3 respective, si bien que, lorsque la crémaillère 137 parvient dans sa position limite avant, un groupe 84 de quatre préformes 3 se trouve dans une position bien déterminée, en référence à la trajectoire 17, en respectant l'espacement mutuel e₁ entre les axes 39 respectifs, cette position ayant été illustrée en trait plein à la figure 16.

En arrière de la dernière des encoches 147, en référence au sens 18, le chant 139 se poursuit suffisamment loin pour que, même dans la position limite avant de la crémaillère 137, il soit placé en regard de la fente 135 et obture celle-ci vers le plan 67, pour retenir les préformes 3 par butée sur lui dans le sens 136, jusqu'au cycle suivant.

Le mouvement des vérins 145 et 46 est synchronisé avec celui des chariots 70 et 71 et avec l'alimentation des boudins gonflables 109 à 112 de telle sorte que, lorsque la crémaillère 137 arrive ainsi dans sa position limite avant, en référence au sens 18, en restant à proximité immédiate du chant 77 de la sole 73 par son chant 139, les chariots 70 et 71 et les mors 115 et 116 associés au poste 19 se trouvent dans une position respective similaire à celle qui a été décrite en référence à la figure 12, dans laquelle un chariot 70 se trouve au poste 19, avec les mors correspondants 115 en position limite éloignée du plan 67, alors que le chariot 71 de la même paire se trouve au niveau de l'espace 33, ses mors 116 occupant leur position limite proche du plan 67.

Chacun des mors 115 du chariot 70 précité se trouve alors en regard de la gorge 63 de la zone de col 37 de l'une, respective, des préformes 3 du groupe 84 qui vient d'être pris en charge par les encoches 147 de la crémaillère 137 si bien que lorsque, ensuite, ces mors 115 gagnent leur position proche du plan 67, comme on l'a décrit en référence aux figures 12 et 13, ils viennent en prise avec la gorge 63 respectivement correspondante et assurent la retenue de la préforme 3 correspondante, à gauche du plan 67 en référence au sens 18, par engagement dans la gorge 63 alors que chaque préforme reste par ailleurs en appui contre la sole 73, à droite du plan 67 en référence au sens 18, d'une part par la plage 54 dans le sens d'un éloignement par rapport au plan 67 et d'autre part vers le bas par appui de l'épaulement 57 sur la face supérieure de la sole 73.

On observera que, simultanément, le chariot 70 immédiatement suivant dans le sens 18, revenu à l'espace 33, prend en charge de la même façon les préformes 3 qui se trouvent à cet espace, au moyen de ses mors 115, ce qui permet d'écarter les mors 116 du chariot 71 se trouvant alors au niveau de l'espace 33 avant de procéder au retour de ce chariot 71 au poste 19, lors d'un recul simultané de l'ensemble des chariots 71, dont les mors 116 occupent alors leur position la plus éloignée du plan 67.

Par action du vérin 145, la crémaillère 137 est alors éloignée du plan 67 pour atteindre sa position limite illustrée en trait mixte à la figure 16 et peut être ramenée vers l'arrière, par exemple simultanément au retour du chariot 71 vers l'arrière, suivi du retour des mors 116 à leur position la plus proche du plan 67 ; le retour de la crémaillère 137 dans une position dans laquelle son chant 139 jouxte le chant 77 de la sole 73 mais dans la position limite arrière de cette crémaillère 137 peut être simultané à ce mouvement des mors 116 vers le plan 67.

Alors, les préformes 3 se trouvant au poste 19 sont prises en charge par les mors 115 du chariot 70 correspondant et par les mors 116 du chariot 71 correspondant, respectivement de part et d'autre du plan 67, par leur gorge 63, de la même façon qu'au niveau de tous les espaces 33, 34, 35, 36 et qu'au niveau de tous les postes de travail 20 à 25, 27, 28 à 30, 31, 32, en vue d'un transfert d'un pas p₁ ou p₂ dans le sens 18.

Lorsque la crémaillère 137 occupe sa position la plus éloignée du plan 67 et ne peut donc assurer par son chant 139 la retenue des préformes arrivant dans le sens 136 par la fente 135, un registre coulissant 152, plat et parallèle au plan 67, vient obturer la fente 135 en lieu et place du chant 139. A cet effet, le registre 152, en forme de lame présentant des dimensions aussi faibles que possibles perpendiculairement au plan 67, avec une face plane non référencée tournée vers ce plan 67 et placée approximativement coplanairement au chant 77 de la sole 73, dans le prolongement de ce chant 77 vers l'arrière en référence au sens 18, est déplacé par des moyens moteurs 153, tels qu'un vérin pneumatique, commandés par les moyens 228 en synchronisme avec les vérins 145 et 146, est porté par le châssis 16 de l'installation en arrière de la sole auxiliaire 132 en référence au sens 18, entre une position limite arrière en référence à ce sens 18, non illustrée, dans laquelle il est intégralement placé en arrière de la fente 135, et une position limite avant, dans laquelle il est illustré et dans laquelle il obture la fente 135 vers le plan 67. La commande des moyens moteurs 153 par les moyens 228 est telle que le registre 152 occupe sa position limite arrière au moins tant que la crémaillère 137 se déplace vers l'avant, en référence au sens 18, en présentant successivement ses encoches 147 en regard de la fente 135, et occupe sa position limite avant au moins tout le temps pendant lequel le chant 139 de la crémaillère 137 ne jouxte pas le chant 77 de la sole 73.

Le groupe 84 de préformes 3 ainsi pris en charge par les mors 115 et 116 des chariots 70 et 71 situés au poste 19 est ensuite transféré, pas à pas, d'une façon similaire à celle qui a été décrite en référence aux figures 9 à 15, en marquant un arrêt entre deux pas de transfert successifs, à l'espace 33, puis successivement à chacun des postes 20 à 26 constituant l'équipement 2 de chauffage des préformes 3, puis vers l'espace 34 par l'intermédiaire du dispositif 86 de changement du pas et de l'espacement mutuel, par des moyens différents qui seront décrits par la suite, puis au poste 27 d'étirage-soufflage constitué par l'étireuse-souffleuse 4, où ce groupe 84 de préformes 3 devient un groupe 85 d'autant de bouteilles 6, et à l'espace 35, puis à chacun des postes successifs 28 à 30 de la station de remplissage 5 des bouteilles 6, puis à l'espace 36, puis au poste 31 où se trouve le système de bouchage 7 des bouteilles 6 remplies, puis à l'espace 236, puis au poste 32 où se trouve le système 8 d'étiquetage de ces bouteilles, remplies et bouchées, et enfin au poste 9 d'évacuation.

Le séquencement du passage des mors 115 et 116 de l'une à l'autre de leurs positions limites est cependant légèrement différent de celui qui vient d'être décrit au passage à l'équipement de chauffage 7 et au poste d'étirage-soufflage 27.

L'équipement de chauffage 2 des préformes 3 comporte trois zones successives : une zone de chauffage de « pénétration » 11, comportant les trois postes successifs de chauffage 20, 21, 22, une zone de stabilisation 12, comportant un seul poste 23, et une zone de chauffage par répartition, comportant les trois poste successifs de chauffage 24, 25, 26.

Cet équipement peut être conforme à celui faisant l'objet de la demande de brevet français déposée par l'auteur de la présente demande sous le numéro FR 03 07663 et qui décrit un four de réchauffage des préformes comportant une zone de chauffe de pénétration aménagée de manière à ce que les préformes suivent un parcours sinuant entre des lampes à infrarouges courts disposées verticalement.

On préfère cependant réaliser cet équipement 2 d'une façon qui va être décrite à présent, en particulier en référence aux figures 18 et 19, à savoir de telle sorte que chacune des préformes 3 de chaque groupe 84 se déplace de l'un à l'autre des postes 20 à 26 en suivant la même trajectoire rectiligne 17 que dans le reste de l'installation, et reste stationnaire en référence à cette trajectoire 17 lors de son arrêt à chacun des postes 20 à 26, entre le franchissement de deux pas successifs p₁, suivant un cycle carré qui, bien que légèrement du cycle carré précédemment décrit, suivant lequel fonctionnent les mors 115 et 116 des chariots 70 et 71 associés à d'autres postes ou espaces de l'installation, en est très proche et s'accomplit en synchronisme avec celui-ci, sous la commande de moyens 228.

Pour assurer un chauffage des préformes 3 aux postes 20 à 22 ainsi qu'aux postes 24 à 26, le poste 23 s'en distinguant par une absence de chauffage, chacun des postes 20 à 22 et chacun des postes 24 à 26, ou de façon commune l'ensemble des postes 20 à 22 et l'ensemble des postes 24 à 26, présentent respectivement de part et d'autre du plan 67 des moyens 154, 155 de chauffage des préformes 3, réalisés par exemple sous la forme de panneaux radiants infrarouges verticaux 156, 157, disposés parallèlement au plan 67, respectivement de part et d'autre de celui-ci et à une distance de celui-ci supérieure au rayon de la face périphérique extérieure 43 des zones de corps 38 des préformes 3, en dessous des soles 72 et 73. Ces dernières sont avantageusement réalisées en matériau thermiquement isolant au moins au niveau des postes 20 à 22 et 24 à 26 pour protéger la zone de col 37 des préformes à l'encontre d'un chauffage.

Afin d'assurer une répartition aussi uniforme que possible du chauffage sur la totalité de la périphérie de la zone de corps 38 de chaque préforme 3, on prévoit, selon l'invention, de faire tourner celle-ci sur elle-même, autour de son axe 39, à chacun de ses arrêts respectivement aux postes 20 à 22 et 24 à 26, ainsi qu'au poste 23, entre deux transferts d'un pas p₁.

A cet effet sont utilisés des moyens qui vont être décrits à présent en référence aux figures 18 et 19, et plus précisément en relation avec le poste de chauffage 22, étant entendu que les autres postes de chauffage 20, 21, 24, 25, 26 présentent une conception respective identique, de même que le poste 23 qui n'en diffère que par l'absence des moyens 154, 155 de chauffage.

Il ressort des figures 2, 3, 5 que dans chacune des zones 11 à 13, de façon commune respectivement aux postes 20 à 22 constituant la zone de chauffage de pénétration 11 et aux postes 23 à 26 constituant la zone de stabilisation 12 et la zone de chauffage par répartition 13, est prévu un équipage respectif 158, 159 disposé en majeure partie au-dessus des chariots 70, 71 et monté mobile par rapport au châssis 16 de l'installation, exclusivement suivant une direction perpendiculaire aux faces supérieures 74 et 75 des soles 72 et 73, c'est-à-dire parallèle aux axes 39 des préformes 3, à l'exclusion de tout autre déplacement relatif en particulier parallèlement à la trajectoire 17.

A cet effet, par exemple, chacun des équipages mobiles 158, 159 comporte un plateau 160, 161, disposé parallèlement aux faces supérieures 74, 75 des soles 72, 73, au-dessus des chariots 70, 71, et chevauchant le plan 67 et chacun de ces plateaux 160, 161 est guidé au coulissement suivant une direction perpendiculaire aux faces supérieures 74 et 75 des soles 72 et 73, sur des glissières telles que 162, 163 solidaires du châssis 16 de la machine par l'intermédiaire d'étriers supports non référencés, qui se raccordent à ce châssis 16, ou aux soles 72, 73 elles-mêmes solidaires de celui-ci, au-delà des tiges de guidage 103, 104 dans le sens d'un éloignement par rapport au plan 67.

Des moyens moteurs tels que des vérins pneumatiques 164, 165 permettent de déplacer les deux plateaux 160 et 161, en synchronisme, de façon commandée par les moyens 228, entre des positions limites haute et basse illustrées respectivement aux figures 18 et 19 en ce qui concerne le plateau 160.

Chacun des plateaux 160, 161 porte solidairement des paliers tels que 170, en un nombre identique au nombre total de préformes 3 arrêtées à l'ensemble des postes respectivement correspondants, c'est-à-dire respectivement aux postes 20 à 22 et aux postes 23 à 26, après transfert d'un pas p₁. En d'autres termes, compte tenu de ce que chaque groupe 84 compte quatre préformes, le plateau 160 correspondant aux trois postes 20 à 22 comporte douze de ces paliers tels que 166, alors que le plateau 161 correspondant aux quatre postes 23 à 26 porte solidairement seize de ces paliers tels que 166.

Chaque palier tel que 166 définit, par rapport au plateau correspondant 160, 166, un axe de rotation tel que 167 qui est orienté perpendiculairement aux faces supérieures 74, 75 des soles 72, 73, se situe dans le plan 67 et coïncide avec l'axe 39 d'une préforme 3 respective, arrêtée à l'un des postes 20 à 26 après une translation d'un pas p₁ dans le sens 18 le long de la trajectoire 17.

Ces axes tels que 167 sont stationnaires suivant la trajectoire 17 compte tenu du mode de montage des plateaux 160 et 161 par rapport au châssis 16 de la machine et autour de chacun d'entre eux est monté, à la rotation par rapport au plateau correspondant 160, 161, par l'intermédiaire du palier respectif tel que 166, un arbre tel que 168 traversant de part en part le plateau correspondant 160, 161 et portant solidairement, au-dessus de celui-ci, une roue dentée respective telle que 169, les différentes roues dentées telles que 169 correspondant à un même plateau 160, 161 engrenant mutuellement de façon à assurer entre les arbres 168 correspondant à un même plateau 160 une liaison mutuelle à la rotation autour de leur axe tel que 167 par rapport à ce plateau 160, 161.

En outre, au-dessus de chacun des plateaux 160, 161, l'une des roues dentées telles que 169 correspondantes engrène avec une roue dentée 170 solidaire d'un arbre 175 monté à la rotation par rapport à ce plateau 160, 161 autour d'un axe tel que 171 parallèle aux axes tels que 167, par l'intermédiaire d'un palier 172 similaire aux paliers tels que 166, cette roue dentée telle que 170 étant par ailleurs en prise par l'intermédiaire d'un train d'engrenage à renvoi d'angle 173, 174, avec l'arbre de sortie d'un moteur électrique respectif 175, 176, associé au plateau 160, 161 respectivement correspondant, c'est-à-dire porté solidairement par celui-ci, au-dessus de celui-ci.

Comme il apparaîtra par la suite, les moteurs électriques 175, 176 sont alimentés en électricité de façon commandée par les moyens 228, qui commandent également le déplacement des plateaux 160 et 161 de l'une à l'autre de leurs positions limites, respectivement haute et basse.

En dessous du plateau 160, 161 respectivement correspondant, chacun des arbres tels que 168 porte solidairement, en particulier à la rotation autour de l'axe correspondant tel que 167 par rapport à ce plateau, une tournette respective telle que 176, se présentant sous la forme générale d'une broche prolongeant coaxialement l'arbre tel que 168 vers le bas, présentant sur l'essentiel de sa hauteur une face périphérique extérieure telle que 177 cylindrique de révolution autour de l'axe tel que 167, avec un diamètre supérieur à celui du raccordement du bord 45 d'une préforme 3 avec la face périphérique intérieure 40 de la zone de col 37 de celle-ci et par exemple du même ordre que le diamètre de la face périphérique extérieure 42 de cette zone de col 37.

Cependant, dans une zone d'extrémité inférieure telle que 178 de la tournette telle que 176, cette face périphérique extérieure cylindrique telle que 177 se raccorde à une face périphérique extérieure telle que 179 tronconique de révolution autour de l'axe correspondant tel que 167 et s'affinant de haut en bas, jusqu'à un diamètre minimal inférieur à celui du raccordement précité du bord 45 avec la face périphérique intérieure 40 de la zone de col 37 d'une préforme 3. Au niveau de ce diamètre le plus faible, la face tronconique 179 se raccorde à une face extrême plane, perpendiculaire à l'axe tel que 167 et non référencé.

Les positions limites hautes des plateaux 160 et 161 sont choisies telles que la zone d'extrémité inférieure telle que 178 de chacune des tournettes telles que 176 correspondantes, c'est-à-dire en particulier la face extrême précitée, se trouve placée à un niveau supérieur à celui du bord 45 des préformes 3 reposant par l'épaulement 57 de leur collerette 49 sur les faces supérieures 74 et 75 des soles 72 et 73, comme le montre la figure 18.

La position limite basse des plateaux 160 et 161 est quant à elle choisie telle que chaque tournette telle que 136 pénètre par sa face tronconique 179 à l'intérieur 48 de la zone de col 37 d'une préforme 3 respective, placée en arrêt à l'un des postes 20 à 26, et s'appuie sur le raccordement du bord 45 de cette préforme 3 avec la face périphérique intérieure 40 de la zone de col 37, en lui appliquant une poussée vers le bas, c'est-à-dire dans le sens d'un renforcement de l'appui de l'épaulement 57 de la collerette 49 sur les faces supérieures 74 et 75 des deux soles 72 et 73.

Cet effort doit être suffisamment important pour établir entre la face périphérique extérieure telle que 179 de chaque tournette telle que 176, et le raccordement du bord 45 de la préforme 3 avec la face périphérique intérieure 40 de sa zone de col 37 une liaison par friction d'entraînement à la rotation autour des axes tels que 167 et 39 alors confondus, mais il doit être suffisamment faible pour que la friction qui s'établit alors entre l'épaulement 57 de la collerette 49 et la face supérieure 74, 75 des soles 72 et 73 soit suffisamment faible pour être surcompensée par cette friction d'entraînement à la rotation.

Le cas échéant, de façon non représentée mais aisément compréhensible par un Homme du métier, chaque tournette telle que 176 peut être raccordée à l'arbre tel que 168 respectivement correspondant par des moyens élastiques assurant à la fois une solidarisation mutuelle vis-à-vis d'une rotation autour de l'axe tel que 167 et une liaison élastique suivant cet axe 167, de telle sorte que la face périphérique extérieure tronconique telle que 179 de chaque tournette telle que 176 entre en contact avec le raccordement du bord 45 et de la face périphérique intérieure 40 de la préforme 3 correspondante avant que le plateau 160, 161 correspondant n'atteigne sa position limite basse, en descendant à partir de sa position limite haute, et que la poursuite de la descente de ce plateau jusqu'à sa position limite basse s'accompagne d'une mise en compression des moyens élastiques précités, se traduisant par l'application de l'effort recherché, par la face périphérique extérieure tronconique telle que 179 de chaque tournette telle que 176, à la préforme 3 respectivement associée.

Les moyens de commande synchronisée 228 commandent les mouvements de montée et de descente des plateaux 160 et 161 entre leur position limite haute et leur position limite basse, par les moyens moteurs 164 et 165, l'entraînement des tournettes telles que 176 en rotation sur elles-mêmes par les moteurs 275 et 276 et les mouvements des mors 115 et 116 perpendiculairement au plan 67, par gonflage et dégonflage des boudins 109 à 112 aux postes 20 à 25, et de mors similaires 115, 116, par d'autres moyens qui seront décrits par la suite, au poste 26, d'une façon qui va être décrite à présent, en référence aux figures 18 et 19, à savoir plus particulièrement en référence au plateau 160 et au poste 22, étant entendu que le fonctionnement de ces différents composants est identique pour les postes 20 et 21 correspondant au même plateau 160 et pour les postes 23 à 26 correspondant à l'autre plateau 161.

Il en ressort qu' à ces postes 20 à 26, le cycle de fonctionnement des mors 115 et 116 correspond à une variante du cycle courant décrit en référence aux figures 9 à 15.

A cet égard, la figure 18 illustre un état correspondant de celui de la figure 10, en ce sens que deux chariots 70, 71 qui viennent d'accomplir un pas p₁ dans le sens 18, à l'unisson avec tous les autres chariots 70 et 71, viennent de s'y arrêter et que leurs mors 115, 116 occupent encore leur position respective la plus proche du plan 67, c'est-à-dire la position dans laquelle ils sont en prise par leurs encoches 82 et 83 avec la gorge 63 de la zone de col 37 d'une préforme 3 respective, dont la collerette 49 s'appuie par son épaulement 57 sur les faces supérieures 74 et 75 des soles 72 et 73 et dont la plage 54 est placée en regard des chants 76 et 77 de ces soles 72 et 73. Ce sont ainsi les paires de chariots 70, 71 associées respectivement à l'espace 33 et aux postes 20 à 26 qui se trouvent aux postes 20 à 26. Le plateau 160, comme c'est également le cas du plateau 161, est alors en position limite haute et le moteur 175 à l'arrêt, comme le moteur 176.

Sans modification d'état en ce qui concerne les chariots 70 et 71, les mors 115 et 116 et les moteurs 275, 276, les plateaux 160 et 161 descendent alors jusqu'à leur position limite basse, ce qui engage la face tronconique telle que 179 de chaque tournette telle que 176 à l'intérieur 48 de la zone de col 37 d'une préforme 3 respective et place cette face tronconique telle que 179 en appui vers le bas contre le raccordement du bord 45 de cette préforme avec la face périphérique intérieure 40 de sa zone de col 37.

Alors, comme le montre la figure 19, en gonflant les boudins 109 et 111 des chariots 70 et 71 arrêtés aux différents postes 20 à 26 tout en dégonflant les boudins 110, 112 correspondants, on provoque le passage des mors 115 et 116 à leur position la plus éloignée du plan 67, ce qui libère les préformes 3 arrêtées aux postes 20 à 26 de l'action des mors 115 et 116 sans toutefois les libérer vis-à-vis d'une translation suivant la trajectoire 17 ou perpendiculairement à celle-ci puisque l'engagement de la face périphérique tronconique telle que 179 d'une tournette telle que 176 dans leur zone de col 37 et l'appui que les soles 72 et 73 continuent à offrir à l'épaulement 57 de la collerette 49 s'y opposent.

En d'autres termes, les axes 19 des différentes préformes 3 arrêtées aux postes 20 à 26 sont maintenus stationnaires.

Alors, les moteurs 275 et 276 sont mis en route, ce qui provoque l'entraînement des préformes 3 en rotation sur elles-mêmes, autour des axes tels que 167 et 39 alors confondus, sans autre possibilité de déplacement des préformes 3 dans l'installation. Cette rotation, alors que les panneaux à infrarouges 156, 157 appliquent un chauffage à la zone de corps 38 des différentes préformes, sur la totalité de la dimension que cette zone présente parallèlement à l'axe 39 de celles-ci, permet d'uniformiser ce chauffage en direction circonférentielle, alors que les soles 72 et 73, le cas échéant réalisées au niveau des postes 20 à 26 en matériau thermiquement isolant, assurent une protection des zones de col 37 à l'encontre de tout chauffage excessif.

Au cours de cette rotation, les mors 115 et 116 restent dans leur position écartée au maximum du plan 67, comme on l'a illustré à la figure 19, mais les chariots 70 et 71 effectuent de préférence leur retour d'un pas, en sens opposé au sens 18, respectivement jusqu'à l'espace 33 et aux postes 20 à 25.

Ensuite, les moteurs 275 et 276 sont arrêtés, puis les mors 115 et 116 ramenés à leur position la plus proche du plan 67, dans laquelle ils reprennent place à l'intérieur de la gorge 63 des différentes préformes 3 par leurs encoches 82, 83, puis les plateaux 160 et 161 reviennent à leur position limite haute.

Ce cycle peut alors reprendre, en synchronisme avec le cycle décrit en référence aux figures 10 à 15, sous la commande des moyens 228. A cet égard, les mors 115 et 116 des chariots 70 et 71 constituant la paire associée à l'espace 33 respectent les alternances d'évolution entre leurs positions de préhension et de libération décrites en référence aux lignes 10 à 15 afin d'assurer le transfert d'un groupe 84, immédiatement suivant en référence au sens 18, de préformes 3 du poste 19 de prise en charge à l'espace 33 dans les conditions décrites en référence aux figures 10 à 15.

Chaque groupe 84 de préformes 3 est ainsi amené et travaillé successivement aux différents postes 20 à 26, d'une façon identique si ce n'est qu'il n'y a pas chauffage au poste 23 constituant la zone de stabilisation 12, puis du dernier de ces postes de travail 20 à 26 à l'espace 34 en accomplissant toutefois le passage du pas p₁ au pas p₂ et de l'espacement mutuel e₁ à e₂, au moyen du dispositif de changement de pas et d'espace mutuel 86 qui va être décrit à présent en référence aux figures 20 à 25, sur certaines desquelles on retrouve le poste 26, ou dernier poste de chauffage de préformes 3 en référence au sens 18, l'espace 34 et le poste 27 d'étirage-soufflage, qui suit immédiatement l'espace 34 dans le sens 18, c'est-à-dire le premier poste de travail auquel les préformes 3 respectent l'espacement mutuel e₂ et sont acheminées selon le pas p₂.

On retrouve dans le dispositif de changement de pas 86, au poste 26, des mors en tout point similaires aux mors 115, 116 associés aux autres postes, si l'on se réfère à la position limite des chariots 70, 71 en sens opposé au sens 18, puisque ces mors, dont seuls ont été illustrés aux figures les mors 115 situés à gauche de la trajectoire 17 dans une vue dans le sens 18, sont groupés par paires de mors 115, 116 qui sont prévues en un nombre identique à celui des préformes 3 dans un même groupe 84 ou des bouteilles 6 dans un même groupe 85, c'est-à-dire au nombre de quatre dans l'exemple illustré, mutuellement juxtaposées le long de la trajectoire 17, et respectent au poste 26 l'espacement mutuel e₁ associé au pas p₁.

Cependant, au lieu d'être portés par un chariot 70, 71 commun, les quatre mors 115, 116 du dispositif 86 qui sont disposés respectivement de part et d'autre de la trajectoire 17 sont montés, par l'intermédiaire d'un vérin pneumatique individuel respectif tel que 180 susceptible de faire accomplir à chacun de ces mors 115, 116 les mouvements d'éloignement et de rapprochement vis-à-vis du plan 67 qui ont été précédemment décrits, aux lieu et place des boudins gonflables 109 à 112, par un chariot individuel respectif tel que 181. Les quatre chariots 181 correspondant aux mors 115 et situés à gauche de la trajectoire 17 dans une vue suivant le sens 18 sont montés au coulissement sur la tige 103 guidant également les chariots 70, ainsi que sur une autre tige 182 également portée solidairement par le châssis 16 de ce côté de la trajectoire 17, parallèle à la tige 103 mais limitée au poste 26 et à l'espace 34, alors que les quatre chariots tels que 181 correspondant aux mors 116, disposés à droite de la trajectoire 17 dans une vue dans le sens 18, sont guidés au coulissement parallèlement à cette trajectoire 17 d'une part sur la tige 104 de guidage des chariots 71, et d'autre part sur une tige en tout point similaire à la tige 182, parallèle à la tige 104 et située du même côté que celle-ci de la trajectoire 17, comme le comprendra aisément un Homme du métier. Ce guidage de chaque chariot tel que 181 par deux tiges permet d'assurer la stabilité de ce chariot pendant sa translation, dans le sens 18 ou dans le sens opposé, le long de la trajectoire 17, dans des conditions qui ressortiront de la suite de la description.

Les chariots tels que 181 situés d'un même côté de la trajectoire 17 sont mutuellement juxtaposés suivant celle-ci, dans des conditions telles que, lorsqu'ils se trouvent au poste 26, les mors correspondants 115, 116 respectent, entre leurs plans moyens respectifs, perpendiculaires à la trajectoire 17, l'écàrtement mutuel e₁ entre les axes 39 de deux préforme 3 successives, dans un même groupe 84, et que la paire de mors 115, 116 qui est située le plus en avant en référence au sens 18 respecte le pas p₁ vis-à-vis de la paire de mors 115, 116 située le plus en avant, en référence au sens 18, au poste 25. Ainsi, lorsque les paires de mors 115, 116 associées au dispositif de changement de pas 86 se trouvent dans leur position limite arrière, en référence au sens 18, c'est-à-dire au poste 26, et alors que les deux chariots 70, 71 associés au poste 25 sont situés à celui-ci, c'est-à-dire également dans leur position limite arrière, les paires de mors des chariots 70 et 71 ainsi associés au poste 25 peuvent coopérer avec les paires de mors 115, 116 des chariots tels que 181 associés au dispositif de changement de pas 86 exactement dans les mêmes conditions que les paires de mors 115, 116 de chariots 70, 71 associés aux postes 20 à 25 pour assurer, du poste 25 au poste 26, un transfert des préformes 3, d'un pas p₁, en respectant entre ces préformes 3 l'espacement mutuel e₁.

Cependant, à partir de cette position limite arrière, illustrée aux figures 20 à 22, les chariots 181 peuvent gagner, en synchronisme avec l'avance d'un pas de tous les chariots 70 et 71, une position limite avant, illustrée aux figures 23 à 25, position dans laquelle ils se situent à l'espace 34 et dans laquelle leurs plans moyens respectent non plus l'espacement mutuel e₁, mais l'espacement mutuel e₂, qui est celui des axes 39 des bouteilles 6 dans un même groupe 85. En outre, les plans moyens de la paire de mors 115, 116 alors située la plus en avant, à l'espace 34, respectent alors le pas p₂ par rapport à la paire de mors située le plus en avant au poste 26, à savoir par rapport aux mors 115, 116 des chariots 70, 71 associés au poste 25.

Cependant, seuls les chariots tels que 181 situés le plus en avant en référence au sens 18 sont liés directement, à cet effet, à des moyens moteurs respectifs tels que 183, à savoir par exemple un vérin pneumatique respectif disposé parallèlement à la trajectoire 17, commandés par les moyens 228 dans les mêmes conditions que les chariots 70 et 71 et simultanément à ces derniers, et ces chariots tels que 181 situés le plus en tête en référence au sens 18 sont reliés aux chariots tel que 181 suivants dans ce sens par des moyens de traction qui, lorsque les chariots de tête 181 se déplacent vers l'avant de leur position limite illustrée aux figures 20 à 22 à leur position limite illustrée aux figures 23 à 25, prennent successivement en charge les chariots tels que 181 suivants, pour les avancer dans des conditions telles qu'ils soient transférés du poste 26 à l'espace 34 en passant de l'espacement mutuel e₁ à l'espacement mutuel e₂.

A cet effet, respectivement de chaque côté de la trajectoire 17, celui des chariots tels que 181 qui suit immédiatement le chariot 181 de tête porte solidairement deux étriers tels que 184, 185 dont le premier longe le chariot tel que 181 de tête, parallèlement à la trajectoire 17, et présente en avant de ce chariot de tête un crochet 186 sur lequel ce chariot de tête est susceptible de buter vers l'avant, dans des conditions qui apparaîtront par la suite, et dont le second longe vers l'arrière, parallèlement à la trajectoire 17, celui des chariots tels que 181 qui se trouve en troisième position, en référence au sens 18, et présente en arrière de ce chariot un crochet tel que 187 susceptible de venir buter contre celui-ci vers l'avant, dans des conditions qui ressortiront également de la suite.

Ce chariot tel que 181 situé en troisième position porte lui-même solidairement un étrier tel que 188 qui longe le dernier des chariots tels que 181 en référence au sens 18, et présente en arrière de ce chariot un crochet 189 susceptible de venir buter contre celui-ci vers l'avant, dans des conditions qui vont être décrites à présent.

Dans la position limite des chariots tels que 181 illustrée aux figures 20 à 22, c'est-à-dire dans la position à laquelle ces chariots sont situés au poste 26 et respectent entre eux l'espacement e₁, le crochet de butée 186 est décalé vers l'avant par rapport au chariot tel que 181 de tête alors que les crochets de butée 187 et 189 sont décalés vers l'arrière respectivement par rapport au chariot tel que 181 situé en troisième position et au dernier des chariots tels que 181, en référence au sens 18.

Ce décalage est tel que, lorsque le chariot tel que 181 de tête est mû vers l'avant par les moyens moteurs 183, il vienne buter contre le crochet de butée 86 après avoir franchi une course telle que son écartement par rapport à celui des chariots tels que 181 qui est situé en deuxième rang en référence au sens 18 soit passé de e₁ à e₂, puis entraîner l'étrier 184 et, avec lui, celui des chariots 181 qui est ainsi situé en deuxième rang en référence au sens 18, et avec lui l'étrier 185. Au cours de ce déplacement, lorsque l'espacement entre le chariot tel que 181 placé en deuxième rang, par rapport au chariot tel que 181 placé en troisième rang, en référence au sens 18, est passé de e₁ à e₂, cet étrier 185 vient buter vers l'avant, par son crochet de butée 187, contre celui des chariots tels que 181 qui est ainsi placé en troisième rang, si bien que celui-ci avance également, avec son étrier 188, jusqu'à ce que ce dernier vienne buter par son crochet de butée 189, vers l'avant, contre le dernier des chariots tels que 181 en référence au sens 18, alors que l'écartement entre les chariots tels que 181 ainsi placés en troisième et quatrième rangs est passé de e₁ à e₂.

Les dimensions des étriers 184, 185, 188 parallèlement à la trajectoire 17 et la course imprimée par les moyens moteurs 183 à celui des chariots 181 placé en tête, en référence au sens 18, sont telles que, alors, les chariots tels que 181 se situent à l'espace 34 et y occupent la position relative illustrée aux figures 23 à 25, dans laquelle leur espacement mutuel est égal à e₂ et les mors 115, 115 de celui des chariots tels que 181 qui est en tête, en référence au sens 18, respectent le pas p₂ par rapport aux mors 115, 116 également situés en tête, en référence à ce sens, parmi les mors 115, 116 des chariots 70, 71 associés au poste 24 d'étirage-soufflage ; la détermination de ces dimensions et de cette course relève des aptitudes normales d'un Homme du métier, en fonction des écartements e₁ et e₂ et du pas p₂.

Alors, les préformes 3 retenues par les paires de mors 115, 116 associées, portées par les chariots tels que 181, présentent l'espacement mutuel e₂ et peuvent être reprises par les mors 115, 116 de la paire de chariots 70, 71 qui sont associés à l'espace 34 puis par les mors de la paire de chariots 70, 71 associée au poste 27 d'étirage-soufflage lorsqu'ils occupent leur position limite arrière, dans les mêmes conditions que s'effectue le transfert ultérieur des bouteilles 6 d'un poste à l'autre, tel qu'on l'a décrit en référence aux figures 9 à 15.

C'est ensuite par butée mutuelle directe des chariots tels que 181, convenablement dimensionnés à cet effet parallèlement à la trajectoire 17, que le chariot de tête, mû par les moyens moteurs 183 en sens opposé au sens 18, ramène les autres chariots tels que 181 en sens opposé au sens 18, jusqu'à la position illustrée aux figures 23 à 25.

Dans une variante de réalisation du dispositif 86 de changement de pas, illustrée aux figures 26 et 27, les chariots tels que 181 sont raccordés mutuellement non pas par butée mutuelle, provoquant un mouvement saccadé des chariots tels que 181 autres que les chariots de tête lors de leur passage de la position illustrée aux figures 20 à 22 à leur position illustrée aux figures 23 à 25, puis en retour à la position illustrée aux figures 20 à 22, mais par un dispositif à crémaillères et pignons, assurant en permanence un espacement régulier, suivant la trajectoire 17, entre les différents chariots tels que 181, et un mouvement progressif de ces derniers dans le sens 18 puis en sens opposé.

A cet effet, les deux chariots tels que 181 intermédiaires entre le chariot de tête et le dernier chariot, en référence au sens 18, portent chacun, à la rotation autour d'un axe respectif tel que 190, perpendiculaire aux faces supérieures 74, 75 des soles 72, 73, un pignon tel que 191, ainsi monté à la rotation libre autour de l'axe respectif 190 par rapport au chariot tel que 181 associé.

Avec le pignon 191 porté par celui des chariots tels que 181 qui est placé en deuxième rang, en référence au sens 18, viennent en prise deux crémaillères 192 qui sont orientées parallèlement à la trajectoire 17 et dont la première est portée solidairement par le chariot tel que 181 de tête alors que la deuxième est portée solidairement par le chariot tel que 181 situé en troisième rang en référence au sens 18. De même, avec le pignon 191 porté par ce chariot tel que 181 situé en troisième rang, viennent en prise deux crémaillères 192, qui sont également orientées parallèlement à la trajectoire 17 et sont portées solidairement respectivement par le chariot tel que 181 situé en deuxième rang et par le chariot tel que 181 placé en dernier rang en référence au sens 18.

Parallèlement à la trajectoire 17, chacune des crémaillères 192 présente une longueur supérieure à l'espacement e₂, et chacun des chariots 181 présente parallèlement à la trajectoire 17 une dimension inférieure à e₁, de telle sorte que les chariots tels que 181 puissent ainsi occuper soit la position illustrée à la figure 26, correspondant à la position illustrée aux figures 20 à 22, dans laquelle les plans moyens des mors 115, 116 qu'ils portent, de la façon décrite en référence aux figures 20 à 25, respectent l'espacement mutuel e₁, au poste 26, ou la position illustrée à la figure 27, dans laquelle cet espacement est égal à e₂, alors que les chariots tels que 181 se situent à l'espace 34.

Quel que soit le mode de réalisation ainsi adopté pour le dispositif de changement de pas 86, les préformes 3 arrivent à l'espace 34 puis, après avoir été transférées d'un pas p₂ depuis l'espace 34, au poste d'étirage-soufflage 27, et s'y arrêtent, en respectant entre leurs axes 39 l'espacement mutuel e₂, l'espacement e₂ et le pas p₂ étant respectivement l'espacement mutuel des bouteilles 6 dans un même groupe 85 et le pas de transfert des groupes 85 dans l'ensemble de l'installation à partir du poste d'étirage-soufflage 27 auquel les bouteilles 6 sont formées, à partir des préformes 3, par l'étireuse-souffleuse 4.

L'étireuse-souffleuse 4 peut être de n'importe quel type et en particulier du type décrit dans la demande de brevet français numéro FR 03 05553 (également déposée par l'auteur de la présente demande) qui concerne un procédé de soufflage de corps creux en matière plastique minimisant la consommation d'air haute pression.

Dans l'exemple l'illustré, pour procéder simultanément à l'étirage-soufflage des quatre préformes 3 constituant un même groupe 84, arrêtées au poste 27 après transfert d'un pas p₂ dans le sens 18 depuis l'espace 34, l'étireuse-souffleuse 4 comporte quatre moules 193 se succédant dans le sens 18 et présentant des plans moyens non illustrés, perpendiculaires à la trajectoire 17, respectant entre eux l'espacement mutuel e₂.

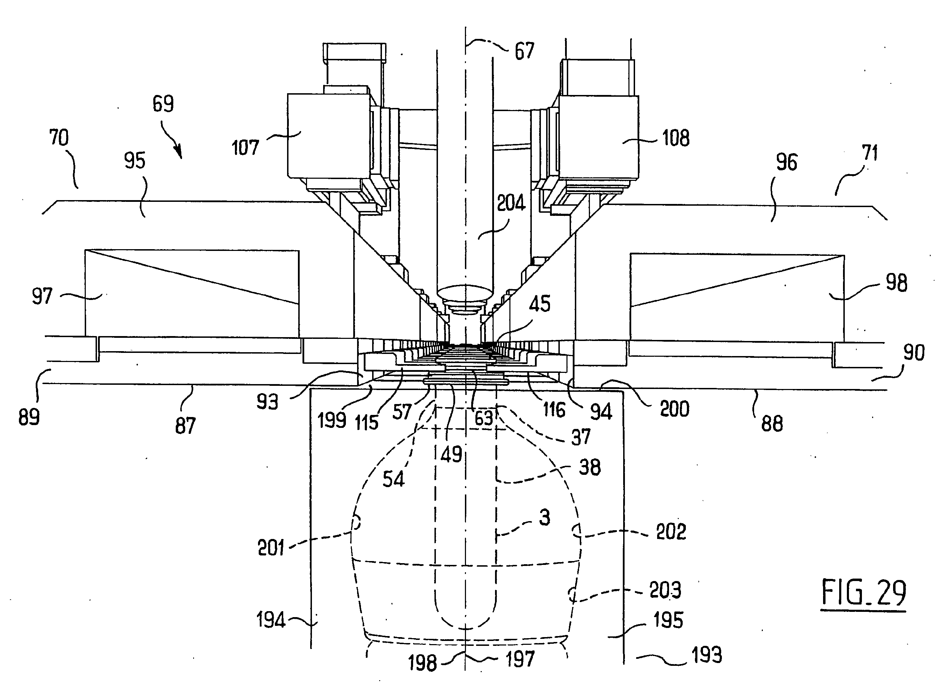

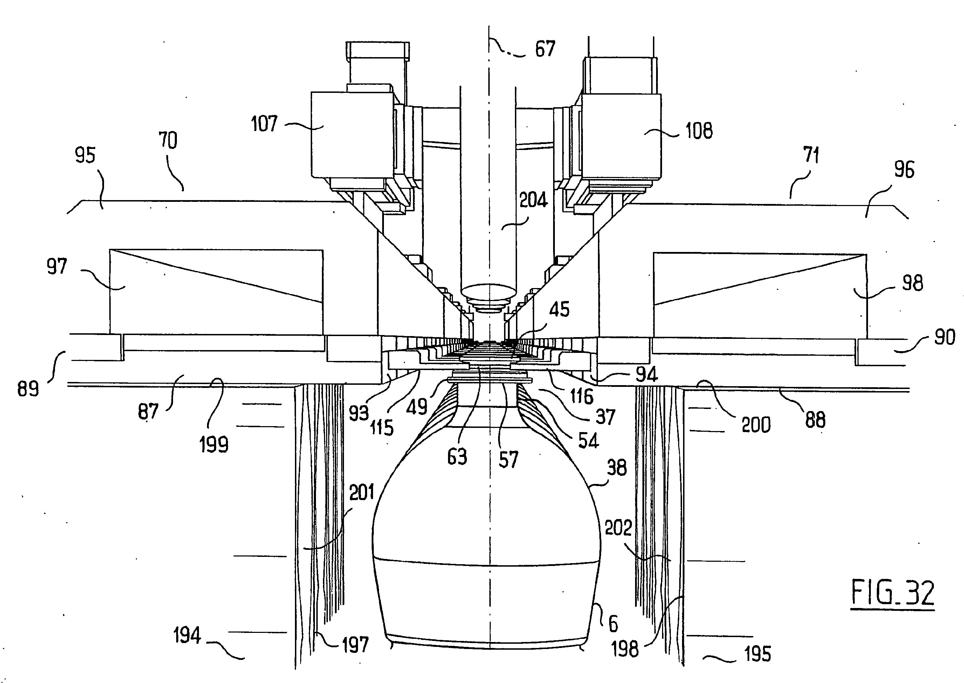

Chacun de ces moules 193 comporte deux moitiés 194, 195 disposées respectivement de part et d'autre du plan 67, symétriquement l'une de l'autre par rapport à celui-ci, et guidées au coulissement perpendiculairement à ce plan, sur des glissières 196 portées solidairement par le châssis 16 et orientées perpendiculairement au plan 67, de façon non illustrée mais aisément compréhensible par un Homme du métier, entre deux positions limites, à raison d'une position d'ouverture du moule 193, illustré aux figures 28 et 32, dans laquelle ces deux moitiés 194, 195 présentent l'une vers l'autre une face respective plane 197, 198, espacée du plan 67 d'une distance supérieure au rayon de la face périphérique extérieure 43 de la zone de corps 38 d'une préforme 3, et une position de fermeture du moule 193, illustrée aux figures 29 à 31, dans laquelle les deux faces 197, 198 sont mutuellement jointives, le long du plan 67.

Des moyens non représentés, tels que des vérins pneumatiques, commandés par les moyens 228, provoquent le passage simultané des moitiés de moule 194, 195 de l'une à l'autre des positions d'ouverture et de fermeture, en synchronisme avec les mouvements des chariots 70, 71 et des mors 115, 116, d'une façon qui sera décrit par la suite.

Chaque moitié de moule 194, 195 présente par ailleurs une face supérieure plane 199, 200 située de niveau avec les faces supérieures 74, 75 des soles 72, 73, localement interrompues au niveau du poste d'étirage-soufflage 27 et remplacées temporairement, à ce niveau, par les faces 199 et 200 des moitiés 194, 195 des moules 193 en position de fermeture, dans leur rôle de soutien des préformes 3 par l'épaulement 57 de leur collerette 49.

Dans chacune des faces 197, 198 débouche une moitié respective 201, 202 d'une empreinte 203 de moulage d'une bouteille 6, les deux moitiés 201 et 202 se complétant pour constituer l'empreinte 203 lorsque le moule 193 est fermé. Chacune des moitiés d'empreintes 201, 202 débouche également dans la face supérieure 199, 200 de la moitié de moule respective 194, 195, en présentant à son embouchure dans la face supérieure 199, 200 respectivement correspondante une forme complémentaire de celle d'une moitié respective de la plage 54 de la face périphérique extérieure 43 délimitant la partie 53 de la zone de col 37, si bien que l'empreinte 203 se substitue temporairement, à ce niveau, aux chants 76, 77 des soles 72, 73 pour assurer une retenue latérale des préformes 3 par sa plage 54.

Pendant le transfert d'un groupe 84 de quatre préformes 3, sur un pas p₂, par les chariots 70, 71 associés à l'espace 34, les moules 193 sont ouverts et, lorsque les préformes 3 s'arrêtent au poste 27, leurs axes 39 sont situés dans le plan moyen d'un moule 193 respectif. Coaxialement au-dessus de chaque bord 45 est disposée, à une certaine distance au-dessus de ce bord 45, l'extrémité inférieure d'une buse de soufflage respective 204, équipée d'une canne télescopique d'étirage non représentée. Les préformes 3 sont encore retenues, chacune, par les mors 115, 116 des chariots 70, 71 qui les ont ainsi amenées au poste 27. Cet état de ce poste est illustré à la figure 28.

Ensuite, comme le montre la figure 29, on ferme chacun des moules 193 sur l'une, respective, des préformes 3, ce qui forme autour d'elle une empreinte 203 respective et assure une retenue de son épaulement 57 et de sa plage annulaire 54, comme le montre la figure 29.

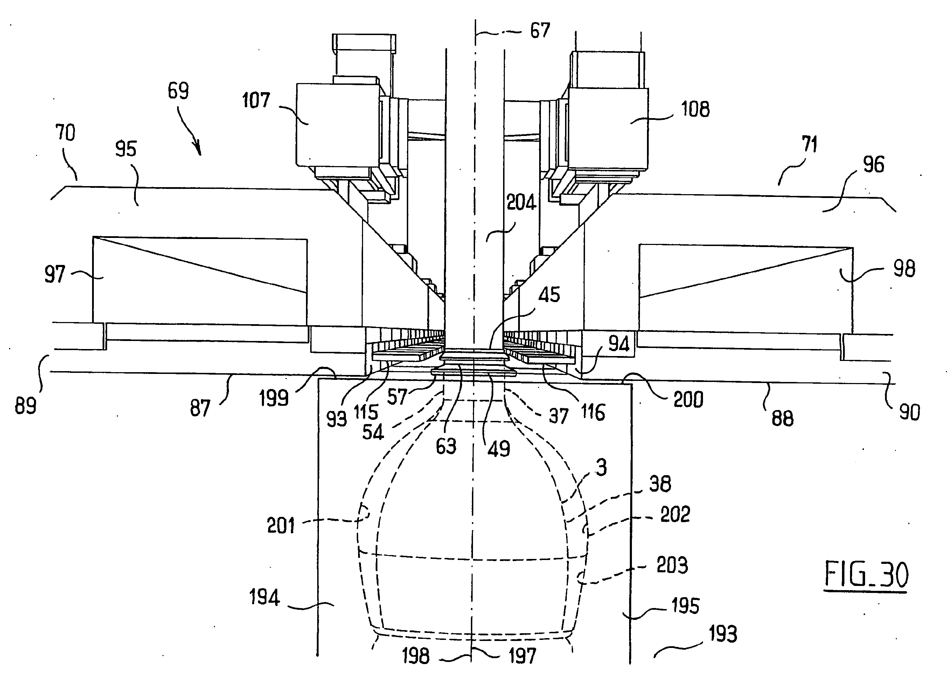

Alors, comme le montre la figure 30, les moyens de commande 228 provoquent le passage des mors 115 et 116 des chariots 70 et 71 associés à l'espace 34, alors situés au poste 27, simultanément, à leur position la plus éloignée du plan 67, ce qui libère la gorge 63 de chaque préforme 3, toutefois maintenue immobile par les moitiés 194, 195 du moule correspondant. On peut alors, comme le montre également la figure 30, provoquer par des moyens moteurs appropriés tels que des vérins pneumatiques non représentés, commandés par les moyens 228, une descente de chaque buse de soufflage, coaxialement, jusqu'au contact étanche avec le bord 45 d'une préforme 3 respective, ainsi que la descente d'une canne d'étirage respective à l'intérieur 47 de la zone de corps 38 de celle-ci, par l'intérieur 48 de sa zone de col 37, et provoquer l'étirage-soufflage de la zone de corps 38, rendue plastique lors du passage aux postes 20 à 26, jusqu'à ce que cette zone de corps épouse l'empreinte 203. La zone de col 37, par contre, chauffée le moins possible aux postes 20 à 26, et, en tout état de cause, retenue par l'embouchure de l'empreinte 203 et, pour partie, disposée au-dessus des faces supérieures 199 et 200, reste inchangée pendant cette opération d'étirage-soufflage.

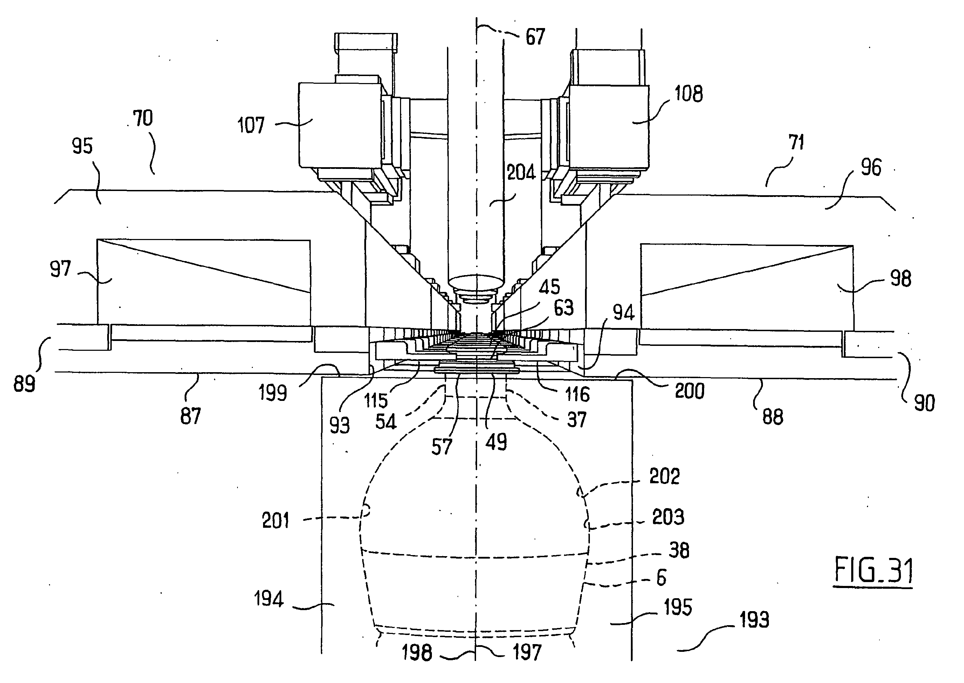

Pendant celle-ci, alors que les mors 115 et 116 occupent leur position la plus éloignée du plan 67, les moyens 228 provoquent le recul des chariots 70 et 71 d'un pas, à savoir le pas p₂, pour refermer ensuite les mors 115 et 116 des chariots 70, 71 associés au poste 27, revenus à celui-ci, sur les gorges 63 de la zone de col 37 des bouteilles 6 que sont devenues les préformes 3, puis ces moyens 228 provoquent le relevage des cannes d'étirage et des buses de soufflage 204. Cet état du poste d'étirage-soufflage 27 est illustré à la figure 31.

On observera que le cycle d'ouverture-fermeture des mors 115, 116 au poste d'étirage-soufflage est identique à celui qui a été décrit en référence aux postes 20 à 26 auxquels se situent les tournettes telles que 176.

Ensuite, en maintenant les mors 116, 117 dans leur position de préhension des zones de col 37 des bouteilles 6, on peut ouvrir des moules 193, comme on l'a illustré à la figure 32 puis, par un mouvement conjoint des chariots 70 et 71, d'un pas p₂, dans le sens 18, amener les bouteilles 6 ainsi formées à l'espace 35, puis successivement à chacun des postes 28 à 30, à l'espace 36, au poste 31, à l'espace 236, au poste 32, puis enfin au poste d'évacuation 9, par un cycle carré, répétitif, qui est celui que l'on a décrit en référence aux figures 9 à 15.

En particulier, les bouteilles 6 sont ainsi amenées, par groupe 85 de quatre bouteilles, successivement aux trois postes de remplissage 28, 29, 30 constituant la station de remplissage 5.

Celle-ci peut mettre en oeuvre toute technologie de dosage connue.

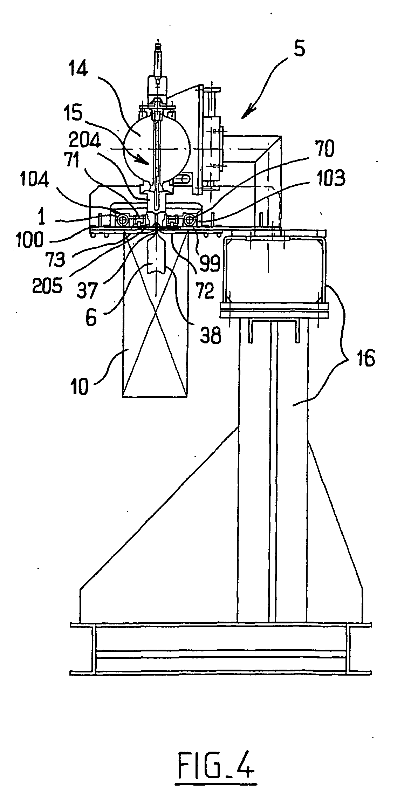

De préférence, lorsque les bouteilles 6 doivent être emplies d'un liquide tel que de l'eau, la station de remplissage 5 pourra être basée sur une technologie de dosage volumétrique, sans contact et sans perte de liquide tel que de l'eau, et être composée d'un ou plusieurs ensembles identiques comprenant chacun une cuve 14 contenant une réserve de liquide et des unités de dosage (doseur + bec à membrane), et par exemple être conforme à l'un des types décrits dans la demande de brevet français N° 03 03767 déposée le 27 mars 2003 au nom de MAPCO, société du même groupe que la Demanderesse, ces unités de dosage dosant chacune une partie du volume total de liquide à introduire dans une bouteille 6, comme c'est le cas dans l'exemple illustré en particulier à la figure 4.

La cuve 14, qui peut être avec couvercle ou de forme cylindrique sans couvercle, contient les doseurs 15 fixes qui sont implantés verticalement et équipés, en leur partie inférieure, d'un bec à membrane 205.

On peut noter que les becs à membrane n'interviennent en aucun cas dans la qualité du dosage, ils assurent uniquement le début du remplissage et ne se referment qu'une fois celui-ci terminé.

La conception générale du système de dosage est réalisée pour éliminer toute zone de rétention.

Cette technologie est simple et répétitive, le volume étant défini une fois pour toute au moment de l'usinage des doseurs. Le nombre de joint est extrêmement réduit, le remplissage se fait sans contact, ce qui réduit considérablement les risques de pollution.

Plus précisément, dans l'exemple illustré, la cuve 14 est commune à trois postes de remplissage 28, 29, 30 dont chacun est propre à recevoir un groupe respectif 85 de quatre bouteilles 6 et à introduire dans chacune d'entre elles, lorsqu'elle est arrêtée à chacun des postes, un tiers du volume total de liquide à y introduire avant bouchage.

A titre d'exemple non limitatif, la figure 33 illustre le poste 28, qui est le premier auquel un groupe 85 de quatre bouteilles 6 s'arrête dans son parcours de la trajectoire 17 dans le sens 18.

Coaxialement, au-dessus du bord 45 de la zone de col 37 de chaque bouteille 6 de ce groupe 85, le poste 28 comporte un bec à membrane 205, référence étant faite à une position que les bouteilles 6 du groupe 85 occupent après leur transfert d'un pas p₂ à ce poste 28, et alors qu'elles sont encore tenues au niveau de leur gorge 63 par les mors 115 et 116 des chariots 70 et 71 qui les ont amenées à ce poste 28.

Alors qu'elles sont ainsi maintenues en position par les mors 115 et 116 de ces chariots 70 et 71, puis pendant que ces derniers accomplissent leur mouvement de retour, de façon alternée, comme on l'a décrit en référence aux figures 11 à 15, et que ces bouteilles sont progressivement prises en charge par les mors 115, 116 des chariots 70, 71 immédiatement suivants dans le sens 18, étant entendu qu'elles restent alors en permanence retenues soit par les mors 115 de l'un ou l'autre de ces chariots, soit par les mors 116 de l'un ou l'autre de ces chariots, chacun des becs doseurs 205 laisse descendre dans la bouteille 6 respectivement correspondante un tiers du volume total de liquide à y introduire.

Lorsque les bouteilles 6 du groupe 85 se trouvent ensuite à l'arrêt au poste de remplissage 29, elles reçoivent des becs doseurs 205 correspondants, dans des conditions identiques, un deuxième tiers de ce volume total, dont elles reçoivent le troisième tiers d'un bec 205 respectif lorsqu'elles sont ensuite à l'arrêt au dernier poste de remplissage 30, en référence au sens 18.

Les bouteilles 6 de chaque groupe 85 peuvent ainsi recevoir exactement un tiers du volume total à chaque poste de remplissage 28, 29, 30, mais on prévoit de préférence qu'elles reçoivent un peu plus d'un tiers de ce volume total aux deux premiers postes de remplissage 28 et 29 auxquels elles s'arrêtent successivement lorsqu'elles se déplacent pas à pas dans le sens 18, et le complément, soit un peu moins d'un tiers du volume total, au dernier de ces postes de remplissage. Ainsi, en mettant à profit la totalité du temps d'arrêt des bouteilles 6 aux postes 28 à 30, laquelle est identique, pour procéder à un écoulement du liquide à y introduire respectivement, on peut réduire le débit d'écoulement au dernier poste de remplissage 30, en comparaison avec les deux premiers poste de remplissage 28 et 29, c'est-à-dire pratiquer d'abord un remplissage partiel rapide puis un remplissage terminal plus lent, de façon favorable à la précision du remplissage comme il est connu d'un Homme du métier et habituellement pratiqué à l'aide de moyens complexes lorsqu'il s'agit d'effectuer un remplissage intégralement à poste unique.

Le groupe 85 constitué des bouteilles 6 ainsi complètement remplies est ensuite acheminé, par le cycle carré, répétitif, des mors 115, 116 portés par les chariots 70, 71, à l'espace 36 puis, successivement, au poste de bouchage 31, muni de quatre dispositifs de bouchage assurant simultanément le bouchage des quatre bouteilles 6 du groupe 85, puis à l'espace 236, puis au poste d'étiquetage 32, et enfin au poste d'évacuation 9 où elles sont reprises par exemple pour emballage.

Les postes de bouchage 31 et d'étiquetage 32 des bouteilles 6 sont équipés de systèmes 7, 8 connus et ayant fait leurs preuves. Ces systèmes devront toutefois être à même de s'adapter aux cadences et caractéristiques de l'ensemble de convoyage.

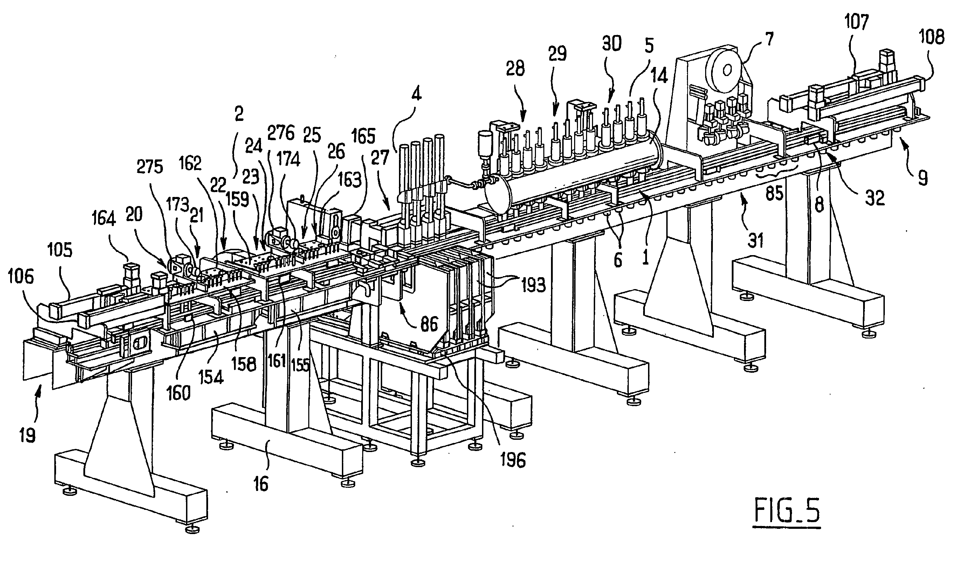

Le système de bouchage 7 peut consister soit en un mécanisme de mise en place de bouchons vissés, comme c'est le cas lorsque l'installation est alimentée en préformes 3 du type illustré à la figure 7, soit en un mécanisme de pose d'opercules découpés dans une bande et fixés par thermo-scellage ou par tout autre moyen, comme c'est le cas lorsque les préformes 3 sont du type illustré à la figure 8 et comme on l'a illustré à la figure 5.

L'étiquetage pourra être réalisé, par exemple, grâce à un système de marquage laser avec un concept moderne basé sur un laser CO2, une alimentation et un contrôle des fonctions exécuté sur un processeur industriel avantageusement intégré aux moyens 228.

L'ensemble complet de l'installation est monté sur un châssis 16 commun, ce qui permet de regrouper tous les points de connexion des énergies, de simplifier la mise en place sur site et de garantir une excellente ergonomie du système.

Cette installation comporte en outre avantageusement un certain nombre de dispositions qui n'ont pas été illustrées dans le détail dans la mesure où leur réalisation relève des aptitudes normales d'un Homme du métier.

L'installation est munie de portes d'accès transparentes et sécurisées. Un capotage 237, créant une cabine fermée autour de celui-ci, de l'ensemble permet de maintenir les équipements en surpression grâce à une arrivée d'air stérile. Le générateur 238 d'air stérile est composé d'un ventilateur assurant un débit et une pression en adéquation avec les fuites naturelles de la cabine, un filtre à l'aspiration, un filtre final et un filtre absolu.

Le fonctionnement est géré par un automate programmable intégré aux moyens 228 et assurant la gestion de l'ensemble des commandes électriques 207.

Un écran de contrôle 206 affiche les états de fonctionnement ainsi que les consignes nécessaires à la bonne marche de l'installation de conditionnement.

Le positionnement des divers éléments constitutifs donne à l'objet de l'invention un maximum d'effets utiles qui n'avaient pas été, à ce jour, obtenus par des systèmes similaires.

Il est bien entendu que, bien que le procédé et l'installation selon l'invention aient été décrits en relation avec la fabrication de bouteilles, au sens le plus habituel de ce terme, par étirage-soufflage de préformes 3 en matériau thermofusible, et avec le remplissage de ces bouteilles au moyen d'un liquide, leurs applications pourraient s'étendre à d'autres types de récipients, correspondant à l'acception plus large, précitée, du terme « bouteilles », à d'autres modes de formage des préformes destinées à les constituer, et à d'autres natures de contenu, sans que l'on sorte pour autant du cadre de la présente invention.

Même dans l'application choisie, on pourrait apporter de nombreuses variantes au mode d'opération des différents postes de travail, à leurs constituants, et au cycle de transfert des préformes 3 et des bouteilles 6 de l'un à l'autre et hors de chacun d'eux, dès lors que serait conservée en permanence, pendant les transferts, une totale maîtrise de leur position le long de leur trajectoire 17, par préhension par une partie, de préférence toujours la même, de leur zone de col 37 dont la conformation reste inchangée et qui peut ainsi fournir une référence précise, constante, pour le travail aux différents postes, auxquels la retenue pourrait être effectuée par les mêmes moyens que pendant les transferts, ou par des moyens différents mais propres à conserver à la zone de col 37 un positionnement précis, permettant de la reprendre en charge dans des conditions identiques à ses conditions d'arrêt à ces différents postes.

## Revendications

1. Procédé de formage et de remplissage de bouteilles (6) en matière thermoplastique, comportant la succession des étapes consistant à :
**a)** choisir ou réaliser une préforme (3) de bouteille en matière thermoplastique comportant une zone de col (37) de conformation définitive, présentant un axe déterminé (39) et, autour dudit axe (39), une périphérie extérieure (42) et une périphérie intérieure (40) délimitant un orifice (46) par un bord (45), et une zone de corps (38) de conformation provisoire, creuse, située à l'opposé dudit orifice (46) par rapport à la zone de col (37) en référence audit axe (39), et communiquant avec l'extérieur par l'intermédiaire dudit orifice (46),
**b)** placer la préforme (3) à des postes successifs (20 à 27) de travail de celle-ci, à savoir au moins un poste (20 à 22, 24 à 26) de chauffage de sa zone de corps (38), pour rendre celle-ci plastique, et un poste (27) de formage de sa zone de corps (38), pour donner à celle-ci une conformation définitive et former ainsi une bouteille (6), comportant la zone de col (37) de conformation définitive et la zone de corps (38) alors également de conformation définitive,
**c)** placer ensuite la bouteille (6) à des postes successifs (28 à 32) de travail de celle-ci, à savoir au moins un poste (28 à 30) de remplissage par l'intermédiaire dudit orifice (46), pour y introduire une dose déterminée d'un contenu, et un poste (31) de bouchage dudit orifice (46), pour y enfermer ladite dose, en assurant à la zone de col (37) une orientation déterminée telle que ledit orifice (46) soit tourné vers le haut,
**d)** évacuer la bouteille (6), enfermant ladite dose, hors du dernier (32) des postes (28 à 32) de travail de la bouteille (6),
**caractérisé en ce que,** pour mettre en oeuvre les étapes b, c, d, on procède à des transferts successifs de la préforme (3) au premier (20) des postes (20 à 27) successifs de travail de celle-ci, puis de l'un à l'autre des postes (20 à 27) successifs de travail de celle-ci, puis à des transferts successifs de la bouteille (6) du dernier (27) des postes successifs (20 à 27) de travail de la préforme (3) au premier (28) des postes successifs (28 à 32) de travail de la bouteille (6), puis de l'un à l'autre des postes successifs (28 à 32) de travail de celle-ci, puis hors du dernier (32) des postes successifs (28 à 32) de travail de celle-ci, en tenant en permanence la zone de col (37) par sa périphérie extérieure (42) de façon à la retenir dans ladite orientation et à la guider suivant une trajectoire déterminée (17), passant successivement par les postes successifs (20 à 32) de travail de la préforme (3) et de la bouteille (6), en maîtrisant en permanence sa position le long de ladite trajectoire (17) et en laissant en permanence, pendant les transferts successifs, la zone de corps (38) et ledit orifice (46) suffisamment dégagés pour ne constituer d'entrave ni au passage de la préforme (3) et de la bouteille (6) aux postes successifs (20 à 32) de travail de celles-ci, ni au travail de celles-ci auxdits postes successifs (20 à 32) de travail, à savoir en particulier au chauffage et au formage de la zone de corps (38) de la préforme (3), ainsi qu'au remplissage et au bouchage de la bouteille (6).

2. Procédé selon la revendication 1, **caractérisé en ce que** l'on tient la zone de col (37) par une même partie (63) de sa périphérie extérieure (42), de façon similaire, pendant les transferts successifs de la préforme (3) et de la bouteille (6).

3. Procédé selon la revendication 2, **caractérisé en ce que :**
- lors de l'étape a, on choisit ou réalise la préforme (3) de telle sorte que la zone de col (37) présente à sa périphérie extérieure (42) deux épaulements annulaires antagonistes (58, 61), continus, de révolution autour dudit axe (39), et, entre ces deux épaulements antagonistes (58, 61), un raccordement mutuel annulaire (62), continu, de révolution autour dudit axe (39), et **en ce que**
- ces deux épaulements antagonistes (58, 61) et leur raccordement mutuel (62) constituent ladite même partie (63) de la périphérie extérieure (42) de la zone de col (37).

4. Procédé selon la revendication 3, **caractérisé en ce que** les deux épaulements antagonistes (58, 61) et leur raccordement mutuel (62) définissent une gorge annulaire (63), continue, de révolution autour dudit axe (39).

5. Procédé selon l'une quelconque des revendications 3 et 4, **caractérisé en ce que :**
- lors de l'étape a, on choisit ou réalise la préforme (3) de telle sorte que la zone de col (37) présente à sa périphérie extérieure (42) un épaulement annulaire supplémentaire (57), continu, de révolution autour dudit axe (39), tourné vers le bas dans ladite orientation, et une plage annulaire (54), continue, de révolution autour dudit axe (39), tournée dans le sens d'un éloignement par rapport audit axe (39), et **en ce que**
- en permanence, pendant les transferts successifs de la préforme (3) et de la bouteille (6), on offre un appui audit épaulement supplémentaire (57), vers le bas, et à ladite plage annulaire (54), dans le sens d'un éloignement par rapport audit axe (39), de part et d'autre de ladite trajectoire (17), alors que la zone de col (37) présente ladite orientation.

6. Procédé selon la revendication 5, **caractérisé en ce que,** lors de l'étape a, on choisit ou réalise la préforme (3) de telle sorte que la zone de col (37) présente à sa périphérie extérieure (42) une collerette annulaire (49), continue, de révolution autour dudit axe (39), formant ledit épaulement supplémentaire (57).

7. Procédé selon l'une quelconque des revendications 5 et 6, **caractérisé en ce que** ledit épaulement supplémentaire (57) est situé à l'opposé dudit orifice (46) par rapport aux deux épaulements antagonistes (58, 61) et à leur raccordement (62).

8. Procédé selon l'une quelconque des revendications 5 à 7, **caractérisé en ce que** ladite plage (54) est située à l'opposé dudit orifice (46) par rapport à l'épaulement supplémentaire (57).

9. Procédé selon l'une quelconque des revendications 1 à 8, **caractérisé en ce que :**
- les postes successifs (20 à 32) de travail de la préforme (3) et de la bouteille (6) sont stationnaires suivant ladite trajectoire (17), **en ce que**
- l'on procède auxdits transferts successifs de la préforme (3) et de la bouteille (6) en faisant parcourir pas à pas ladite trajectoire (17) par la zone de col (37), en adaptant mutuellement le pas (p₁, p₂) et la position relative des postes successifs (20 à 32) de travail de la préforme (3) et de la bouteille (6), de telle sorte que le franchissement de pas successifs (p₁, p₂) place successivement la préforme (3) en arrêt temporaire aux postes successifs (20 à 27) de travail de celle-ci et la bouteille (6) en arrêt temporaire aux postes successifs (28 à 32) de travail de celle-ci, selon un séquencement déterminé, et **en ce que**
- pendant l'arrêt temporaire de la préforme (3) ou de la bouteille (6) à un poste de travail (20 à 27), on procède au travail respectivement correspondant de la préforme (3) ou de la bouteille (6).

10. Procédé selon la revendication 9, **caractérisé en ce que,** à l'un, au moins, des postes successifs (20 à 32) de travail de la préforme (3) et de la bouteille (6), à savoir au moins au ou à chaque poste (20 à 22, 24 à 26) de chauffage de la préforme (3) ou au poste (27) de formage de celle-ci, après le début de l'arrêt temporaire et avant la fin de celui-ci, successivement :
- on commence à retenir la zone de col (37) par une autre partie (45) de celle-ci, de façon à la rendre stationnaire en référence à ladite trajectoire (17),
- puis on cesse de tenir la zone de col (37) par ladite même partie (63) de sa périphérie extérieure (42),
- on procède au travail respectivement correspondant,
- puis on recommence à tenir la zone de col (37) par ladite même partie (63) de sa périphérie extérieure (42),
- puis on cesse de retenir la zone de col (37) par ladite autre partie (45) de celle-ci.

11. Procédé selon la revendication 9 ou 10 dans sa relation de dépendance vis-à-vis de l'une quelconque des revendications 5 à 8, **caractérisé en ce que** l'on continue à offrir lesdits appuis audit épaulement supplémentaire (57) et à ladite plage (54) pendant l'arrêt temporaire aux postes successifs (20 à 32) de travail de la préforme (3) et de la bouteille (6).

12. Procédé selon la revendication 11 dans sa relation de dépendance vis-à-vis de la revendication 10, **caractérisé en ce que :**
- ladite autre partie (45) de la zone de col (37) est ledit bord (45), et **en ce que**
- l'on retient la zone de col (37) par ladite autre partie (45) de celle-ci en appliquant audit bord (45), par l'intérieur (48) de la zone de col (37), une poussée axiale orientée de façon à affermir l'appui dudit épaulement supplémentaire (57), vers le bas.

13. Procédé selon la revendication 12, **caractérisé en ce que,** au ou à chaque poste (20 à 22, 24 à 26) de chauffage de la préforme (3), on accompagne ladite poussée axiale d'une rotation autour dudit axe (39), provoquant une rotation de la préforme (3) sur elle-même, autour dudit axe (39), par glissement au niveau de l'appui dudit épaulement supplémentaire (57) vers le bas.

14. Procédé selon l'une quelconque des revendications 11 à 13, **caractérisé en ce que** l'on alterne des phases :
- de transfert de la préforme (3) ou de la bouteille (6) en tenant la zone de col (37) par ladite même partie (63) de sa périphérie extérieure (42) simultanément de part et d'autre de ladite trajectoire (17), et
- d'arrêt de la préforme (3) ou de la bouteille (6) en tenant la zone de col (37) par ladite même partie (63) de sa périphérie extérieure (42) alternativement de part ou d'autre de ladite trajectoire (17).

15. Procédé selon l'une quelconque des revendications 9 à 14, **caractérisé en ce que** l'on allonge le pas (p₁, p₂) entre les postes successifs (20 à 26) de travail de la préforme (3) qui précèdent le poste (27) de formage de celle-ci et le poste (27) de formage de celle-ci, d'une première valeur déterminée (p₁) que ce pas (p₁, p₂) présente pendant le transfert et l'arrêt temporaire de la préforme (3) aux postes successifs (20 à 26) de travail de celle-ci qui précèdent le poste (27) de formage de celle-ci, et une deuxième valeur déterminée (p₂) que ce pas (p₁, p₂) présente pendant l'arrêt temporaire de la préforme (3) au poste (27) de formage de celle-ci et pendant le transfert et l'arrêt temporaire aux postes successifs (28 à 32) de travail de la bouteille (6) et le transfert hors du dernier (32) des postes successifs (28 à 32) de travail de la bouteille (6).

16. Procédé selon l'une quelconque des revendications 9 à 15, **caractérisé en ce que,** alors que le remplissage d'une bouteille (6) par ladite dose demande un nombre entier, déterminé, de fois le temps nécessaire au formage d'une préforme (3), en arrondissant au nombre entier supérieur, on prévoit ce nombre entier de postes (28 à 30) de remplissage, de façon répartie suivant ladite trajectoire (17) selon le pas (p₂) de parcours de postes (28 à 32) de travail de la bouteille (6) et l'on introduit dans la bouteille (6) une dose partielle correspondant au rapport de ladite dose audit nombre entier à son arrêt temporaire à chaque poste (28 à 30) de remplissage, respectivement.

17. Procédé selon l'une quelconque des revendications 1 à 16, **caractérisé en ce qu'**on le met en oeuvre simultanément pour le formage et le remplissage d'un nombre déterminé de bouteilles (6), supérieur à un, en prévoyant chacun des postes (20 à 32) de travail de la préforme (3) et de la bouteille (6) en ce nombre d'exemplaires, les exemplaires d'un même poste de travail (20 à 32) étant groupés et répartis en étant mutuellement espacés de façon déterminée suivant ladite trajectoire (17), et en appliquant lesdits transferts successifs à un groupe (84, 85) dudit nombre déterminé de préformes (3) puis de bouteilles (6), réparties suivant ladite trajectoire (17) en étant mutuellement espacées de façon déterminée (e₁, e₂), en adaptant mutuellement la répartition (e₁, e₂) des préformes (3) et des bouteilles (6) suivant ladite trajectoire (17) et celle des exemplaires de chaque poste de travail (20 à 32) de telle sorte que, lorsqu'un groupe (84, 85) de préformes (3) ou de bouteilles (6) se trouve à un poste de travail (20 à 32), respectivement une préforme (3) ou une bouteille (6) de ce groupe (84, 85) se situe à l'un, respectif, des exemplaires de ce poste de travail (20 à 32).

18. Procédé selon la revendication 17, **caractérisé en ce que** l'on augmente l'espacement mutuel (e₁, e₂) entre les exemplaires d'un même poste de travail (20 à 32) de la préforme (3) ou de la bouteille (6), respectivement entre les préformes (3) ou les bouteilles (6) dudit groupe (84, 85), entre les postes successifs (20 à 26) de travail de la préforme (3) qui précèdent le poste (27) de formage de celle-ci et le poste (327 de formage de celle-ci, d'une première valeur déterminée (e₁) que cet espacement (e₁, e₂) présente aux postes successifs (20 à 26) de travail de la préforme (3) qui précèdent le poste (27) de formage de celle-ci, à une deuxième valeur déterminée (e₂) que cet espacement (e₁, e₂) présente au poste (27) de formage de la préforme (3) et aux postes successifs (28 à 32) de travail de la bouteille (6).

19. Procédé selon l'une quelconque des revendications 1 à 18, **caractérisé en ce que** l'on maintient en continu une surpression gazeuse au moins autour de l'orifice (46) de la préforme (3) ou de la bouteille (6) pendant lesdits transferts successifs et aux postes successifs (20 à 32) de travail de la préforme (3) et de la bouteille (6).

20. Installation de formage et de remplissage de bouteilles (6) en matière thermoplastique, à partir de préformes (3) de bouteille en matière thermoplastique comportant une zone de col (37) de conformation définitive, présentant un axe déterminé (39) et, autour dudit axe (39), une périphérie extérieure (42) et une périphérie intérieure (40) délimitant un orifice (46) par un bord (45), et une zone de corps (38) de conformation provisoire, creuse, située à l'opposé dudit orifice (46) par rapport à la zone de col (38) en référence audit axe (39), et communiquant avec l'extérieur par l'intermédiaire dudit orifice (46), ladite installation comportant :
- des postes successifs (20 à 26) de travail d'une préforme (3), à savoir au moins un poste (20 à 22, 24 à 26) de chauffage de sa zone de corps (38), pour rendre celle-ci plastique, et un poste (27) de formage de sa zone de corps (38), pour donner à celle-ci une conformation définitive et former ainsi une bouteille (6), comportant la zone de col de conformation définitive et la zone de corps (38) alors également de conformation définitive,
- des postes successifs (28 à 32) de travail de la bouteille (6), à savoir au moins un poste (28 à 30) de remplissage par l'intermédiaire dudit orifice (46), pour y introduire une dose déterminée d'un contenu, et un poste (31) de bouchage dudit orifice (46), pour y enfermer ladite dose, en assurant à la zone de col (37) une orientation déterminée telle que ledit orifice (46) soit tourné vers le haut, et
- des moyens (1) de transfert de la préforme (3) au premier (20) des postes successifs (20 à 27) de travail de celle-ci, puis de l'un à l'autre des postes successifs (20 à 27) de travail de celle-ci, puis de la bouteille (6) du dernier (27) des postes successifs (20 à 27) de travail de la préforme (3) au premier (28) des postes successifs (28 à 32) de travail de la bouteille (6), puis de l'un à l'autre des postes successifs (28 à 32) de travail de celle-ci, puis hors du dernier (32) des postes successifs (28 à 32) de travail de celle-ci,
**caractérisée en ce qu'**elle est constituée d'un ensemble intégré dans lequel les moyens (1) de transfert de la préforme (3) et de la bouteille (6) comportent un système de convoyage (1) unique de type linéaire et positif comportant lui-même :
- des moyens (115, 116) de préhension temporaire commandée de la zone de col (37) de la préforme (3) et de la bouteille (6) par sa périphérie extérieure (42), dans ladite orientation, laissant ledit orifice (46) et la zone de corps (38) dégagés,
- des moyens moteurs commandés (108 à 103, 183) pour déplacer les moyens de préhension temporaire (115, 116) de façon guidée suivant une trajectoire déterminée (17) passant successivement par les postes successifs (20 à 32) de travail de la préforme (3) et de la bouteille (6), et
- des moyens (228) de commande synchronisée des moyens de préhension temporaire (115, 116), des moyens moteurs (105 à 108, 183) et des postes successifs (20 à 32) de travail de la préforme (3) et de la bouteille (6) de telle sorte que les moyens moteurs (105 à 108, 183) assurent ledit transfert de la préforme (3) et de la bouteille (6) par l'intermédiaire des moyens de préhension temporaire (115, 116), alors que ces derniers tiennent en permanence, pendant ledit transfert, la zone de col (37) par sa périphérie extérieure (42) de façon à la maintenir dans ladite orientation et à maîtriser en permanence sa position le long de ladite trajectoire (17), et que les postes successifs (20 à 32) de travail de la préforme (3) et de la bouteille (6) procèdent au travail respectif de la préforme (3) ou de la bouteille (6) lorsque la préforme (3) ou la bouteille (6) s'y trouve, respectivement.

21. Installation selon la revendication 20, **caractérisée en ce que** les moyens de préhension temporaire (115, 116) sont propres à tenir la zone de col (37) par une même partie (63) de sa périphérie extérieure (42), de façon similaire, pendant ledit transfert.

22. Installation selon la revendication 21, **caractérisée en ce que,** lorsque la zone de col (37) présente à sa périphérie extérieure (42) deux épaulements annulaires antagonistes (57, 61), continus, de révolution autour dudit axe (39), et, entre ces deux épaulements antagonistes (57, 61), un raccordement mutuel annulaire (62), continu, de révolution autour dudit axe (39), les moyens de préhension temporaire (115, 116) comportent une paire de mors (115, 116) disposés face à face, respectivement de part et d'autre de ladite trajectoire (17), et susceptibles d'occuper l'un par rapport à l'autre, de façon commandée, une position de préhension de la zone de col (37), dans laquelle ils sont comparativement rapprochés, et une position de libération de la zone de col (37), dans laquelle ils sont comparativement écartés, **en ce que** lesdits mors (115, 116) présentent une conformation telle que, dans leur position de préhension de la zone de col (37), ils épousent les deux épaulements antagonistes (57, 61) et leur raccordement mutuel (62), sur au moins une partie de leur circonférence en référence audit axe (39), au moins dans deux zones diamétralement opposées en référence à celui-ci, et **en ce que** les moyens de commande synchronisée (228) commandent également lesdits mors (115, 116) de telle sorte qu'ils occupent leur position de préhension de la zone de col (37) au moins pendant ledit transfert.

23. Installation selon la revendication 22, **caractérisée en ce que,** lorsque les deux épaulements antagoniste (57, 61) et leur raccordement mutuel (62) définissent une gorge annulaire (63), continue, de révolution autour dudit axe (39), lesdits mors (115, 116) présentent une conformation telle que, dans ladite position de préhension de la zone de col (37), ils épousent intérieurement ladite gorge (63) sur au moins une partie de sa circonférence en référence audit axe (39), au moins dans deux zones diamétralement opposées en référence à celui-ci.

24. Installation selon l'une quelconque des revendications 22 et 23, **caractérisée en ce que,** lorsque la zone de col (37) présente à sa périphérie extérieure (42) un épaulement supplémentaire annulaire (57), continu, de révolution autour dudit axe (39), tourné vers le bas dans ladite orientation, et une plage annulaire (54), continue, de révolution autour dudit axe (39), tournée dans le sens d'un éloignement par rapport audit axe (39), elle comporte respectivement de part et d'autre de ladite trajectoire (17), tout au long de celle-ci au moins en dehors des postes successifs (20 à 32) de travail de la préforme (3) et de la bouteille (6), des moyens (72, 73) d'appui continu, coulissant, dudit épaulement supplémentaire (57), vers le bas, et de ladite plage annulaire (54), dans le sens d'un éloignement par rapport audit axe (39), de part et d'autre de ladite trajectoire (17), en permanence, au fur et à mesure desdits transferts successifs de la préforme (3) et de la bouteille (6), alors que la zone de col (37) présente ladite orientation.

25. Installation selon la revendication 24, **caractérisée en ce que,** lorsque ledit épaulement supplémentaire (57) est situé à l'opposé dudit orifice (46) par rapport aux deux épaulements antagonistes (57, 61) et à leur raccordement (62) et que ladite plage (54) est située à l'opposé dudit orifice (46) par rapport à l'épaulement supplémentaire (57), lesdits moyens d'appui (72, 73) sont constitués par deux soles de glissement fixes (72, 73), disposées respectivement de part et d'autre de ladite trajectoire (17), en dessous desdits mors (115, 116), et continues au moins en dehors des postes de travail (20 à 32).

26. Installation selon l'une quelconque des revendications 20 à 25, **caractérisé en ce que :**
- les postes successifs (20 à 32) de travail de la préforme (3) et de la bouteille (6) sont stationnaires suivant ladite trajectoire (17), **en ce que**
- les moyens moteurs (105 à 108) sont choisis d'un type pas à pas, le pas (p₁, p₂) et la position relative des postes successifs (20 à 32) de travail de la préforme (3) et de la bouteille (6) étant adaptés mutuellement de telle sorte que le franchissement de pas successifs (p₁, p₂) place successivement la préforme (3) en arrêt temporaire aux postes successifs (20 à 27) de travail de celle-ci et la bouteille (6) en arrêt temporaire aux postes successifs (28 à 32) de travail de celle-ci, selon un séquencement déterminé, et **en ce que**
- les moyens de commande synchronisée (228) commandent les postes successifs (20 à 32) de travail de la préforme (3) et de la bouteille (6) de telle sorte que la préforme (3) ou la bouteille (6) y soit travaillée alors qu'elle s'y trouve en arrêt temporaire.

27. Installation selon la revendication 26, **caractérisé en ce que** l'un, au moins, des postes successifs (20 à 32) de travail de la préforme (3) et de la bouteille (6), à savoir au moins le ou chaque poste (20 à 22, 24 à 26) de chauffage de la préforme (3) ou le poste (27) de formage de celle-ci, comporte des moyens (176, 196) d'immobilisation temporaire commandée de la préforme (3) ou de la bouteille (6) à l'encontre d'un déplacement suivant ladite trajectoire (17), susceptibles d'occuper une position de retenue de la zone de col (37) par une autre partie (45) de celle-ci et une position de libération de la zone de col (37), et **en ce que** les moyens de commande synchronisée (228) commandent également les moyens (176, 196) d'immobilisation temporaire de telle sorte que, après le début de l'arrêt temporaire et avant la fin de celui-ci, successivement :
- les moyens d'immobilisation temporaire (176, 196) gagnent leur position de retenue de la zone de col (37), de façon à la rendre stationnaire en référence à ladite trajectoire (17),
- les moyens de préhension temporaire (115, 116) gagnent leur position de libération de la zone de col (37),
- ledit un, au moins, des postes successifs (20 à 32) de travail procède au travail respectivement correspondant,
- les moyens de préhension temporaire (115, 116) regagnent leur position de préhension de la zone de col (37),
- les moyens d'immobilisation temporaire (176, 196) regagnent leur position de libération de la zone de col (37).

28. Installation selon la revendication 26 ou 27 dans sa relation dé dépendance vis-à-vis de l'une quelconque des revendications 24 et 25, **caractérisée en ce qu'**elle comporte lesdits moyens (72, 73) d'appui continu, coulissant, également aux postes successifs (20 à 32) de travail de la préforme (3) et de la bouteille (6).

29. Installation selon la revendication 28 dans sa relation de dépendance vis-à-vis de la revendication 27, **caractérisée en ce que** les moyens d'immobilisation temporaire (176), en position de retenue de la zone de col (37), s'engagent coaxialement dans la périphérie intérieure (48) de celle-ci en appliquant audit bord (45) une poussée vers lesdits moyens (72, 73) d'appui continu alors que, en position de libération, ils dégagent totalement la zone de col (37).

30. Installation selon la revendication 29, **caractérisée en ce que :**
- au ou à chaque poste (20 à 32) de chauffage de la préforme (3), les moyens d'immobilisation temporaire (176) sont montés à la rotation autour d'un axe (167) qui est stationnaire suivant ladite trajectoire (17) et avec lequel ledit axe (39) de la zone de col (37) coïncide lorsque la préforme (3) est arrêtée audit poste (20 à 22, 24 à 26) de chauffage de celle-ci, **en ce que**
- sont prévus des moyens commandés (275, 276) d'entraînement des moyens d'immobilisation temporaire (176) à la rotation autour dudit axe stationnaire, et **en ce que**
- les moyens de commande synchronisée (228) commandent également ces moyens d'entraînement (275, 276) de telle sorte que les moyens d'immobilisation temporaire (176) soient entraînés à la rotation autour dudit axe stationnaire (167) lorsqu'ils occupent leur position de retenue de la zone de col (37).

31. Installation selon l'une quelconque des revendications 28 à 30, **caractérisée en ce qu'**elle comporte plusieurs paires de mors (115, 116) réparties selon le pas (p₁, p₂) suivant ladite trajectoire (17) et **en ce que** les moyens (228) de commande synchronisée commandent les mors (115, 116) et les moyens moteurs (105 à 108, 183) de telle sorte que, successivement :
- les paires de mors (115, 116) avancent ensemble d'un pas (p₁, p₂) alors que les mors (115, 116) respectifs occupent leur position de préhension,
- les mors (115) situés d'un premier côté de ladite trajectoire (17) gagnent leur position de libération, puis reculent ensemble d'un pas (p₁, p₂), puis regagnent leur position de préhension, alors que les mors (116) situés du deuxième côté de ladite trajectoire (17) restent dans leur position de préhension,
- les mors (116) situés du deuxième côté regagnent leur position de libération, puis reculent ensemble d'un pas (p₁, p₂), puis regagnent leur position de préhension, alors que les mors (115) situés du premier côté de ladite trajectoire (17) restent dans leur position de préhension.

32. Installation selon l'une quelconque des revendications 26 à 31, **caractérisée en ce que :**
- le pas (p₁, p₂) présente une première valeur déterminée (p₁) pendant le transfert et l'arrêt temporaire de la préforme (3) aux postes successifs (20 à 26) de travail de celle-ci qui précèdent le poste (27) de formage de celle-ci, et une deuxième valeur déterminée (p₂), supérieure à la première (p₁), pendant l'arrêt temporaire de la préforme (3) au poste (27) de formage de celle-ci et pendant le transfert et l'arrêt temporaire aux postes successifs (28 à 32) de travail de la bouteille (6) et le transfert hors du dernier (32) des postes successifs (28 à 32) de travail de la bouteille (6), et **en ce que**
- sont prévus des moyens (86) d'allongement du pas (p₁, p₂), de ladite première valeur (p₁) à la deuxième valeur (p₂), entre les postes successifs (20 à 26) de travail de la préforme (3) qui précèdent le poste (27) de formage de celle-ci et le poste (27) de formage de celle-ci.

33. Installation selon l'une quelconque des revendications 26 à 32, **caractérisée en ce que,** alors que le remplissage d'une bouteille (6) par ladite dose demande un nombre entier, déterminé, de fois le temps nécessaire au formage d'une préforme (3), en arrondissant au nombre entier supérieur :
- il est prévu ce nombre entier de fois de postes de remplissage (28 à 30), de façon répartie suivant ladite trajectoire (17) selon le pas (p₂) de parcours des postes (28 à 32) de travail de la bouteille (6), et
- les moyens de commande synchronisée (228) commandent lesdits postes de remplissage (28 à 30) de façon à introduire dans la bouteille (6) une dose partielle correspondant au rapport de ladite dose audit nombre entier à son arrêt temporaire à chaque poste de remplissage (28 à 30), respectivement.

34. Installation selon l'une quelconque des revendications 20 à 33, **caractérisée en ce que,** pour procéder simultanément au formage et au remplissage d'un nombre déterminé de bouteilles (6), supérieur à un, elle comporte des postes (20 à 32) de travail de la préforme (3) ou de la bouteille (6) en ce nombre d'exemplaires, les exemplaires d'un même poste de travail (20 à 32) étant groupés et répartis en étant mutuellement espacés de façon déterminée suivant ladite trajectoire (17), et lesdits moyens de préhension temporaire commandée (115, 116) sont propres à assurer la préhension temporaire simultanée d'un groupe (84, 85) dudit nombre déterminé de zones respectives de col (37) de préforme (3) ou de bouteille (6) par leur périphérie extérieure (42), dans ladite orientation, les zones de col (37) dudit groupe (84, 85) étant réparties suivant ladite trajectoire (17) et étant mutuellement espacées de façon déterminée, la répartition (e₁, e₂) des préformes (3) et des bouteilles (6) suivant ladite trajectoire (17) et celle des exemplaires de chaque poste de travail (20 à 32) étant adaptées de telle sorte que, lorsqu'un groupe (84, 85) de préformes (3) ou de bouteilles (6) se trouve à un poste de travail (20 à 32), respectivement une préforme (3) ou une bouteille (6) de ce groupe (84, 85) se situe à l'un, respectif, des exemplaires de ce poste de travail (20 à 32).

35. Installation selon la revendication 34, **caractérisée en ce que :**
- l'espacement mutuel (e₁, e₂) entre les exemplaires d'un même poste de travail (20 à 32) de la préforme (3) ou de la bouteille (6), respectivement entre les préformes (3) et les bouteilles (6) dudit groupe, présente une première valeur déterminée (e₁) aux postes successifs (20 à 26) de travail de la préforme qui précèdent le poste (27) de formage de celle-ci, et une deuxième valeur déterminée (e₂), supérieure à la précédente (e₁), au poste (27) de formage de la préforme (3) et aux postes successifs (28 à 32) de travail de la bouteille (6), et
- sont prévus des moyens (86) d'augmentation de l'espacement mutuel (e₁, e₂) des préformes (3) de chaque groupe (84) entre les postes successifs (20 à 26) de travail de la préforme (3) qui précèdent le poste (27) de formage de celle-ci et le poste (27) de formage de celle-ci.

36. Installation selon l'une quelconque des revendications 20 à 35, **caractérisée en ce qu'**elle est capotée et comporte des moyens (237, 238) pour maintenir en continu une surpression gazeuse au moins autour de l'orifice (46) de la préforme (3) ou de la bouteille (6) pendant lesdits transferts et aux postes successifs (20 à 32) de travail de la préforme (3) ou de la bouteille (6).

37. Installation selon l'une quelconque des revendications 20 à 36, **caractérisé en ce qu'**elle comporte un châssis (16) commun aux postes successifs (20 à 32) de travail de la préforme (3) et de la bouteille (6) et aux moyens (1) de transfert de la préforme (3) et de la bouteille (6).

## Claims

1. Method for shaping and filling bottles (6) made from thermoplastic, comprising the sequence of steps comprising:
a) selecting or producing a bottle preform (3) made from thermoplastic comprising a neck zone (37) of definitive shape, having a given axis (39) and, around said axis (39), an outer periphery (42) and an inner periphery (40) delimiting an orifice (46) by a rim (45), and a body zone (38) of preliminary shape which is hollow and is located opposite said orifice (46) relative to the neck zone (37) with reference to said axis (39), and communicating with the exterior via said orifice (46),
b) placing the preform (3) at successive stations (20 to 27) for working thereon, namely at least one station (20 to 22, 24 to 26) for heating its body zone (38) so as to make the latter plastic, and one station (27) for shaping its body zone (38) so as to give the latter a definitive shape and thus form a bottle (6) comprising the neck zone (37) of definitive shape and the body zone (38) which is then also of definitive shape,
c) then placing the bottle (6) at successive stations (28 to 32) for working thereon, namely at least one station (28 to 30) for filling via said orifice (46), so as to introduce therein a given dose of contents, and a station (31) for plugging said orifice (46) in order to contain said dose therein, conferring on the neck zone (37) a given orientation such that said orifice (46) faces upwards,
d) discharging the bottle (6), containing said dose, out of the last (32) of the stations (28 to 32) for working on the bottle (6),
**characterised in that,** in order to implement steps b, c, d, successive transfers of the preform (3) are carried out to the first (20) of the successive stations (20 to 27) for working thereon, then from one to the other of the successive stations (20 to 27) for working thereon, then successive transfers of the bottle (6) are carried out from the last (27) of the successive stations (20 to 27) for working on the preform (3) to the first (28) of the successive stations (28 to 32) for working on the bottle (6), then from one to the other of the successive stations (28 to 32) for working thereon, then out of the last (32) of the successive stations (28 to 32) for working thereon, constantly holding the neck zone (37) by its outer periphery (42) so as to keep it in said orientation and to guide it along a given trajectory (17), passing successively through the successive stations (20 to 32) for working on the preform (3) and on the bottle (6), while constantly maintaining its position along said trajectory (17) and, during the successive transfers, always leaving the body zone (38) and said orifice (46) sufficiently free so as not to obstruct either the passage of the preform (3) and of the bottle (6) to the successive stations (20 to 32) for working thereon, nor the work carried out thereon at said successive working stations (20 to 32), namely in particular the heating and shaping of the body zone (38) of the preform (3) and the filling and plugging of the bottle (6).

2. Method according to claim 1, **characterised in that** the neck zone (37) is held by one and the same part (63) of its outer periphery (42) in a similar manner during the successive transfers of the preform (3) and of the bottle (6).

3. Method according to claim 2, **characterised in that:**
- during step a, the preform (3) is selected or produced such that the neck zone (37) has on its outer periphery (42) two opposite continuous annular shoulders (58, 61) of revolution about said axis (39) and, between these two opposite shoulders (58, 61), a mutual continuous annular connection (62) of revolution about said axis (39), and **in that**
- these two opposite shoulders (58, 61) and their mutual connection (62) constitute said same part (63) of the outer periphery (42) of the neck zone (37).

4. Method according to claim 3, **characterised in that** the two opposite shoulders (58, 61) and their mutual connection (62) define a continuous annular groove (63) of revolution about said axis (39).

5. Method according to any one of claims 3 and 4, **characterised in that:**
- during step a, the preform (3) is selected or produced such that the neck zone (37) has on its outer periphery (42) an additional continuous annular shoulder (57) of revolution about said axis (39), facing downwards in said orientation, and a continuous annular area (54) of revolution about said axis (39), facing in the direction moving away with respect to said axis (39), and **in that**
- constantly, during the successive transfers of the preform (3) and of the bottle (6), support is offered to said additional shoulder (57), in the downward direction, and to said annular area (54), in the direction moving away with respect to said axis (39), on either side of said trajectory (17), while the neck zone (37) has said orientation.

6. Method according to claim 5, **characterised in that,** during step a, the preform (3) is selected or produced such that the neck zone (37) has on its outer periphery (42) a continuous annular collar (49) of revolution about said axis (39), forming said additional shoulder (57).

7. Method according to any one of claims 5 and 6, **characterised in that** said additional shoulder (57) is located opposite said orifice (46) relative to the two opposite shoulders (58, 61) and their connection (62).

8. Method according to any one of claims 5 to 7, **characterised in that** said area (54) is located opposite said orifice (46) relative to the additional shoulder (57).

9. Method according to any one of claims 1 to 8, **characterised in that:**
- the successive stations (20 to 32) for working on the preform (3) and on the bottle (6) are stationary along said trajectory (17), **in that**
- said successive transfers of the preform (3) and of the bottle (6) are carried out by moving said neck zone (37) along said trajectory (17) on a step-by-step basis, mutually adapting the distance (p₁, p₂) and the relative position of the successive stations (20 to 32) for working on the preform (3) and on the bottle (6) in such a way that the crossing of successive distances (p₁, p₂) successively places the preform (3) at a temporary halt at the successive stations (20 to 27) for working thereon and the bottle (6) at a temporary halt at the successive stations (28 to 32) for working thereon, in a given sequence, and **in that**
- during the temporary halt of the preform (3) or of the bottle (6) at a working station (20 to 27), the respectively corresponding work is carried out on the preform (3) or on the bottle (6).

10. Method according to claim 9, **characterised in that** at least one of the successive stations (20 to 32) for working on the preform (3) and on the bottle (6), namely at least at the or each station (20 to 22, 24 to 26) for heating the preform (3) or at the station (27) for shaping the latter, after the start of the temporary halt and before the end thereof, successively:
- the neck zone (37) starts to be held by another part (45) thereof, so as to make it stationary with reference to said trajectory (17),
- then the neck zone (37) stops being held by said same part (63) of its outer periphery (42),
- the respectively corresponding work is carried out,
- then the neck zone (37) starts to be held again by said same part (63) of its outer periphery (42),
- then the neck zone (37) stops being held by said other part (45) thereof.

11. Method according to claim 9 or 10 when dependent on any one of claims 5 to 8, **characterised in that** said supports continue to be offered to said additional shoulder (57) and to said area (54) during the temporary halt at the successive stations (20 to 32) for working on the preform (3) and on the bottle (6).

12. Method according to claim 11 when dependent on claim 10, **characterised in that:**
- said other part (45) of the neck zone (37) is said rim (45), and **in that**
- the neck zone (37) is held by said other part (45) thereof by applying to said rim (45), via the interior (48) of the neck zone (37), an axial force oriented in such a way as to increase the support of said additional shoulder (57), in the downward direction.

13. Method according to claim 12, **characterised in that,** at the or each station (20 to 22, 24 to 26) for heating the preform (3), said axial force is accompanied by a rotation about said axis (39), causing a rotation of the preform (3) about said axis (39), due to sliding at the point where said additional shoulder (57) is supported in the downward direction.

14. Method according to any one of claims 11 to 13, **characterised in that** the following phases are alternated:
- transferring the preform (3) or the bottle (6) by holding the neck zone (37) by said same part (63) of its outer periphery (42) simultaneously on both sides of said trajectory (17), and
- halting the preform (3) or the bottle (6) by holding the neck zone (37) by said same part (63) of its outer periphery (42) alternately on one side or the other of said trajectory (17).

15. Method according to any one of claims 9 to 14, **characterised in that** the distance (p₁, p₂) between the successive stations (20 to 26) for working on the preform (3) which precede the station (27) for shaping the latter and the station (27) for shaping the latter is increased from a first given value (p₁) which this distance (p₁, p₂) has during the transfer and the temporary halt of the preform (3) at the successive stations (20 to 26) for working thereon which precede the station (27) for shaping the latter, to a second given value (p₂) which this distance (p₁, p₂) has during the temporary halt of the preform (3) at the station (27) for shaping the latter and during the transfer and the temporary halt at the successive stations (28 to 32) for working on the bottle (6) and the transfer out of the last (32) of the successive stations (28 to 32) for working on the bottle (6).

16. Method according to any one of claims 9 to 15, **characterised in that,** when the filling of a bottle (6) with said dose takes a length of time which is a whole number multiple of the time required for shaping a preform (3), rounding to the greater whole number, this whole number of filling stations (28 to 30) is provided in a manner distributed along said trajectory (17) according to the distance (p₂) between stations (28 to 32) for working on the bottle (6), and a partial dose corresponding to the ratio of said dose to said whole number is introduced into the bottle (6) while it is temporarily halted at each filling station (28 to 30), respectively.

17. Method according to any one of claims 1 to 16, **characterised in that** a given number of bottles (6), greater than one, is used simultaneously for the shaping and filling operation, by providing each of the stations (20 to 32) for working on the preform (3) and on the bottle (6) in this number of multiples, the multiples of one and the same working station (20 to 32) being grouped together and distributed by being mutually spaced apart in a given manner along said trajectory (17), and by applying said successive transfers to a group (84, 85) of said given number of preforms (3) then of bottles (6), distributed along said trajectory (17) by being mutually spaced apart in a given manner (e₁, e₂), by mutually adapting the distribution (e₁, e₂) of the preforms (3) and bottles (6) along said trajectory (17) and that of the multiples of each working station (20 to 32) in such a way that, when a group (84, 85) of preforms (3) or bottles (6) is located at a working station (20 to 32), respectively one preform (3) or one bottle (6) of this group (84, 85) is located at a respective one of the multiples of this working station (20 to 32).

18. Method according to claim 17, **characterised in that** the mutual spacing (e₁, e₂) between the multiples of one and the same station (20 to 32) for working on the preform (3) or on the bottle (6) or respectively between the preforms (3) or the bottles (6) of said group (84, 85), between the successive stations (20 to 26) for working on the preform (3) which precede the station (27) for shaping the latter and the station (27) for shaping the latter, is increased from a first given value (e₁) which this spacing (e₁, e₂) has at the successive stations (20 to 26) for working on the preform (3) which precede the station (27) for shaping the latter, to a second given value (e₂) which this spacing (e₁, e₂) has at the station (27) for shaping the preform (3) and at the successive stations (28 to 32) for working on the bottle (6).

19. Method according to any one of claims 1 to 18, **characterised in that** a gaseous overpressure is continuously maintained at least around the orifice (46) of the preform (3) or the bottle (6) during said successive transfers and at the successive stations (20 to 32) for working on the preform (3) and on the bottle (6).

20. Installation for shaping and filling bottles (6) made from thermoplastic, starting from bottle preforms (3) made from thermoplastic comprising a neck zone (37) of definitive shape, having a given axis (39) and, around said axis (39), an outer periphery (42) and an inner periphery (40) delimiting an orifice (46) by a rim (45), and a body zone (38) of preliminary shape which is hollow and is located opposite said orifice (46) relative to the neck zone (38) with reference to said axis (39), and communicating with the exterior via said orifice (46), said installation comprising:
- successive stations (20 to 26) for working on a preform (3), namely at least one station (20 to 22, 24 to 26) for heating its body zone (38) so as to make the latter plastic, and one station (27) for shaping its body zone (38) so as to give the latter a definitive shape and thus form a bottle (6) comprising the neck zone of definitive shape and the body zone (38) which is then also of definitive shape,
- successive stations (28 to 32) for working on the bottle (6), namely at least one station (28 to 30) for filling via said orifice (46), so as to introduce therein a given dose of contents, and a station (31) for plugging said orifice (46) in order to contain said dose therein, conferring on the neck zone (37) a given orientation such that said orifice (46) faces upwards, and
- means (1) for transferring the preform (3) to the first (20) of the successive stations (20 to 27) for working thereon, then from one to the other of the successive stations (20 to 27) for working thereon, then for transferring the bottle (6) from the last (27) of the successive stations (20 to 27) for working on the preform (3) to the first (28) of the successive stations (28 to 32) for working on the bottle (6), then from one to the other of the successive stations (28 to 32) for working thereon, then out of the last (32) of the successive stations (28 to 32) for working thereon,
**characterised in that** it comprises an integrated assembly in which the means (1) for transferring the preform (3) and the bottle (6) comprises a single conveying system (1) of the linear and positive type which itself comprises:
- temporary gripping means (115, 116) for temporarily gripping, in a controlled manner, the neck zone (37) of the preform (3) and of the bottle (6) by its outer periphery (42), in said orientation, leaving said orifice (46) and the body zone (38) free,
- controlled drive means (108 to 103, 183) for displacing the temporary gripping means (115, 116) in a guided manner along a given trajectory (17) passing successively through the successive stations (20 to 32) for working on the preform (3) and on the bottle (6), and
- synchronised control means (228) for the synchronised control of the temporary gripping means (115, 116), the drive means (105 to 108, 183) and the successive stations (20 to 32) for working on the preform (3) and on the bottle (6) such that the drive means (105 to 108, 183) transfer the preform (3) and the bottle (6) via the temporary gripping means (115, 116), while the latter constantly hold, during said transfer, the neck zone (37) by its outer periphery (42) so as to keep it in said orientation and to constantly maintain its position along said trajectory (17), and such that the successive stations (20 to 32) for working on the preform (3) and on the bottle (6) carry out the respective work on the preform (3) or on the bottle (6) when the preform (3) or the bottle (6) is respectively located therein.

21. Installation according to claim 20, **characterised in that** the temporary gripping means (115, 116) are able to hold the neck zone (37) by one and the same part (63) of its outer periphery (42) in a similar manner during said transfer.

22. Installation according to claim 21, **characterised in that,** when the neck zone (37) has on its outer periphery (42) two opposite continuous annular shoulders (57, 61) of revolution about said axis (39) and, between these two opposite shoulders (57, 61), a mutual continuous annular connection (62) of revolution about said axis (39), the temporary gripping means (115, 116) comprises a pair of jaws (115, 116) arranged opposite one another, respectively on either side of said trajectory (17), and capable of occupying, relative to one another and in a controlled manner, a position for gripping the neck zone (37), in which they are comparatively brought closer to one another, and a position for releasing the neck zone (37), in which they are comparatively moved away from one another, **in that** said jaws (115, 116) have a shape such that, in their position for gripping the neck zone (37), they mate with the two opposite shoulders (57, 61) and their mutual connection (62), over at least part of their circumference with reference to said axis (39), at least in two diametrically opposed zones with reference thereto, and **in that** the synchronised control means (228) also controls said jaws (115, 116) such that they occupy their position for gripping the neck zone (37) at least during said transfer.

23. Installation according to claim 22, **characterised in that,** when the two opposite shoulders (57, 61) and their mutual connection (62) define a continuous annular groove (63) of revolution about said axis (39), said jaws (115, 116) have a shape such that, in said position for gripping the neck zone (37), they internally mate with said groove (63) over at least part of its circumference with reference to said axis (39), at least in two diametrically opposed zones with reference thereto.

24. Installation according to any one of claims 22 and 23, **characterised in that,** when the neck zone (37) has on its outer periphery (42) an additional continuous annular shoulder (57) of revolution about said axis (39), facing downwards in said orientation, and a continuous annular area (54) of revolution about said axis (39), facing in the direction moving away with respect to said axis (39), it respectively comprises on either side of said trajectory (17), along the entire length thereof at least outside the successive stations (20 to 32) for working on the preform (3) and on the bottle (6), continuous support means (72, 73) for providing continuous sliding support to said additional shoulder (57), in the downward direction, and to said annular area (54), in the direction moving away with respect to said axis (39), on either side of said trajectory (17), during said successive transfers of the preform (3) and of the bottle (6), while the neck zone (37) has said orientation.

25. Installation according to claim 24, **characterised in that,** when said additional shoulder (57) is located opposite said orifice (46) relative to the two opposite shoulders (57, 61) and their connection (62) and when said area (54) is located opposite said orifice (46) relative to the additional shoulder (57), said support means (72, 73) comprises two stationary sliding beds (72, 73) which are arranged respectively on either side of said trajectory (17), below said jaws (115, 116), and which are continuous at least outside the working stations (20 to 32).

26. Installation according to any one of claims 20 to 25, **characterised in that:**
- the successive stations (20 to 32) for working on the preform (3) and on the bottle (6) are stationary along said trajectory (17), **in that**
- the drive means (105 to 108) is selected to be of the step-by-step type, the distance (p₁, p₂) and the relative position of the successive stations (20 to 32) for working on the preform (3) and on the bottle (6) being mutually adapted in such a way that the crossing of successive distances (p₁, p₂) successively places the preform (3) at a temporary halt at the successive stations (20 to 27) for working thereon and the bottle (6) at a temporary halt at the successive stations (28 to 32) for working thereon, in a given sequence, and **in that**
- the synchronised control means (228) controls the successive stations (20 to 32) for working on the preform (3) and on the bottle (6) such that the preform (3) or the bottle (6) is worked on therein while it is at a temporary halt.

27. Installation according to claim 26, **characterised in that** at least one of the successive stations (20 to 32) for working on the preform (3) and on the bottle (6), namely at least the or each station (20 to 22, 24 to 26) for heating the preform (3) or the station (27) for shaping the latter, comprises temporary immobilisation means (176, 196) for the controlled temporary immobilisation of the preform (3) or of the bottle (6) so as to counteract any displacement along said trajectory (17), said means being capable of occupying a position for holding the neck zone (37) by another part (45) thereof and a position for releasing the neck zone (37), and **in that** the synchronised control means (228) also controls the temporary immobilisation means (176, 196) such that, after the start of the temporary halt and before the end thereof, successively:
- the temporary immobilisation means (176, 196) assumes its position for holding the neck zone (37), so as to make it stationary with reference to said trajectory (17),
- the temporary gripping means (115, 116) assumes its position for releasing the neck zone (37),
- said at least one of the successive working stations (20 to 32) carries out the respectively corresponding work,
- the temporary gripping means (115, 116) reassumes its position for gripping the neck zone (37),
- the temporary immobilisation means (176, 196) reassumes its position for releasing the neck zone (37).

28. Installation according to claim 26 or 27 when dependent on any one of claims 24 and 25, **characterised in that** it comprises said means (72, 73) for providing continuous sliding support also at the successive stations (20 to 32) for working on the preform (3) and on the bottle (6).

29. Installation according to claim 28 when dependent on claim 27, **characterised in that** the temporary immobilisation means (176), in the position for holding the neck zone (37), engages coaxially in the inner periphery (48) thereof by applying to said rim (45) a force towards said continuous support means (72, 73) whereas, in the release position, they fully disengage the neck zone (37).

30. Installation according to claim 29, **characterised in that:**
- at the or at each station (20 to 32) for heating the preform (3), the temporary immobilisation means (176) is mounted to rotate about an axis (167) which is stationary along said trajectory (17) and with which said axis (39) of the neck zone (37) coincides when the preform (3) is halted at said station (20 to 22, 24 to 26) for heating the latter, **in that**
- controlled drive means (275, 276) are provided for driving the temporary immobilisation means (176) in rotation about said stationary axis, and **in that**
- the synchronised control means (228) also controls the drive means (275, 276) such that the temporary immobilisation means (176) are driven in rotation about said stationary axis (167) when they occupy their position for holding the neck zone (37).

31. Installation according to any one of claims 28 to 30, **characterised in that** it comprises several pairs of jaws (115, 116) spaced apart by the distance (p₁, p₂) along said trajectory (17), and **in that** the synchronised control means (228) controls the jaws (115, 116) and the drive means (105 to 108, 183) such that, successively:
- the pairs of jaws (115, 116) advance together by a distance (p₁, p₂) while the respective jaws (115, 116) occupy their gripping position,
- the jaws (115) located on a first side of said trajectory (17) assume their release position, then jointly move backwards by a distance (p₁, p₂), then reassume their gripping position, while the jaws (116) located on the second side of said trajectory (17) remain in their gripping position,
- the jaws (116) located on the second side reassume their release position, then jointly move backwards by a distance (p₁, p₂), then reassume their gripping position, while the jaws (115) located on the first side of said trajectory (17) remain in their gripping position.

32. Installation according to any one of claims 26 to 31, **characterised in that:**
- the distance (p₁, p₂) has a first given value (p₁) during the transfer and the temporary halt of the preform (3) at the successive stations (20 to 26) for working thereon which precede the station (27) for shaping the latter, and a second given value (p₂), greater than the first (p₁), during the temporary halt of the preform (3) at the station (27) for shaping the latter and during the transfer and the temporary halt at the successive stations (28 to 32) for working on the bottle (6) and the transfer out of the last (32) of the successive stations (28 to 32) for working on the bottle (6), and **in that**
- means (86) are provided for increasing the distance (p₁, p₂), from said first value (p₁) to the second value (p₂), between the successive stations (20 to 26) for working on the preform (3) which precede the station (27) for shaping the latter and the station (27) for shaping the latter.

33. Installation according to any one of claims 26 to 32, **characterised in that,** when the filling of a bottle (6) with said dose takes a length of time which is a whole number multiple of the time required for shaping a preform (3), rounding to the greater whole number:
- this whole number of filling stations (28 to 30) is provided in a manner distributed along said trajectory (17) according to the distance (p₂) between stations (28 to 32) for working on the bottle (6), and
- the synchronised control means (228) controls said filling stations (28 to 30) in such a way as to introduce into the bottle (6) a partial dose corresponding to the ratio of said dose to said whole number while said bottle is temporarily halted at each filling station (28 to 30), respectively.

34. Installation according to any one of claims 20 to 33, **characterised in that,** in order to simultaneously carry out the shaping and filling of a given number of bottles (6), greater than one, it comprises stations (20 to 32) for working on the preform (3) or on the bottle (6) in this number of multiples, the multiples of one and the same working station (20 to 32) being grouped together and distributed by being mutually spaced apart in a given manner along said trajectory (17), and said controlled temporary gripping means (115, 116) is able to simultaneously temporarily grip a group (84, 85) of said given number of respective neck zones (37) of a preform (3) or bottle (6) by their outer periphery (42), in said orientation, the neck zones (37) of said group (84, 85) being distributed along said trajectory (17) and being mutually spaced apart in a given manner, the distribution (e₁, e₂) of the preforms (3) and of the bottles (6) along said trajectory (17) and that of the multiples of each working station (20 to 32) being adapted in such a way that, when a group (84, 85) of preforms (3) or bottles (6) is located at a working station (20 to 32), respectively one preform (3) or one bottle (6) of this group (84, 85) is located at a respective one of the multiples of this working station (20 to 32).

35. Installation according to claim 34, **characterised in that:**
- the mutual spacing (e₁, e₂) between the multiples of one and the same station (20 to 32) for working on the preform (3) or the bottle (6), respectively between the preforms (3) and the bottles (6) of said group, has a first given value (e₁) at the successive stations (20 to 26) for working on the preform which precede the station (27) for shaping the latter, and a second given value (e₂), greater than the first (e₁), at the station (27) for shaping the preform (3) and at the successive stations (28 to 32) for working on the bottle (6), and
- means (86) is provided for increasing the mutual spacing (e₁, e₂) of the preforms (3) of each group (84) between the successive stations (20 to 26) for working on the preform (3) which precede the station (27) for shaping the latter and the station (27) for shaping the latter.

36. Installation according to any one of claims 20 to 35, **characterised in that** it is provided with a hood and comprises means (237, 238) for continuously maintaining a gaseous overpressure at least around the orifice (46) of the preform (3) or of the bottle (6) during said transfers and at the successive stations (20 to 32) for working on the preform (3) or on the bottle (6).

37. Installation according to any one of claims 20 to 36, **characterised in that** it comprises a chassis (16) common to the successive stations (20 to 32) for working on the preform (3) and on the bottle (6) and to the means (1) for transferring the preform (3) and the bottle (6).

## Patentansprüche

1. Verfahren zum Formen und Abfüllen von Flaschen (6) aus einem thermoplastischen Material, umfassend folgende aufeinander folgende Verfahrensschritte:
**a)** Auswählen oder Herstellen eines Flaschenrohlings (3) aus einem thermoplastischen Material, umfassend einen endgültig ausgebildeten Halsbereich (37) mit einer bestimmten Achse (39) und um diese Achse (39) einen Außenumfang (42) und einen Innenumfang (40) zur Begrenzung einer Öffnung (46) anhand eines Rands (45), und einen provisorisch ausgebildeten, hohlen Körperbereich (38), der im Verhältnis zum Halsbereich (37) und bezogen auf die Achse (39) auf der gegenüber liegenden Seite der Öffnung (46) liegt und über diese Öffnung (46) mit außen in Verbindung steht,
**b)** Platzieren des Rohlings (3) an aufeinander folgenden Stationen (20 bis 27) zur Bearbeitung desselben, und zwar mindestens an einer Heizstation (20 bis 22, 24 bis 26) zum Erhitzen des Körperbereichs (38), um diesen zu erweichen, und an einer Formgebungsstation (27) zum Formen seines Körperbereichs (38), um diesem seine endgültige Form zu verleihen und auf diese Weise eine Flasche (6) mit dem endgültig ausgebildeten Halsbereich (37) und mit dem dann ebenfalls endgültig ausgebildeten Körperbereich (38) zu formen,
**c)** Platzieren der Flasche (6) an aufeinander folgenden Stationen (28 bis 32) zur Bearbeitung derselben, und zwar an mindestens einer Füllstation (28 bis 30) zum Abfüllen, über die Öffnung (46), einer bestimmten Menge eines Inhalts und an einer Station (31) zum Verschließen der Öffnung (46), um die Menge darin einzuschließen, wobei gewährleistet wird, dass der Halsbereich (37) eine bestimmte Ausrichtung erhält, in der die Öffnung (46) nach oben gewandt ist,
**d)** Abführen der die Menge enthaltenden Flasche (6) aus der letzten (32) der Stationen (28 bis 32) zur Bearbeitung der Flasche (6),
**dadurch gekennzeichnet, dass**, zur Durchführung der Schritte b, c, d, der Rohling (3) nacheinander der ersten (20) der Stationen (20 bis 27) zur Bearbeitung desselben zugeführt wird, anschließend von einer zur anderen der aufeinander folgenden Stationen (20 bis 27) zur Bearbeitung desselben gebracht wird, und dass dann die Flasche (6) nacheinander von der letzten (27) der aufeinander folgenden Stationen (20 bis 27) zur Bearbeitung des Rohlings (3) zur ersten (28) der aufeinander folgenden Stationen (28 bis 32) zur Bearbeitung der Flasche (6) gebracht wird, und dann von der einen zur anderen der aufeinander folgenden Stationen (28 bis 32) zur Bearbeitung derselben geführt wird, und schließlich aus der letzten (32) der aufeinander folgenden Stationen (28 bis 32) zur Bearbeitung derselben abgeführt wird, wobei der Halsbereich (37) ständig an seinem Außenumfang (42) derart gehalten wird, dass er in der gleichen Ausrichtung gehalten und entlang einer bestimmten Strecke (17) geführt wird, welche nacheinander die aufeinander folgenden Stationen (20 bis 32) zur Bearbeitung des Rohlings (3) und der Flasche (6) durchläuft, wobei deren Position entlang der Strecke (17) ständig unter Kontrolle bleibt, und der Körperbereich (38) und die Öffnung (46) während der aufeinander folgenden durchlaufenen Wegstrecken ständig ausreichend frei gelassen werden, um weder den Rohling (3) oder die Flasche (6) bei ihrem Durchlauf zu den aufeinander folgenden Stationen (20 bis 32) zur Bearbeitung derselben, noch die Bearbeitung derselben an den aufeinander folgenden Stationen (20 bis 32) zur Bearbeitung derselben, und zwar insbesondere das Erhitzen und das Formen des Körperbereichs (38) des Rohlings (3) wie auch das Abfüllen und Verschließen der Flasche (6), zu behindern.

2. Verfahren nach Anspruch 1, **dadurch gekennzeichnet, dass** bei den aufeinander folgenden Wegstrecken, die der Rohling (3) und die Flasche (6) zurücklegen, der Halsbereich (37) in ähnlicher Weise an dem gleichen Teil (63) seines Außenumfangs (42) gehalten wird.

3. Verfahren nach Anspruch 2, **dadurch gekennzeichnet, dass**:
- in Schritt a der Rohling (3) derart gewählt oder hergestellt wird, dass der Halsbereich (37) an seinem Außenumfang (42) zwei jeweils einen Absatz bildende ringförmige Gegenstücke (58, 61) aufweist, die kontinuierlich und um die Achse (39) umlaufend sind, und dass er zwischen diesen beiden jeweils einen Absatz bildenden Gegenstücken (58, 61) einen kontinuierlichen, um die Achse (39) umlaufenden, ringförmigen gegenseitigen Anschluss (62) aufweist, und dass
- diese beiden jeweils einen Absatz bildenden Gegenstücke (58, 61) und deren gegenseitiger Anschluss (62) den gleichen Teil (63) des Außenumfangs (42) des Halsbereichs (37) bilden.

4. Verfahren nach Anspruch 3, **dadurch gekennzeichnet, dass** die beiden jeweils einen Absatz bildenden Gegenstücke (58, 61) und deren gegenseitiger Anschluss (62) eine kontinuierliche, um die Achse (39) umlaufende, ringförmige Nut (63) definieren.

5. Verfahren nach einem der Ansprüche 3 und 4, **dadurch gekennzeichnet, dass**:
- in Schritt a, der Rohling (3) derart gewählt oder hergestellt wird, dass der Halsbereich (37) an seinem Außenumfang (42) einen weiteren, kontinuierlichen, um die Achse (39) umlaufenden, ringförmigen Absatz (57), der in der besagten Ausrichtung nach unten gewandt ist, und einen kontinuierlichen, um die Achse (39) umlaufenden ringförmigen Bereich (54), der von der Achse (39) abgewandt ist, aufweist, und dass
- während der aufeinander folgenden vom Rohling (3) und der Flasche (6) durchlaufenen Wegstrecken, zu beiden Seiten der Strecke (17) dem weiteren Absatz (57) eine Stütze nach unten und dem ringförmigen Bereich (54) eine Stütze in Richtung von der Achse (39) weg geboten wird, während der Halsbereich (37) die besagte Ausrichtung aufweist.

6. Verfahren nach Anspruch 5, **dadurch gekennzeichnet, dass**, in Schritt a, der Rohling (3) derart gewählt oder hergestellt wird, dass der Halsbereich (37) an seinem Außenumfang (42) einen den weiteren Absatz (57) bildenden, kontinuierlichen, um die Achse (39) umlaufenden ringförmigen Bund (49) aufweist.

7. Verfahren nach einem der Ansprüche 5 und 6, **dadurch gekennzeichnet, dass** der weitere Absatz (57) im Verhältnis zu den beiden einen Absatz bildenden Gegenstücken (58, 61) und zu deren Anschluss (62) auf der gegenüber liegenden Seite der Öffnung (46) liegt.

8. Verfahren nach einem der Ansprüche 5 bis 7, **dadurch gekennzeichnet, dass** der Bereich (54) im Verhältnis zum weiteren Absatz (57) auf der gegenüber liegenden Seite der Öffnung (46) liegt.

9. Verfahren nach einem der Ansprüche 1 bis 8, **dadurch gekennzeichnet, dass:**
- die aufeinander folgenden Stationen (20 bis 32) zur Bearbeitung des Rohlings (3) und der Flasche (6) entlang der Strecke (17) ortsfest sind, dass
- der Rohling (3) und die Flasche (6) aufeinander folgend transportiert werden, indem diese mit dem Halsbereich (37) Schritt für Schritt entlang der Strecke (17) geführt werden, wobei der Schritt (p1, p2) und die relative Position der aufeinander folgenden Stationen (20 bis 32) zur Bearbeitung des Rohlings (3) und der Flasche (6) wechselseitig derart angepasst werden, dass durch das schrittweise (p₁, p₂) Vorgehen der Rohling (3) jeweils an den aufeinander folgenden Stationen (20 bis 27) zur Bearbeitung desselben und die Flasche (6) jeweils an den aufeinander folgenden Stationen (20 bis 27) zur Bearbeitung derselben in einer bestimmten Sequenz vorübergehend angehalten werden, und dass
- während der Rohling (3) oder die Flasche (6) an einer Bearbeitungsstation (20 bis 27) vorübergehend angehalten wird, der Rohling (3) oder die Flasche (6) jeweils entsprechend bearbeitet wird.

10. Verfahren nach Anspruch 9, **dadurch gekennzeichnet, dass** an mindestens einer der aufeinander folgenden Stationen (20 bis 32) zur Bearbeitung des Rohlings (3) und der Flasche (6), und zwar mindestens an der oder an jeder der Heizstationen (20 bis 22, 24 bis 26) zum Erhitzen des Rohlings (3) oder an der Station (27) zum Formen desselben, nach Beginn des vorübergehenden Halts und vor Beendigung desselben, folgende aufeinander folgende Schritte ablaufen:
- es wird damit begonnen, den Halsbereich (37) an einem anderen Teil (45) desselben festzuhalten, so dass dieser in Bezug auf die Strecke (17) feststehend bleibt,
- dann wird der Halsbereich (37) nicht mehr an dem gleichen Teil (63) seines Außenumfangs (42) festgehalten,
- es erfolgt die entsprechende jeweilige Bearbeitung,
- dann wird der Halsbereich (37) wieder am gleichen Teil (63) seines Außenumfangs (42) gehalten,
- dann wird der Halsbereich (37) nicht mehr am anderen Teil (45) desselben festgehalten.

11. Verfahren nach Anspruch 9 oder 10, rückbezogen auf einen der Ansprüche 5 bis 8, **dadurch gekennzeichnet, dass** während des Halts an den aufeinander folgenden Stationen (20 bis 32) zur Bearbeitung des Rohlings (3) und der Flasche (6) dem weiteren Absatz (57) und dem Bereich (54) weiterhin die Stützen geboten werden.

12. Verfahren nach Anspruch 11, rückbezogen auf Anspruch 10, **dadurch gekennzeichnet, dass:**
- der andere Teil (45) des Halsbereichs (37) der Rand (45) ist, und dass
- der Halsbereich (37) am anderen Teil (45) desselben dadurch gehalten wird, dass vom Inneren (48) des Halsbereichs (37) auf den Rand (45) ein axialer Druck ausgeübt wird, der derart ausgerichtet ist, dass die Abstützung des weiteren Absatzes (57) nach unten verstärkt wird.

13. Verfahren nach Anspruch 12, **dadurch gekennzeichnet, dass** an der oder an jeder Heizstation (20 bis 22, 24 bis 26) zum Erhitzen des Rohlings (3) der axiale Druck von einer Drehung um die Achse (39) begleitet wird, wodurch der Rohling (3) um sich selbst um die Achse (39) gedreht wird, indem er im Bereich der Abstützung des weiteren Absatzes (57) nach unten gleitet.

14. Verfahren nach einem der Ansprüche 11 bis 13, **dadurch gekennzeichnet, dass** folgende Phasen sich abwechseln:
- eine Phase, in der der Rohling (3) oder die Flasche (6) transportiert wird, wobei der Halsbereich (37) am gleichen Teil (63) seines Außenumfangs (42) zu beiden Seiten der Strecke (17) gleichzeitig gehalten wird, und
- eine Phase, in der der Rohling (3) oder die Flasche (6) angehalten wird, wobei der Halsbereich (37) am gleichen Teil (63) seines Außenumfangs (42) abwechselnd auf einer Seite der Strecke (17) oder auf der anderen gehalten wird.

15. Verfahren nach einem der Ansprüche 9 bis 14, **dadurch gekennzeichnet, dass** der Schritt (p1, p2) zwischen den aufeinander folgenden Stationen (20 bis 26) zur Bearbeitung des Rohlings (3), die der Station (27) zur Formgebung desselben vorgelagert sind, und der Station (27) zur Formgebung desselben von einem bestimmten ersten Wert (p₁), den dieser Schritt (p1, p2) während des Transports und des vorübergehenden Halts des Rohlings (3) an den aufeinander folgenden Stationen (20 bis 26) zur Bearbeitung desselben, die der Station (27) zur Formgebung desselben vorgelagert sind, aufweist, auf einen zweiten bestimmten Wert (p₂), den dieser Schritt (p₁, p₂) während des vorübergehenden Halts des Rohlings (3) an der Station (27) zur Formgebung desselben und während des Transports und des vorübergehenden Halts an den aufeinander folgenden Stationen (28 bis 32) zur Bearbeitung der Flasche (6) und des Abführens der Flasche (6) aus der letzten (32) der aufeinander folgenden Stationen (28 bis 32) zur Bearbeitung derselben aufweist, verlängert wird.

16. Verfahren nach einem der Ansprüche 9 bis 15, **dadurch gekennzeichnet, dass**, während das Abfüllen einer Flasche (6) mit der Menge eine Zeit benötigt, die um eine ganze bestimmte Zahl das Vielfache der Zeit ist, die für das Formen eines Rohlings (3) benötigt wird, wobei auf die nächst höhere ganze Zahl aufgerundet wird, wird diese ganze Zahl an Füllstationen (28 bis 30) vorgesehen, welche über die Strecke (17) entsprechend dem Schritt (p₂) verteilt werden, in dem die Stationen (28 bis 32) zur Bearbeitung der Flasche (6) durchlaufen werden, und in die Flasche (6) wird eine Teilmenge abgefüllt, die bei deren vorübergehendem Halt an der jeweiligen Füllstation (28 bis 32) dem Verhältnis der Menge zur ganzen Zahl entspricht.

17. Verfahren nach einem der Ansprüche 1 bis 16, **dadurch gekennzeichnet, dass** dieses gleichzeitig für das Formen und das Abfüllen einer bestimmten Anzahl an Flaschen (6) durchgeführt wird, wobei diese Zahl größer ist als eins, wobei diese Anzahl an Exemplaren einer jeweiligen Station (20 bis 32) zur Bearbeitung des Rohlings (3) und der Flasche (6) vorgesehen ist, wobei die Exemplare einer selben Bearbeitungsstation (20 bis 32) zusammengestellt und verteilt und dabei entlang der Strecke (17) in bestimmter Weise voneinander beabstandet sind, und wobei die aufeinander folgenden Transporte auf eine Gruppe (84, 85) der bestimmten Anzahl an Rohlingen (3) und dann an Flaschen (6) angewendet werden, welche entlang der Strecke (17) verteilt und dabei in bestimmter Weise (e₁, e₂) voneinander beabstandet sind, wobei die Verteilung (e₁, e₂) der Rohlinge (3) und der Flaschen (6) entlang der Strecke (17) und die der Exemplare der jeweiligen Bearbeitungsstation (20 bis 32) derart wechselseitig angepasst wird, dass, wenn eine Gruppe (84, 85) Rohlinge (3) oder Flaschen (6) sich an einer Bearbeitungsstation (20 bis 32) befindet, ein Rohling (3) oder eine Flasche (6) dieser Gruppe (84, 85) sich jeweils an einem jeweiligen Exemplar dieser Bearbeitungsstation (20 bis 32) befindet.

18. Verfahren nach Anspruch 17, **dadurch gekennzeichnet, dass** der Abstand (e₁, e₂) zwischen den jeweiligen Exemplaren einer gleichen Bearbeitungsstation (20 bis 32) des Rohlings (3) oder der Flasche (6), bzw. zwischen den Rohlingen (3) oder den Flaschen (6) der Gruppe (84, 85), zwischen den aufeinander folgenden Stationen (20 bis 26) zur Bearbeitung des Rohlings (3), die der Station (27) zum Formen desselben vorgelagert sind, und der Station (27) zum Formen desselben von einem ersten bestimmten Wert (e₁), den dieser Abstand (e₁, e₂) an den aufeinander folgenden Stationen (20 bis 26) zur Bearbeitung des Rohlings (3), die der Station (27) zum Formen desselben vorgelagert sind, auf einen zweiten bestimmten Wert (e₂) erhöht wird, den dieser Abstand (e₁, e₂) an der Station (27) zum Formen des Rohlings (3) und an den aufeinander folgenden Stationen (28 bis 32) zur Bearbeitung der Flasche (6) aufweist.

19. Verfahren nach einem der Ansprüche 1 bis 18, **dadurch gekennzeichnet, dass** mindestens um die Öffnung (46) des Rohlings (3) oder der Flasche (6) kontinuierlich ein Gasüberdruck während der aufeinander folgenden Transfers und an den aufeinander folgenden Stationen (20 bis 32) zur Bearbeitung des Rohlings (3) und der Flasche (6) aufrechterhalten wird.

20. Anlage zum Formen und Abfüllen von Flaschen (6) aus einem thermoplastischen Material, ausgehend von Flaschenrohlingen (3) aus thermoplastischem Material umfassend einen endgültig ausgebildeten Halsbereich (37) mit einer bestimmten Achse (39) und um diese Achse (39) einen Außenumfang (42) und einen Innenumfang (40) zur Begrenzung einer Öffnung (46) anhand eines Rands (45), und einen provisorisch ausgebildeten, hohlen Körperbereich (38) mit einer provisorischen, hohlen Form, die im Verhältnis zum Halsbereich (38) und bezogen auf die Achse (39) auf der gegenüber liegenden Seite der Öffnung (46) liegt und über diese Öffnung (46) mit Außen in Verbindung steht, umfassend:
- aufeinander folgende Stationen (20 bis 26) zur Bearbeitung eines Rohlings (3), und zwar mindestens eine Heizstation (20 bis 22, 24 bis 26) zum Erhitzen seines Körperbereichs (38), um diesen zu erweichen, und eine Formgebungsstation (27) zum Formen seines Körperbereichs (38), um diesem seine endgültige Form zu verleihen und auf diese Weise eine Flasche (6) mit dem endgültig ausgebildeten Halsbereich und mit dem dann ebenfalls endgültig ausgebildeten Körperbereich (38) zu formen,
- aufeinander folgende Stationen (28 bis 32) zur Bearbeitung der Flasche (6), und zwar mindestens eine Füllstation (28 bis 30) zum Abfüllen, über die Öffnung (46), einer bestimmten Menge eines Inhalts und eine Station (31) zum Verschließen der Öffnung (46), um die Menge darin einzuschließen, wobei gewährleistet wird, dass der Halsbereich (37) eine bestimmte Ausrichtung erhält, in der die Öffnung (46) nach oben gewandt ist, und
- Transportmittel (1), mit denen der Rohling (3) der ersten (20) der aufeinander folgenden Stationen (20 bis 27) zur Bearbeitung desselben zugeführt wird, anschließend von einer zur anderen der aufeinander folgenden Stationen (20 bis 27) zur Bearbeitung desselben gebracht wird, und mit denen dann die Flasche (6) von der letzten (27) der aufeinander folgenden Stationen (20 bis 27) zur Bearbeitung des Rohlings (3) zur ersten (28) der aufeinander folgenden Stationen (28 bis 32) zur Bearbeitung der Flasche (6) gebracht wird, und anschließend von der einen zur anderen der aufeinander folgenden Stationen (28 bis 32) zur Bearbeitung derselben geführt wird, und schließlich aus der letzten (32) der aufeinander folgenden Stationen (28 bis 32) zur Bearbeitung derselben abgeführt wird,
**dadurch gekennzeichnet, dass** sie aus einer integrierten Einheit besteht, in der die Transportmittel (1) zum Befördern des Rohlings (3) und der Flasche (6) eine einzige lineare und positive Förderanlage (1) aufweisen, welche wiederum folgendes aufweist:
- Mittel (115, 116) zum vorübergehenden, gesteuerten Greifen des Halsbereichs (37) des Rohlings (3) und der Flasche (6) über seinen Außenumfang (42), in der besagten Ausrichtung, wobei die Öffnung (46) und der Körperbereich (38) frei bleiben,
- gesteuerte Motormittel (108 bis 103, 183) zum geführten Bewegen der Mittel (115, 116) zum vorübergehenden Greifen entlang einer bestimmten Strecke (17), die nacheinander die aufeinander folgenden Stationen (20 bis 32) zur Bearbeitung des Rohlings (3) und der Flasche (6) durchläuft, und
- Mittel (228) zur synchronisierten Steuerung der Mittel (115, 116) zum vorübergehenden Greifen, der Motormittel (105 bis 108, 183) und der aufeinander folgenden Stationen (20 bis 32) zur Bearbeitung des Rohlings (3) und der Flasche (6) derart, dass die Motormittel (105 bis 108, 183) den Transport des Rohlings (3) und der Flasche (6) über Mittel (115, 116) zum vorübergehenden Greifen gewährleisten, während letztere während dieser Wegstrecke den Halsbereich (37) an seinem Außenumfang (42) ständig derart halten, dass er in der besagten Ausrichtung verbleibt und seine Position entlang der Strecke (17) ständig unter Kontrolle ist, und dass die aufeinander folgenden Stationen (20 bis 32) zur Bearbeitung des Rohlings (3) und der Flasche (6) den Rohling (3) bzw. die Flasche (6) jeweils dann bearbeiten, wenn der Rohling (3) bzw. die Flasche (6) sich darin befindet.

21. Anlage nach Anspruch 20, **dadurch gekennzeichnet, dass** die Mittel (115, 116) zum vorübergehenden Greifen in ähnlicher Weise dafür geeignet sind, während des Transports den Halsbereich (37) an einem gleichen Teil (63) seines Außenumfangs (42) zu halten.

22. Anlage nach Anspruch 21, **dadurch gekennzeichnet, dass**, wenn der Halsbereich (37) an seinem Außenumfang (42) zwei jeweils einen Absatz bildende ringförmige Gegenstücke (57, 61) aufweist, die kontinuierlich und um die Achse (39) umlaufend sind, und zwischen diesen beiden jeweils einen Absatz bildenden Gegenstücken (57, 61) einen kontinuierlichen, um die Achse (39) umlaufenden, ringförmigen gegenseitigen Anschluss (62) aufweist, die Mittel (115, 116) zum vorübergehenden Greifen ein Backenpaar (115, 116) aufweisen, die jeweils zu beiden Seiten der Strecke (17) einander gegenüber liegen und in der Lage sind, relativ zueinander gesteuert eine Position einzunehmen, in der sie den Halsbereich (37) greifen und in der sie vergleichsweise eng beieinander liegen, und eine Position einzunehmen, in der der Halsbereich (37) freigegeben wird und in der sie vergleichsweise voneinander entfernt sind, und dass die Backen (115, 116) derart ausgebildet sind, dass in ihrer Position, in der sie den Halsbereich (37) greifen, sie an den beiden jeweils einen Absatz bildenden Gegenstücken (57, 61) und an deren gegenseitigen Anschluss (62), auf mindestens einem Teil von deren Umfang bezogen auf die Achse (39), mindestens in zwei diametral gegenüber liegenden Bereichen bezogen auf diese, passgenau anliegen, und dass die Mittel zur synchronisierten Steuerung (228) ebenfalls die Backen (115, 116) derart steuern, dass sie ihre Position, in der sie den Halsbereich (37) greifen, mindestens während des Transports einnehmen.

23. Anlage nach Anspruch 22, **dadurch gekennzeichnet, dass**, wenn die beiden jeweils einen Absatz bildenden Gegenstücke (57, 61) und deren gegenseitiger Anschluss (62) eine kontinuierliche, um die Achse (39) umlaufende, ringförmige Nut (63) begrenzen, die Backen (115, 116) derart ausgebildet sind, dass, in der Position, in der sie den Halsbereich (37) greifen, sie innen an der Nut (63), auf mindestens einem Teil ihres Umfangs bezogen auf die Achse (39), mindestens in zwei diametral gegenüber liegenden Bereichen bezogen auf diese, passgenau anliegen.

24. Anlage nach einem der Ansprüche 22 oder 23, **dadurch gekennzeichnet, dass**, wenn der Halsbereich (37) an seinem Außenumfang (42) einen weiteren, kontinuierlichen, um die Achse (39) umlaufenden, ringförmigen Absatz (57), der in der besagten Ausrichtung nach unten gewandt ist, und einen kontinuierlichen, um die Achse (39) umlaufenden ringförmigen Bereich (54), der von der Achse (39) abgewandt ist, aufweist, sie jeweils zu beiden Seiten der Strecke (17) über die gesamte Länge derselben mindestens außerhalb der aufeinander folgenden Stationen (20 bis 32) zur Bearbeitung des Rohlings (3) und der Flasche (6) Mittel (72, 73) zur kontinuierlichen, gleitenden Abstützung des weiteren Absatzes (57) nach unten und des ringförmigen Bereichs (54) in Richtung weg von der Achse (39) zu beiden Seiten der Strecke (17) und dies ständig im Verlauf der aufeinander folgenden, von dem Rohling (3) und der Flasche (6) zurückgelegten Wegstrecken, während der Halsbereich (37) die besagte Ausrichtung aufweist.

25. Anlage nach Anspruch 24, **dadurch gekennzeichnet, dass**, wenn der weitere Absatz (57) im Verhältnis zu den beiden jeweils einen Absatz bildenden Gegenstücken (57, 61) und zu deren Anschluss (62) auf der gegenüber liegenden Seite der Öffnung (46) liegt, und wenn der Bereich (54) im Verhältnis zum weiteren Absatz (57) auf der gegenüber liegenden Seite der Öffnung liegt, so bestehen die Abstützmittel (72, 73) aus zwei feststehenden Gleitsohlen (72, 73), die jeweils zu beiden Seiten der Strecke (17) unterhalb der Backen (115, 116) angeordnet sind und mindestens außerhalb der Bearbeitungsstationen (20 bis 32) kontinuierlich sind.

26. Anlage nach einem der Ansprüche 20 bis 25, **dadurch gekennzeichnet, dass:**
- die aufeinander folgenden Stationen (20 bis 32) zur Bearbeitung des Rohlings (3) und der Flasche (6) entlang der Strecke (17) ortsfest sind, dass
- für die Motormittel (105 bis 108) Schrittmotore gewählt wurden, wobei der Schritt (p₁, p₂) und die relative Position der aufeinander folgenden Stationen (20 bis 32) zur Bearbeitung des Rohlings (3) und der Flasche (6) wechselseitig derart angepasst werden, dass durch das schrittweise (p₁, p₂) Vorgehen der Rohling (3) jeweils an den aufeinander folgenden Stationen (20 bis 27) zur Bearbeitung desselben und die Flasche (6) jeweils an den aufeinander folgenden Stationen (28 bis 32) zur Bearbeitung derselben in einer bestimmten Sequenz vorübergehend angehalten werden, und dass
- die Mittel zur synchronisierten Steuerung (228) die aufeinander folgenden Stationen (20 bis 32) zur Bearbeitung des Rohlings (3) und der Flasche (6) derart steuern, dass der Rohling (3) oder die Flasche (6) darin bearbeitet werden, wenn sie darin vorübergehend angehalten werden.

27. Anlage nach Anspruch 26, **dadurch gekennzeichnet, dass** mindestens eine der aufeinander folgenden Stationen (20 bis 32) zur Bearbeitung des Rohlings (3) und der Flasche (6), und zwar mindestens die oder jede Heizstation (20 bis 22, 24 bis 26) zum Erhitzen des Rohlings (3) oder die Formgebungsstation (27) desselben Mittel (176, 196) aufweist, mit denen der Rohling (3) oder die Flasche (6) entgegen einer Verschiebung entlang der Strecke (17) gesteuert vorübergehend arretiert werden, wobei diese Mittel in der Lage sind, eine Position einzunehmen, in der sie den Halsbereich (37) an einem anderen Teil (45) desselben festhalten, und eine Position einzunehmen, in der sie den Halsbereich (37) freigeben, und dass die Mittel zur synchronisierten Steuerung (228) ebenfalls die Mittel (176, 196) zur vorübergehenden Arretierung derart steuern, dass, nach Beginn des vorübergehenden Halts und vor Beendigung desselben, folgende aufeinander folgende Schritte ablaufen:
- die Mittel zur vorübergehenden Arretierung (176, 196) nehmen die Position ein, in der sie den Halsbereich (37) so halten, dass sie diesen bezogen auf die Strecke (17) ortsfest machen,
- die Mittel zum vorübergehenden Greifen (115, 116) nehmen die Position ein, in der sie den Halsbereich (37) freigeben,
- mindestens eine der aufeinander folgenden Bearbeitungsstationen (20 bis 32) führt die jeweils entsprechende Bearbeitung durch,
- die Mittel (115, 116) zum vorübergehenden Greifen nehmen die Position wieder ein, in der sie den Halsbereich (37) greifen,
- Mittel zur vorübergehenden Arretierung (176, 196) nehmen die Position wieder ein, in der sie den Halsbereich (37) freigeben.

28. Anlage nach Anspruch 26 oder 27, rückbezogen auf einen der Ansprüche 24 und 25, **dadurch gekennzeichnet, dass** sie, ebenfalls an den aufeinander folgenden Stationen (20 bis 32) zur Bearbeitung des Rohlings (3) und der Flasche (6), Mittel (72, 73) für eine kontinuierliche gleitende Abstützung aufweist.

29. Anlage nach Anspruch 28, rückbezogen auf Anspruch 27, **dadurch gekennzeichnet, dass** die Mittel zur vorübergehenden Arretierung (176), in ihrer Position, in der sie den Halsbereich (37) halten, koaxial in den Innenumfang (48) desselben eingreifen, indem sie auf den Rand (45) einen Druck in Richtung der Mittel (72, 73) zur kontinuierlichen Abstützung ausüben, während sie in der Freigabeposition den Halsbereich (37) völlig freigeben.

30. Anlage nach Anspruch 29, **dadurch gekennzeichnet, dass:**
- an der oder an jeder Heizstation (20 bis 22, 24 bis 26) zum Erhitzen des Rohlings (3) die Mittel zur vorübergehenden Arretierung (176) um eine Achse (167) drehbar montiert sind, welche entlang der Strecke (17) ortsfest ist und mit der die Achse (39) des Halsbereichs (37) zusammenfällt, wenn der Rohling (3) an der Heizstation (20 bis 22, 24 bis 26) zum Erhitzen desselben angehalten ist, und dass
- gesteuerte Mittel (275, 276) zur Betätigung der Mittel zur vorübergehenden Arretierung (176) zur Drehung um die ortsfeste Achse vorgesehen sind, und dass
- die Mittel zur synchronisierten Steuerung (228) ebenfalls diese Betätigungsmittel (275, 276) derart steuern, dass die Mittel zur vorübergehenden Arretierung (176) um die ortsfeste Achse (167) drehbar angetrieben werden, wenn sie in der Position sind, in der sie den Halsbereich (37) halten.

31. Anlage nach einem der Ansprüche 28 bis 30, **dadurch gekennzeichnet, dass** sie mehrere Backenpaare (115, 116) aufweist, welche entlang der Strecke (17) gemäß dem Schritt (p₁, p₂) verteilt sind, und dass die Mittel (228) zur synchronisierten Steuerung die Backen (115, 116) und die Motormittel (105 bis 108, 183) derart steuern, dass, nacheinander:
- die Backenpaare (115, 116) zusammen um einen Schritt (p₁, p₂) nach vorn gebracht werden, während die jeweiligen Backen (115, 116) ihre Greifposition einnehmen,
- die auf einer ersten Seite der Strecke (17) befindlichen Backen (115) in ihre Freigabeposition gelangen, sie dann um einen Schritt (p₁, p₂) rückwärts geführt werden und dann wieder in ihre Greifposition gelangen, während die auf der zweiten Seite der Strecke (17) befindlichen Backen (116) in ihrer Greifposition verbleiben,
- die auf der zweiten Seite befindlichen Backen (116) wieder in ihre Freigabeposition gelangen, sie dann zusammen um einen Schritt (p₁, p₂) rückwärts geführt werden und dann wieder in ihre Greifposition gelangen, während die auf der ersten Seite der Strecke (17) befindlichen Backen (115) in ihrer Greifposition verbleiben.

32. Anlage nach einem der Ansprüche 26 bis 31, **dadurch gekennzeichnet, dass:**
- der Schritt (p₁, p₂) während des Transports und des vorübergehenden Anhaltens des Rohlings (3) an den aufeinander folgenden Stationen (20 bis 26) zur Bearbeitung desselben, die der Station (27) zum Formen desselben vorgelagert sind, einen ersten bestimmten Wert (p₁) aufweist und während des vorübergehenden Anhaltens des Rohlings (3) an der Station (27) zum Formen desselben und während des Transports und des vorübergehenden Anhaltens an den aufeinander folgenden Stationen (28 bis 32) zur Bearbeitung der Flasche (6) und des Abführens der Flasche (6) aus der letzten (32) der aufeinander folgenden Stationen (28 bis 32) zur Bearbeitung derselben, einen zweiten bestimmten Wert (p₂) aufweist, der größer ist als der erste (p₁), und dass
- zwischen den aufeinander folgenden Stationen (20 bis 26) zur Bearbeitung des Rohlings (3), die der Station (27) zum Formen desselben vorgelagert sind, und der Station (27) zum Formen desselben Mittel (86) zur Verlängerung des Schritts (p₁, p₂) vom ersten Wert (p₁) auf den zweiten Wert (p₂) vorgesehen sind.

33. Anlage nach einem der Ansprüche 26 bis 32, **dadurch gekennzeichnet, dass**, wenn das Abfüllen einer Flasche (6) mit der besagten Menge eine Zeit benötigt, die um eine ganze bestimmte Zahl länger ist als die Zeit, die für das Formen eines Rohlings (3) benötigt wird, wobei auf die nächst höhere ganze Zahl aufgerundet wird:
- diese ganze Zahl an Füllstationen (28 bis 30) vorgesehen ist, welche über die Strecke (17) im Schritt (p₂) zum Durchlaufen der Stationen (28 bis 32) zur Bearbeitung der Flasche (6) verteilt werden, und
- die Mittel (228) zur synchronisierten Steuerung die Füllstationen (28 bis 30) derart steuern, dass in die Flasche (6) eine Teilmenge abgefüllt wird, die bei deren vorübergehendem Anhalten an der jeweiligen Füllstation (28 bis 30) dem Verhältnis der Menge zur ganzen Zahl entspricht.

34. Anlage nach einem der Ansprüche 20 bis 33, **dadurch gekennzeichnet, dass**, zum gleichzeitigen Durchführen des Formens und des Abfüllens einer bestimmten Anzahl an Flaschen (6), die größer ist als eins, sie Stationen (20 bis 32) zur Bearbeitung des Rohlings (3) oder der Flasche (6) in dieser Anzahl an Exemplaren aufweist, wobei die Exemplare einer selben Bearbeitungsstation (20 bis 32) zusammengestellt und verteilt und dabei entlang der Strecke (17) in bestimmter Weise voneinander beabstandet sind, und wobei die Mittel zum gesteuerten vorübergehenden Greifen (115, 116) dafür geeignet sind, das gleichzeitige vorübergehende Greifen einer Gruppe (84, 85) der bestimmten Anzahl an jeweiligen Bereichen des Halses (37) des Rohlings (3) oder der Flasche (6) an deren Außenumfang (42) in der besagten Ausrichtung zu gewährleisten, wobei die Halsbereiche (37) der Gruppe (84, 85) entlang der Strecke (17) verteilt und dabei in bestimmter Weise voneinander beabstandet sind, wobei die Verteilung (e₁, e₂) der Rohlinge (3) und der Flaschen (6) entlang der Strecke (17) und die der Exemplare der jeweiligen Bearbeitungsstation (20 bis 32) derart angepasst ist, dass, wenn eine Gruppe (84, 85) Rohlinge (3) oder Flaschen (6) sich an einer Bearbeitungsstation (20 bis 32) befindet, ein Rohling (3) bzw. eine Flasche (6) dieser Gruppe (84, 85) sich jeweils an einem jeweiligen Exemplar dieser Bearbeitungsstation (20 bis 32) befindet.

35. Anlage nach Anspruch 34, **dadurch gekennzeichnet, dass:**
- der Abstand (e₁, e₂) zwischen den jeweiligen Exemplaren einer gleichen Bearbeitungsstation (20 bis 32) des Rohlings (3) oder der Flasche (6), bzw. zwischen den Rohlingen (3) oder den Flaschen (6) der Gruppe, an den aufeinander folgenden Stationen (20 bis 26) zur Bearbeitung des Rohlings, die der Station (27) zum Formen desselben vorgelagert sind, einen ersten bestimmten Wert (e₁) aufweist, und an der Station (27) zum Formen des Rohlings (3) und an den aufeinander folgenden Stationen (28 bis 32) zur Bearbeitung der Flasche (6) einen zweiten bestimmten Wert (e₂) aufweist, der höher ist als der erste (e₁), und
- Mittel (86) zur Erhöhung des Abstands (e₁, e₂) zwischen den Rohlingen (3) einer jeden Gruppe (84) zwischen den aufeinander folgenden Stationen (20 bis 26) zur Bearbeitung des Rohlings (3), die der Station (27) zum Formen desselben vorgelagert sind, und der Station (27) zum Formen desselben vorgesehen sind.

36. Anlage nach einem der Ansprüche 20 bis 35, **dadurch gekennzeichnet, dass** sie geschlossen ist und Mittel (237, 238) aufweist, mit denen, während der Transporte und an den aufeinander folgenden Stationen (20 bis 32) zur Bearbeitung des Rohlings (3) oder der Flasche (6), mindestens um die Öffnung (46) des Rohlings (3) oder der Flasche (6) ein Gasüberdruck kontinuierlich aufrechterhalten wird.

37. Anlage nach einem der Ansprüche 20 bis 36, **dadurch gekennzeichnet, dass** sie einen Rahmen (16) aufweist, der den aufeinander folgenden Stationen (20 bis 32) zur Bearbeitung des Rohlings (3) oder der Flasche (6) und den Mitteln (1) zur Förderung des Rohlings (3) und der Flasche (6) gemeinsam ist.
